(19) Europäisches Patentamt
European Patent Office
Office européen des brevets

(11) EP 3 819 673 A1

(12) EUROPEAN PATENT APPLICATION
published in accordance with Art. 153(4) EPC

(43) Date of publication:
12.05.2021 Bulletin 2021/19

(51) Int Cl.:
G01S 19/40 (2010.01)

(21) Application number: 19930161.5

(22) Date of filing: 12.09.2019

(86) International application number:
PCT/CN2019/105810

(87) International publication number:
WO 2021/046829 (18.03.2021 Gazette 2021/11)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(71) Applicant: Huawei Technologies Co., Ltd.
Longgang District
Shenzhen, Guangdong province 518129 (CN)

(72) Inventors:
• SU, Bin
Shenzhen, Guangdong 518129 (CN)
• YUAN, Weiping
Shenzhen, Guangdong 518129 (CN)
• WU, Zuguang
Shenzhen, Guangdong 518129 (CN)

(74) Representative: Grünecker Patent- und
Rechtsanwälte
PartG mbB
Leopoldstraße 4
80802 München (DE)

(54) **POSITIONING METHOD, DEVICE AND SYSTEM**

(57) This application discloses a positioning method, a related apparatus, and a related device, which may be applied to vehicle self-driving in the artificial intelligence field, and specifically relates to a vehicle positioning method. The method includes: A positioning device corrects a low-precision first pose by using N first geometric features extracted from first point cloud data collected by a point cloud collection apparatus, to obtain a high-precision second pose. Compared with point cloud data in the prior art, in embodiments of this application, a geometric feature with a small data volume is used for positioning, to greatly reduce a data operation amount, so that time consumption of vehicle positioning is less, and real-time performance of positioning is good.

S72. Obtain first point cloud data collected by a vehicle by using a point cloud collection apparatus

S74. Extract N first geometric features from the first point cloud data, where N is a positive integer

S76. Adjust a first pose of the vehicle based on the N first geometric features to obtain a second pose of the vehicle, where precision of the second pose is higher than precision of the first pose

FIG. 7

**Description**

**TECHNICAL FIELD**

The present invention relates to the field of self-driving technologies in the artificial intelligence field, and in particular, to a positioning method, apparatus, and system.

**BACKGROUND**

Artificial intelligence (Artificial Intelligence, AI) is a theory, a method, a technology, or an application system that simulates, extends, and expands human intelligence by using a digital computer or a machine controlled by a digital computer, to sense an environment, obtain knowledge, and achieve an optimal result by using the knowledge. Self-driving is a mainstream application in the artificial intelligence field. A self-driving technology relies on collaboration among computer vision, a radar, a monitoring apparatus, a global positioning system, and the like, so that a motor vehicle can implement self-driving without an active human operation. A self-driving vehicle uses various computing systems to help transport a passenger from one position to another position. Some self-driving vehicles may require some initial input or continuous input from an operator (for example, a navigator, a driver, or a passenger). The self-driving vehicle allows the operator to switch from a manual operation mode to a self-driving mode or a mode between the manual operation mode and the self-driving mode. Because the self-driving technology does not require a human to drive the motor vehicle, a human driving failure can be effectively avoided in theory, a traffic accident can be reduced, and road transportation efficiency can be improved. Therefore, the self-driving technology is increasingly valued.

Precise positioning of a vehicle is a key technology for implementing self-driving. Currently, global high-precision positioning can be implemented for a vehicle based on a high-precision point cloud map. A specific method is as follows: the vehicle collects point cloud data by using a point cloud collection apparatus, and performs point cloud registration (point cloud registration) on the collected point cloud data and a point cloud map, to obtain a pose of the vehicle.

However, a size of point cloud data per kilometer is approximately 4 GB. If point cloud data is used for positioning, on the one hand, a large amount of point cloud data needs to be stored, transmitted, and loaded to a computer system of the vehicle; on the other hand, a registration algorithm that needs to be run for real-time positioning of the vehicle is an operation performed based on a large amount of point cloud data, and calculation is time-consuming. This can hardly meet a real-time performance requirement of the vehicle for positioning. Especially when the vehicle is in a high-speed moving scenario, a great challenge is posed to real-time performance of positioning.

**SUMMARY**

A technical problem to be solved in embodiments of the present invention is to provide a positioning method, apparatus, and system, and to solve technical problems of a large calculation amount and poor real-time performance of positioning in a vehicle positioning process.

According to a first aspect, embodiments of the present invention provides a positioning method, including: a positioning device obtains first point cloud data collected by a vehicle by using a point cloud collection apparatus; extracts N first geometry features from the first point cloud data, where N is a positive integer; and then adjusts a first pose of the vehicle based on the N first geometry features to obtain a second pose of the vehicle, where precision of the second pose is higher than precision of the first pose.

It should be understood that both the first pose and the second pose are poses obtained by positioning the vehicle, and the precision of the second pose is higher than the precision of the first pose. In other words, the first pose is a predicted pose of the vehicle, and the second pose is an actual pose of the vehicle.

It should be noted that the positioning device may be the vehicle mentioned before or an apparatus on the vehicle, or may be a terminal such as a mobile phone or a tablet computer, or may be a positioning chip or a positioning apparatus, or may be a server, a cloud, or the like. It should be understood that the terminal or the server may be communicatively connected to the vehicle, to obtain the first point cloud data observed by the vehicle.

The foregoing method provides a positioning method. A high-precision second pose can be obtained by correcting a low-precision first pose by using the N first geometric features extracted from the first point cloud data collected by the point cloud collection apparatus. Compared with point cloud data in the prior art, in the embodiments of this application, a geometric feature with a small data volume is used for positioning, to greatly reduce a data operation amount, so that time consumption of vehicle positioning is less, and real-time performance of positioning is good.

In a possible implementation of the embodiments of this application, an implementation in which the positioning device adjusts the first pose of the vehicle based on the N first geometric features to obtain the second pose of the vehicle may be as follows: the positioning device adjusts the first pose of the vehicle based on the N first geometric features and N second geometric features on a geometric feature map to obtain the second pose. The geometric feature map is a map formed by geometric features extracted from second point cloud data on a point cloud map. The N second geometric features are geometric features matching the N first geometric features.

In a possible implementation of the embodiments of this application, a first implementation in which the positioning device adjusts the first pose of the vehicle based on the first geometric features and the second geometric features on the geometric feature map to obtain the second pose may be as follows:

The positioning device determines a transformation relationship between geometric features based on the N first geometric features and the N second geometric features on the geometric feature map, and then adjusts the first pose of the vehicle based on the transformation relationship between geometric features to obtain the second pose.

In the foregoing method, the high-precision second pose can be obtained by correcting the low-precision first pose by using a transformation relationship between an observed first geometric feature and a second geometric feature on the geometric feature map. Compared with point cloud data in the prior art, in the embodiments of this application, a geometric feature with a small data volume is used for positioning, to greatly reduce a data operation amount, so that time consumption of vehicle positioning is less, and real-time performance of positioning is good.

In a possible implementation of this application, the positioning device determines a transformation relationship between geometric features based on the N first geometric features and the N second geometric features on the geometric feature map, which may include but is not limited to the following two implementations.

First implementation:

The positioning device transforms the N first geometric features by using a first transformation amount to obtain N third geometric features, where the third geometric features are in a one-to-one correspondence with the first geometric features; and then adjusts the first transformation amount based on a first error between the N third geometric features and the N second geometric features. In addition, when a quantity of iterations for the first transformation amount meets an iteration stop condition or the first error meets an iteration stop condition, the positioning device obtains a first target transformation amount. The first target transformation amount is a first transformation amount obtained when the iteration stop condition is met. The first target transformation amount is used to indicate a transformation relationship between the N first geometric features and the N second geometric features.

In the foregoing method, solving the transformation relationship between geometric features is converted into minimizing the first error between the N third geometric features and the N second geometric features. Then it is determined, through an iteration, that a first transformation amount obtained when the first error is smallest is the transformation relationship between the N first geometric features and the N second geometric features, so that the obtained transformation relationship is more accurate.

Optionally, the positioning device may determine the first error based on a first target function. The first target function may be as follows:

$$\varepsilon = \sum_{i=1}^{i=N} W_i \left\| \left( \mathbf{R}\mathbf{V}_i + \mathbf{t} \right) - \mathbf{U}_i \right\|^2$$

where $\varepsilon$ is the first error, the first transformation amount includes a rotation $\mathbf{R}$ and a translation $\mathbf{t}$, $W_i$ is a weight of the first geometric feature $V_i$, $U_i$ is a second geometric feature corresponding to the first geometric feature $V_i$, i is an index of the first geometric feature in the N first geometric features, i is a positive integer, and i $\leq$ N.

Second implementation:

The positioning device transforms the N second geometric features by using a second transformation amount to obtain N fourth geometric features, where the fourth geometric features are in a one-to-one correspondence with the second geometric features; and then adjusts the second transformation amount based on a second error between the N fourth geometric features and the N first geometric features. In addition, when a quantity of iterations of the second transformation amount meets an iteration stop condition or the second error meets an iteration stop condition, the positioning device obtains a second target transformation amount. The second target transformation amount is an inverse matrix of a second transformation amount obtained when the iteration stop condition is met. The second target transformation amount is used to indicate a transformation relationship between the N first geometric features and the N second geometric features.

In the foregoing method, solving the transformation relationship between geometric features is converted into minimizing the second error between the N fourth geometric features and the N first geometric features. Then it is determined, through an iteration, that a second transformation amount obtained when the second error is smallest is the transformation relationship between the N first geometric features and the N second geometric features, so that the obtained transformation relationship is more accurate.

Optionally, the positioning device may determine the second error based on a second target function. The second target function may be as follows:

$$\varepsilon = \sum_{i=1}^{i=N} w_i \left\| \left( \mathbf{R}' \mathbf{u}_i + \mathbf{t}' \right) - \mathbf{v}_i \right\|^2$$

where $\varepsilon$ is the second error, the second transformation amount includes a rotation $\mathbf{R'}$ and a translation $\mathbf{t'}$, $W_i$ is a weight of the first geometric feature $\mathbf{V}_i$, $\mathbf{v}_i$ is a vector in the first geometric feature $\mathbf{V}_i$, $\mathbf{u}_i$ is a vector in a second geometric feature $U_i$ corresponding to the first geometric feature $V_i$, N is a quantity of first geometric features, i is an index of the first geometric feature in the N first geometric features, i is a positive integer, and $i \leq N$.

Optionally, in the first target function or the second target function, the weight $W_i$ of the first geometric feature $V_i$ is negatively correlated with a distance between the vehicle and an object to which the first geometric feature $V_i$ belongs. In other words, a first geometric feature corresponding to an object closer to the vehicle has a greater contribution to the transformation relationship. An extracted first geometric feature that is closer to the vehicle has a smaller error, so that the positioning device can determine the transformation relationship more based on a high-accuracy first geometric feature, to improve precision of the transformation relationship and further improve precision of positioning.

In a possible implementation of the embodiments of this application, a second implementation in which the positioning device adjusts the first pose of the vehicle based on the first geometric features and the second geometric features on the geometric feature map to obtain the second pose may be as follows:

The positioning device estimates a pose of the vehicle based on the first pose to obtain a plurality of groups of estimated poses, and then determines scores of the plurality of groups of estimated poses based on the N first geometric features and the N second geometric features on the geometric feature map. Further, the positioning device determines the second pose of the vehicle based on the score of each of the plurality of groups of estimated poses. A score of a first group of estimated poses is used to indicate a degree of proximity between the first group of estimated poses and the second pose. The first group of estimated poses is any estimated pose in the plurality of groups of estimated poses.

It should be understood that the first pose, the estimated pose, and the second pose are all poses obtained by positioning the vehicle, and the precision of the second pose is higher than the precision of the first pose. In other words, the first pose is a predicted pose of the vehicle, and the second pose is an actual pose of the vehicle. The plurality of groups of estimated poses are poses distributed around the first pose, and an estimated pose with a score that meets a condition, for example, an estimated pose with a highest score is the second pose.

The foregoing method provides a vehicle positioning method. An estimated pose is scored by using an observed first geometric feature and a second geometric feature on the geometric feature map, and an estimated pose with a highest score is determined as an actual pose of the vehicle. Compared with point cloud data in the prior art, in the embodiments of this application, a geometric feature with a small data volume is used for positioning, to greatly reduce a data operation amount, so that time consumption of vehicle positioning is less, and real-time performance of positioning is good.

In a possible implementation of this application, the positioning device determines scores of the plurality of groups of estimated poses based on the N first geometric features and the N second geometric features on the geometric feature map, which may include but is not limited to the following three implementations.

Implementation A:

The positioning device determines an estimated value of a first parameter corresponding to each group of estimated poses based on each group of estimated poses and the N second geometric features, and determines an observed value of the first parameter based on the first pose and the N first geometric features. Then the positioning device determines the score of each group of estimated poses based on an error between the estimated value of the first parameter corresponding to each group of estimated poses and the observed value of the first parameter.

Optionally, the first parameter is at least one of a distance, an azimuth, and an elevation angle, the estimated value of the first parameter corresponding to each group of estimated poses is a first parameter for each of the N second geometric features relative to the vehicle in each group of estimated poses, and the observed value of the first parameter is a first parameter for each of the N first geometric features relative to the vehicle in the first pose.

In the foregoing method, a score of the estimated pose is converted into an error between an estimated value of a first parameter in the estimated pose and an actual observed value of the first parameter, so that an evaluation process of an estimated pose is simpler, and time consumption of positioning is further reduced.

Implementation B:

The positioning device respectively transforms, by using a transformation relationship between each group of estimated poses and the first pose, the N second geometric features to obtain N fifth geometric features corresponding to each group of estimated poses. The second geometric features are in a one-to-one correspondence with the fifth geometric features. Then the positioning device determines the score of each group of estimated poses based on errors between the N fifth geometric features corresponding to each group of estimated poses and the N first geometric features.

In the foregoing method, a score of an estimated pose is converted into an error between an estimated value of a first parameter in the estimated pose and an actual observed value, so that an evaluation process of an estimated pose is simpler, and time consumption of positioning is further reduced.

Implementation C:

The positioning device respectively transforms, by using a transformation relationship between each group of estimated poses and the first pose, the N first geometric features to obtain N sixth geometric features corresponding to each group of estimated poses. The first geometric features are in a one-to-one correspondence with the sixth geometric features. Then the positioning device determines the score of each group of estimated poses based on errors between the N sixth geometric features corresponding to each group of estimated poses and the N second geometric features.

In a possible implementation of this application, before adjusting the first pose of the vehicle based on the N first geometric features to obtain the second pose of the vehicle, the positioning device may further obtain the first pose of the vehicle. The positioning device obtains the first pose of the vehicle, which may include but is not limited to the following two implementations.

Implementation (1): The positioning device determines a predicted pose of the vehicle at a current moment based on a second pose at a previous moment. The predicted pose at the current moment is the first pose of the vehicle obtained by the positioning device. The previous moment is a moment earlier than the current moment. For example, the positioning device may enter an accurate pose of the vehicle at the previous moment (that is, the second pose at the previous moment) and a control parameter of the vehicle at the previous moment into a kinematics equation of the vehicle, to predict the first pose at the current moment.

In the foregoing method, estimation is performed based on the high-accuracy pose at the previous moment, and the estimated first pose at the current moment is closer to an actual pose of the vehicle, thereby reducing a quantity of iterations of an operation, and further improving calculation efficiency of the second pose of the vehicle and increasing a response speed for vehicle positioning.

Implementation (2): The positioning device determines a first position of the vehicle based on a positioning system, and determines a first attitude of the vehicle based on an inertial sensor. The first pose includes the first position and the first attitude.

In a possible implementation of the embodiments of this application, a third implementation in which the positioning device adjusts the first pose of the vehicle based on the first geometric features and the second geometric features on the geometric feature map to obtain the second pose may be as follows:

The positioning device determines a predicted pose of the vehicle at a current moment based on a second pose at a previous moment and a control parameter of the vehicle at the previous moment. The previous moment is a moment earlier than the current moment. Then the positioning device updates the predicted pose of the vehicle by using an error between an observed value of a second parameter and a predicted value of the second parameter, to obtain the second pose of the vehicle. The observed value of the second parameter is determined based on a first geometric feature observed by the vehicle in the first pose. The predicted value of the second parameter is determined based on the predicted pose and a second geometric feature on the geometric feature map.

It should be understood that the first pose may be the predicted pose at the current moment, or may be a pose that is of the vehicle at the current moment and that is obtained through positioning by using another method. For example, the positioning device determines a first position of the vehicle based on a positioning system, and determines a first attitude of the vehicle based on an inertial sensor, where the first pose includes the first position and the first attitude.

It should be further understood that the first pose, the predicted pose at the current moment, and the second pose at the current moment are all poses obtained by positioning the vehicle at the current moment. Precision of the second pose is higher than precision of the predicted pose, and is also higher than precision of the first pose. In other words, the first pose and the predicted pose at the current moment are poses obtained by predicting the vehicle at the current moment, and the second pose is an actual pose of the vehicle at the current moment.

In the foregoing method, the predicted pose at the current moment is updated by using the error between the observed value that is of the second parameter and that is determined based on the observed first geometric feature and the predicted value that is of the second parameter and that is determined based on the second geometric feature on the geometric feature map, to obtain the actual pose of the vehicle. Compared with point cloud data in the prior art, in the embodiments of this application, a geometric feature with a small data volume is used for positioning, to greatly reduce a data operation amount, so that time consumption of vehicle positioning is less, and real-time performance of positioning is good.

In a possible implementation of this application, an implementation in which the positioning device determines the error between the observed value of the second parameter and the predicted value of the second parameter based on the first pose, the predicted pose, the N first geometric features, and the N second geometric features may be as follows: The positioning device determines the predicted value of the second parameter based on the predicted pose and the N second geometric features, determines the observed value of the second parameter based on the first pose and the N first geometric features, and then determines the error between the observed value of the second parameter and the predicted value of the second parameter based on the observed value of the second parameter and the predicted value of the second parameter.

In the foregoing method, a Kalman filter method is used to determine the second pose, so that a quantity of updates is small, an operation process is simplified, and positioning is fast.

Optionally, the second parameter is at least one of a distance, an azimuth, and an elevation, the predicted value of the second parameter is a second parameter for each of the N second geometric features relative to the vehicle in the predicted pose, and the observed value of the second parameter is a second parameter for each of the N first geometric features relative to the vehicle in the first pose.

In the foregoing method, the error between the predicted value of the second parameter in the predicted pose and the actual observed value of the second parameter is used to measure an error between the predicted pose and the actual pose of the vehicle, and the predicted pose is updated to minimize the error between the predicted value of the second parameter and the actual observed value of the second parameter, to obtain the actual pose of the vehicle, namely, the second pose. The foregoing further reduces time consumption of positioning.

It should be noted that the positioning device may be the vehicle or an apparatus on the vehicle, or may be a terminal such as a mobile phone or a tablet computer, or may be a positioning apparatus or a positioning chip, or may be a server, a cloud, or the like. The terminal or the server may be communicatively connected to the vehicle, to obtain a first geometric feature observed by the vehicle.

In a possible implementation of the embodiments of this application, the first point cloud data is information for a point on a surface of an object, that is observed by the vehicle and that is represented in a space determined based on the first pose, and each of the N first geometric features is used to indicate a geometric feature of an object observed by the vehicle in the space determined based on the first pose.

In the foregoing method, the positioning device extracts geometric features of an object, that is, the N first geometric features, from point cloud data with a large data volume, and performs registration and positioning by using a geometric feature with a small data volume, thereby greatly reducing a data operation amount, and increasing a response speed for positioning.

In a possible implementation of this application, the method further includes: the positioning device searches the geometric feature map for N second geometric features matching the N first geometric features.

In a possible implementation of this application, an implementation in which the positioning device searches the geometric feature map for N second geometric features matching the N first geometric features may be as follows: The positioning device searches a first region of the geometric feature map for the N second geometric features matching the N first geometric features. The first region is a region determined based on the first pose. The first region is not smaller than a scanning range of the point cloud collection apparatus of the vehicle.

In this implementation, the positioning device determines the first region based on the first pose, to narrow a search range and improve calculation efficiency.

Optionally, the searching, by the positioning device, a first region of the geometric feature map for the N second geometric features matching the N first geometric features may include but is not limited to the following two implementations.

Implementation 1: The positioning device determines, for a first geometric feature $V_i$, a deviation between the first geometric feature $V_i$ and each geometric feature in the first region, and then uses, as a second geometric feature $U_i$ matching the first geometric feature $V_i$, one of the geometric features in the first region and that has a smallest deviation from the first geometric feature $V_i$, where i = 1,2, ..., N.

In the foregoing method, matching is performed by calculating a deviation between two geometric features, to improve matching accuracy.

Implementation 2: The positioning device selects, for a first geometric feature $V_i$, one of the geometric features in the first region that matches an attribute of the first geometric feature $V_i$, and then uses the geometric feature matching the attribute as a second geometric feature $U_i$ matching the first geometric feature $V_i$, where i = 1, 2, ..., N.

In the foregoing method, matching is performed by using the attribute. This is simpler and improves matching efficiency.

It should be understood that, when there are a plurality of geometric features matching the attribute of the first

geometric feature $V_i$, the positioning device may determine, according to the method in the implementation 1, that a second geometric feature $U_i$ matching the first geometric feature $V_i$ is one of the plurality of geometric features matching the attribute of the first geometric feature $V_i$ that has a smallest deviation from the first geometric feature $V_i$.

In the foregoing implementation 1 and implementation 2, in a process of performing matching between geometric features, either a vector or position coordinates in the first geometric feature may be considered, or both the vector and the position coordinates in the first geometric feature may be considered. This is not limited herein.

In a possible implementation of this application, an implementation in which the positioning device extracts N first geometric features from the first point cloud data may be as follows: The positioning device identifies N objects in the first point cloud data. Then the positioning device determines a first geometric feature of each of the N objects based on point cloud data of each of the N objects.

Optionally, a first object is any one of a plurality of objects. The determining a first geometric feature of each of the N objects based on point cloud data of each object is described by using an example in which a first geometric feature of the first object is determined based on point cloud data of the first object.

If a geometric shape of the first object is a straight line, straight line fitting is performed on the point cloud data of the first object to obtain a first geometric feature of the first object. The first geometric feature of the first object is a geometric feature that is of the straight line and that is obtained through fitting.

If a geometric shape of the first object is a curve, curve fitting is performed on the point cloud data of the first object to obtain the first geometric feature of the first object. The first geometric feature of the first object is a geometric feature that is of the curve and that is obtained through fitting.

If a geometric shape of the first object is a plane, plane fitting is performed on the point cloud data of the first object to obtain the first geometric feature of the first object. The first geometric feature of the first object is a geometric feature that is of the plane and that is obtained through fitting.

If a geometric shape of the first object is a curved surface, curved surface fitting is performed on the point cloud data of the first object to obtain the first geometric feature of the first object. The first geometric feature of the first object is a geometric feature that is of the curved surface and that is obtained through fitting.

The foregoing method provides a method for extracting a first geometric feature from point cloud data. First, a geometric shape of an object is identified. Then fitting is performed by using a fitting method corresponding to the identified geometric shape, and a geometric feature that is of a straight line, a curve, a plane, or a curved surface and that is obtained through fitting is used as a first geometric feature of the object. This can improve accuracy of the extracted first geometric feature.

According to a second aspect, embodiments of this application further provides a geometric feature extraction method, including: An execution device obtains to-be-processed point cloud data, and extracts at least one geometric feature from the to-be-processed point cloud data. The at least one geometric feature is used for vehicle positioning.

In an implementation of the embodiments of this application, the execution device may be a geometric feature map generation device, and the to-be-processed point cloud data may be second point cloud data on a point cloud map. In this case, a geometric feature extracted from the second point cloud data forms a geometric feature map, and the geometric feature map is used to position the vehicle by using a geometric feature.

In an implementation of the embodiments of this application, the execution device may be a positioning device, and the to-be-processed point cloud data may be first point cloud data collected by the vehicle by using a point cloud collection apparatus. In this case, N first geometric features extracted from the first point cloud data are used to adjust a first pose of the vehicle to obtain a second pose of the vehicle.

In an implementation of the embodiments of this application, an implementation in which the execution device extracts the at least one geometric feature from the to-be-processed point cloud data may be as follows:

The execution device identifies at least one object in the to-be-processed cloud data. Then the positioning device determines a geometric feature of each of the at least one object based on point cloud data of each object.

Optionally, a second object is any one of the at least one object. The determining a geometric feature of each of the at least one object based on point cloud data of each object is described by using an example in which a geometric feature of the second object is determined based on point cloud data of the second object. A method for determining the geometric feature of the second object based on the point cloud data of the second object may be as follows:

If a geometric shape of the second object is a straight line, the execution device performs straight line fitting on the point cloud data of the second object to obtain the geometric feature of the second object. The geometric feature of the second object is a geometric feature that is of the straight line and that is obtained through fitting.

If a geometric shape of the second object is a curve, the execution device performs curve fitting on the point cloud data of the second object to obtain the geometric feature of the second object. The geometric feature of the second object is a geometric feature that is of the curve and that is obtained through fitting.

If a geometric shape of the second object is a plane, the execution device performs plane fitting on the point cloud data of the second object to obtain the geometric feature of the second object. The geometric feature of the second object is a geometric feature that is of the plane and that is obtained through fitting.

If a geometric shape of the second object is a curved surface, the execution device performs curved surface fitting on the point cloud data of the second object to obtain the geometric feature of the second object. The geometric feature of the second object is a geometric feature that is of the curved surface and that is obtained through fitting.

According to a third aspect, embodiments of this application further provides a positioning apparatus, including:

a first obtaining unit, configured to obtain first point cloud data collected by a vehicle by using a point cloud collection apparatus;

a feature extraction unit, configured to extract N first geometric features from the first point cloud data, where N is a positive integer; and

an adjusting unit, configured to adjust a first pose of the vehicle based on the N first geometric features to obtain a second pose of the vehicle, where precision of the second pose is higher than precision of the first pose.

In a possible implementation of this application, the apparatus further includes:
a second obtaining unit, configured to obtain the first pose of the vehicle before the adjusting unit adjusts the first pose of the vehicle based on the N first geometric features to obtain the second pose of the vehicle.

In a possible implementation of this application, the apparatus further includes:
a matching unit, configured to search the geometric feature map for N second geometric features matching the N first geometric features.

It should be noted that the positioning apparatus in the third aspect further includes other units configured to implement the positioning method in the first aspect. For specific implementations of the units or the other units of the positioning apparatus, refer to related descriptions in the first aspect. Details are not described herein again.

According to a fourth aspect, embodiments of this application further provides a positioning apparatus, including a processor and a memory. The memory is configured to store a program, and the processor executes the program stored in the memory. When the program stored in the memory is executed, the method in any one of the first aspect or the implementations of the first aspect can be implemented.

The positioning apparatus further includes other devices or modules configured to implement the positioning method in the first aspect. For specific implementations of the devices or the other devices of the positioning apparatus, refer to related descriptions in the first aspect. Details are not described herein again.

According to a fifth aspect, embodiments of this application further provides a geometric feature extraction apparatus, including:

an obtaining unit, configured to obtain to-be-processed point cloud data; and

an extraction unit, configured to extract at least one geometric feature from the to-be-processed point cloud data, where the at least one geometric feature is used to position a vehicle.

In an implementation of the embodiments of this application, the geometric feature extraction apparatus may be a geometric feature map generation device, and the to-be-processed point cloud data may be second point cloud data on a point cloud map. In this case, a geometric feature extracted from the second point cloud data forms a geometric feature map, and the geometric feature map is used to position the vehicle by using a geometric feature.

In an implementation of the embodiments of this application, the geometric feature extraction apparatus may be a positioning device, and the to-be-processed point cloud data may be first point cloud data collected by the vehicle by using a point cloud collection apparatus. In this case, N first geometric features extracted from the first point cloud data are used to adjust a first pose of the vehicle to obtain a second pose of the vehicle.

It should be noted that the geometric feature extraction apparatus in the fifth aspect further includes other units configured to implement the geometric feature extraction method in the second aspect. For specific implementations of the units or the other units of the positioning apparatus, refer to related descriptions in the second aspect. Details are not described herein again.

According to a sixth aspect, embodiments of this application further provides a geometric feature extraction apparatus, including a processor and a memory. The memory is configured to store a program, and the processor executes the program stored in the memory. When the program stored in the memory is executed, the method in any one of the second aspect or the implementations of the second aspect can be implemented.

The positioning apparatus further includes other devices or modules configured to implement the geometric feature extraction method in the second aspect. For specific implementations of the devices or the other devices of the positioning apparatus, refer to related descriptions in the second aspect. Details are not described herein again.

According to a seventh aspect, embodiments of this application further provides a vehicle, including a point cloud collection apparatus, a processor, and a memory. The processor is connected to the point cloud collection apparatus by using a bus. The point cloud collection apparatus is configured to collect point cloud data. The memory is configured to store a program, and the processor executes the program stored in the memory. When the program stored in the memory is executed, the method in any one of the first aspect or the implementations of the first aspect can be implemented.

According to an eighth aspect, embodiments of this application further provides a vehicle, including a point cloud collection apparatus, a processor, and a memory. The processor is connected to the point cloud collection apparatus by using a bus. The point cloud collection apparatus is configured to collect point cloud data. The memory is configured to store a program, and the processor executes the program stored in the memory. When the program stored in the memory is executed, the method in any one of the second aspect or the implementations of the second aspect can be implemented.

According to a ninth aspect, embodiments of this application further provides a computer-readable storage medium. The computer storage medium stores a computer program. The computer program includes a program instruction. When the program instruction is executed by a processor, the method in the first aspect can be implemented.

According to a tenth aspect, embodiments of this application further provides a computer-readable storage medium. The computer storage medium stores a computer program. The computer program includes a program instruction. When the program instruction is executed by a processor, the method in the second aspect can be implemented.

According to an eleventh aspect, embodiments of this application further provides a computer program product including an instruction. When the computer program product runs on a computer, the computer is enabled to perform the method in the first aspect.

According to a twelfth aspect, embodiments of this application further provides a computer program product including an instruction. When the computer program product runs on a computer, the computer is enabled to perform the method in the second aspect.

According to a thirteenth aspect, a positioning chip is provided. The chip includes a processor and a data interface. The processor reads, by using the data interface, an instruction stored in a memory, to perform the method in the first aspect.

Optionally, in an implementation, the chip may further include a memory. The memory stores an instruction, and the processor is configured to execute the instruction stored in the memory. When the instruction is executed, the processor is configured to perform the method in the first aspect.

According to a fourteenth aspect, a chip is provided. The chip includes a processor and a data interface. The processor reads, by using the data interface, an instruction stored in a memory, to perform the method in the second aspect.

Optionally, in an implementation, the chip may further include a memory. The memory stores an instruction, and the processor is configured to execute the instruction stored in the memory. When the instruction is executed, the processor is configured to perform the method in the second aspect.

According to a fifteenth aspect, an electronic device is provided. The electronic device includes the positioning apparatus in either the third aspect or the fourth aspect.

According to a sixteenth aspect, an electronic device is provided. The electronic device includes the positioning apparatus in either the fifth aspect or the sixth aspect.

According to a seventeenth aspect, a positioning method is provided. The method may include: A positioning device receives N first geometric features. Then the positioning device adjusts a first pose of a vehicle based on the N first geometric features to obtain a second pose of the vehicle. The N first geometric features are extracted from first point cloud data. The first point cloud data is point cloud data collected by the vehicle by using a point cloud collection apparatus. Precision of the second pose is higher than precision of the first pose.

Optionally, for a specific implementation in which the positioning device adjusts the first pose of the vehicle based on the N first geometric features to obtain the second pose of the vehicle, refer to related descriptions in the first aspect. Details are not described herein again.

Optionally, a manner in which the positioning device obtains the N first geometric features may be as follows: The positioning device receives the N first geometric features sent by a terminal or the vehicle. The N first geometric features are extracted by the terminal or the vehicle from the first point cloud data collected by the vehicle by using the point cloud collection apparatus.

It should be noted that, for a specific implementation in which the terminal or the vehicle extracts the N first geometric features from the first point cloud data collected by the vehicle by using the point cloud collection apparatus, reference may be made to the specific implementation in which the positioning device extracts the N first geometric features from the first point cloud data in the first aspect. Details are not described herein again.

It should be noted that, for a specific implementation in which the positioning device adjusts the first pose of the vehicle based on the N first geometric features to obtain the second pose of the vehicle, reference may be made to related descriptions in the first aspect. Details are not described herein again.

According to an eighteenth aspect, embodiments of this application further provides a positioning apparatus, including:

a receiving unit, configured to receive N first geometric features, where the N first geometric features are extracted from first point cloud data, and the first point cloud data is point cloud data collected by a vehicle by using a point cloud collection apparatus; and

an adjusting unit, configured to adjust a first pose of the vehicle based on the N first geometric features to obtain a second pose of the vehicle, where precision of the second pose is higher than precision of the first pose.

In a possible implementation of this application, the apparatus further includes:
an obtaining unit, configured to obtain the first pose of the vehicle before the adjusting unit adjusts the first pose of the vehicle based on the N first geometric features to obtain the second pose of the vehicle.

In a possible implementation of this application, the apparatus further includes:
a matching unit, configured to search the geometric feature map for N second geometric features matching the N first geometric features.

It should be noted that the positioning apparatus in the eighteenth aspect further includes other units configured to implement the positioning method in the seventeenth aspect. For specific implementations of the units or the other units of the positioning apparatus, refer to related descriptions in the seventeenth aspect. Details are not described herein again.

According to a nineteenth aspect, embodiments of this application further provides a positioning apparatus, including a processor and a memory. The memory is configured to store a program, and the processor executes the program stored in the memory. When the program stored in the memory is executed, the method in any one of the seventeenth aspect or the implementations of the seventeenth aspect can be implemented.

The positioning apparatus further includes other devices or modules configured to implement the positioning method in the seventeenth aspect. For specific implementations of the devices or the other devices of the positioning apparatus, refer to related descriptions in the seventeenth aspect. Details are not described herein again.

According to a twentieth aspect, embodiments of this application further provides a computer-readable storage medium. The computer storage medium stores a computer program. The computer program includes a program instruction. When the program instruction is executed by a processor, the method in the seventeenth aspect can be implemented.

According to a twenty-first aspect, embodiments of this application further provides a computer program product including an instruction. When the computer program product runs on a computer, the computer is enabled to perform the method in the seventeenth aspect.

According to a twenty-second aspect, a positioning chip is provided. The chip includes a processor and a data interface. The processor reads, by using the data interface, an instruction stored in a memory, to perform the method in the seventeenth aspect.

Optionally, in an implementation, the chip may further include a memory. The memory stores an instruction, and the processor is configured to execute the instruction stored in the memory. When the instruction is executed, the processor is configured to perform the method in the seventeenth aspect.

According to a twenty-third aspect, an electronic device is provided. The electronic device includes the positioning apparatus in either the eighteenth aspect or the nineteenth aspect.

According to a twenty-fourth aspect, a positioning method is provided. The method may include: A vehicle collects first point cloud data by using a point cloud collection apparatus. Then the vehicle extracts N first geometric features from the first point cloud data to obtain the N first geometric features. Further, the vehicle sends the N first geometric features to a positioning device, so that after receiving the N first geometric features, the positioning device adjusts a first pose of the vehicle based on the N first geometric features to obtain a second pose of the vehicle. Precision of the second pose is higher than precision of the first pose.

It should be noted that, for a specific implementation in which the positioning device adjusts the first pose of the vehicle based on the N first geometric features to obtain the second pose of the vehicle, reference may be made to related descriptions in the first aspect. Details are not described herein again.

It should be noted that, for an implementation in which the vehicle extracts the N first geometric features from the first point cloud data, reference may be made to the specific implementation in which the positioning device extracts the N first geometric features from the first point cloud data in the first aspect. Details are not described herein again.

According to a twenty-fifth aspect, embodiments of this application further provides a positioning apparatus, including:

a collection unit, configured to collect first point cloud data by using a point cloud collection apparatus;

an extraction unit, configured to extract N first geometric features from the first point cloud data to obtain the N first geometric features; and

a sending unit, configured to send the N first geometric features to a positioning device, so that after receiving the N first geometric features, the positioning device adjusts a first pose of the vehicle based on the N first geometric features to obtain a second pose of the vehicle, where precision of the second pose is higher than precision of the first pose.

In a possible implementation of this application, the apparatus further includes:
an obtaining unit, configured to obtain the first pose of the vehicle before the adjusting unit adjusts the first pose of the vehicle based on the N first geometric features to obtain the second pose of the vehicle.
In a possible implementation of this application, the apparatus further includes:
a matching unit, configured to search the geometric feature map for N second geometric features matching the N first geometric features.
It should be noted that the positioning apparatus in the twenty-fifth aspect further includes other units configured to implement the positioning method in the twenty-fourth aspect. For specific implementations of the units or the other units of the positioning apparatus, refer to related descriptions in the twenty-fourth aspect. Details are not described herein again.
According to a twenty-sixth aspect, embodiments of this application further provides a positioning apparatus, including a processor, a memory, and a communications interface. The memory is configured to store a program, and the processor executes the program stored in the memory. When the program stored in the memory is executed, the method in any one of the twenty-fourth aspect or the implementations of the twenty-fourth aspect can be implemented.
The positioning apparatus further includes other devices or modules configured to implement the positioning method in the twenty-fourth aspect. For specific implementations of the devices or the other devices of the positioning apparatus, refer to related descriptions in the twenty-fourth aspect. Details are not described herein again.
According to a twenty-seventh aspect, embodiments of this application further provides a computer-readable storage medium. The computer storage medium stores a computer program. The computer program includes a program instruction. When the program instruction is executed by a processor, the method in the twenty-fourth aspect can be implemented.
According to a twenty-eighth aspect, embodiments of this application further provides a computer program product including an instruction. When the computer program product runs on a computer, the computer is enabled to perform the method in the twenty-fourth aspect.
According to a twenty-ninth aspect, a chip is provided. The chip includes a processor and a data interface. The processor reads, by using the data interface, an instruction stored in a memory, to perform the method in the twenty-fourth aspect.
Optionally, in an implementation, the chip may further include a memory. The memory stores an instruction, and the processor is configured to execute the instruction stored in the memory. When the instruction is executed, the processor is configured to perform the method in the twenty-fourth aspect.
According to a thirtieth aspect, an electronic device is provided. The electronic device includes the positioning apparatus in either the twenty-fifth aspect or the twenty-sixth aspect.
According to a thirty-first aspect, embodiments of this application further provides a vehicle, including a point cloud collection apparatus, a processor, and a memory. The processor is connected to the point cloud collection apparatus by using a bus. The point cloud collection apparatus is configured to collect point cloud data. The memory is configured to store a program, and the processor executes the program stored in the memory. When the program stored in the memory is executed, the method in any one of the twenty-fourth aspect or the implementations of the twenty-fourth aspect can be implemented.

## BRIEF DESCRIPTION OF DRAWINGS

To describe technical solutions in embodiments of the present invention or in the background more clearly, the following briefly describes the accompanying drawings for describing the embodiments of the present invention or the background.

FIG. 1A is a schematic illustrative diagram of a road scenario according to an embodiment of the present invention;
FIG. 1B is a schematic illustrative diagram of a geometric feature corresponding to FIG. 1A according to an embodiment of the present invention;
FIG. 2 is a schematic framework diagram of a system according to an embodiment of the present invention;
FIG. 3 is a functional block diagram of a vehicle according to an embodiment of the present invention;
FIG. 4A is a schematic flowchart of a geometric feature extraction method according to an embodiment of the present invention;
FIG. 4B is a schematic principle diagram of extracting geometric features of a pavement and a curb according to an embodiment of the present invention;
FIG. 4C is another schematic principle diagram of extracting geometric features of a pavement and a curb according to an embodiment of the present invention;

FIG. 4D is a schematic principle diagram of extracting a geometric feature of a road index line according to an embodiment of the present invention;

FIG. 4E is a schematic distribution diagram of point cloud data of a tree according to an embodiment of the present invention;

FIG. 4F is a schematic illustrative diagram of a geometric feature of a billboard according to an embodiment of the present invention;

FIG. 4G is a schematic illustrative diagram of a geometric feature of a street lamp pole according to an embodiment of the present invention;

FIG. 4H is a schematic illustrative diagram of a distance and an angle of a point on a signpost according to an embodiment of the present invention;

FIG. 4I is a schematic distribution diagram of point cloud data of a building according to an embodiment of the present invention;

FIG. 5 is a schematic flowchart of a geometric map generation method according to an embodiment of the present invention;

FIG. 6 is a schematic diagram of a positioning principle according to an embodiment of the present invention;

FIG. 7 is a schematic flowchart of a positioning method according to an embodiment of this application;

FIG. 8A is a schematic illustrative diagram of a first region according to an embodiment of this application;

FIG. 8B is a schematic illustrative diagram of another first region according to an embodiment of this application;

FIG. 8C is a schematic illustrative diagram of still another first region according to an embodiment of this application;

FIG. 9A is a schematic flowchart of another positioning method according to an embodiment of this application;

FIG. 9B is a schematic flowchart of a first positioning manner according to an embodiment of this application;

FIG. 9C is a schematic flowchart of a second positioning manner according to an embodiment of this application;

FIG. 10A is a schematic flowchart of still another positioning method according to an embodiment of this application;

FIG. 10B is a schematic flowchart of a third positioning manner according to an embodiment of this application;

FIG. 10C is a schematic illustrative diagram of a third positioning manner according to an embodiment of this application;

FIG. 10D is a schematic illustrative diagram of an elevation and an azimuth of a vector according to an embodiment of this application;

FIG. 11A is a schematic flowchart of still another positioning method according to an embodiment of this application;

FIG. 11B is a schematic flowchart of a fourth positioning manner according to an embodiment of this application;

FIG. 11C is a schematic flowchart of a fifth positioning manner according to an embodiment of this application;

FIG. 11D is a schematic flowchart of a fifth positioning manner according to an embodiment of this application;

FIG. 12 is a schematic structural diagram of a positioning apparatus according to an embodiment of this application;

FIG. 13 is a schematic diagram of a hardware structure of a positioning apparatus according to an embodiment of this application;

FIG. 14 is a schematic structural diagram of a geometric feature extraction apparatus according to an embodiment of this application; and

FIG. 15 is a schematic diagram of a hardware structure of another geometric feature extraction apparatus according to an embodiment of this application.

## DESCRIPTION OF EMBODIMENTS

Before specific implementations of this application are described, acronyms and abbreviations, comparisons in Chinese and English, and definitions of key terms used in the specific implementations of this application are first described.

(1) Point cloud data

Point cloud data (also referred to as a "point cloud" in this application) is essentially a set of points in a three-dimensional space, is usually represented by three-dimensional coordinates in the space, and is information for a point and that is obtained by converting information about a surface of an article. In addition to a position coordinate, data of a point may further include an RGB color, a gray value, a depth, intensity information, a segmentation result, and the like. The intensity information is intensity of an echo received by a laser radar. The intensity information is related to a surface material, roughness, and an incident angle of a target, energy and a wavelength of a wave emitted by the laser radar, and the like. The segmentation result may be an identifier or an attribute of an article in which the point is located, a position or a region in which the point is located and that is on the article in which the point is located, or the like.

For example, $P_i = \{x_i, y_i, z_i, R_i, G_i, B_i, Q_i, \cdots \cdots\}$ represents a point in space, where $(x_i, y_i, z_i)$ are spatial coordinates of the point $P_i$ in a coordinate system OXYZ, OX, OY, and OZ are mutually perpendicular coordinate axes, $(R_i, G_i, B_i)$

are brightnesses of red (R), green (G), and blue (B) colors at the point $P_i$ respectively, and $Q_i$ is a reflection strength or a reflectivity for a laser at the point $P_i$. In this case, C = {$P_1$, $P_2$, $P_3$, $\cdots$ , $P_n$} represents a group of point cloud data.

Usually, the point cloud data is collected by a point cloud collection apparatus such as the laser radar (laser radar), a stereo camera (stereo camera), or a time of flight (time of flight, TOF) camera. After the laser radar completes a scan, a frame of point cloud data can be obtained.

(2) Point cloud map

A vehicle equipped with a point cloud collection apparatus such as a laser radar sensor or a dual-camera may collect point cloud data of each road, and then use a mapping method, for example, a simultaneous localization and mapping (simultaneous localization and mapping, SLAM) algorithm, to accumulate point cloud data frame by frame to construct a point cloud map. It should be understood that the point cloud map is usually point cloud data in a world coordinate system (English: world coordinate system, also referred to as a global coordinate system).

(3) Point cloud registration

Point cloud registration is a process of unifying two groups of point cloud data that come from different coordinate systems (also referred to as point set space) into a specified coordinate system through rigid transformations such as a rotation and a translation. That is, two point clouds that undergo registration may completely coincide with each other after transformations such as a rotation and a translation. Therefore, the point cloud registration is to find a coordinate transformation relationship between the two point clouds.

For a vehicle with inaccurate positioning, point cloud data collected by a point cloud collection apparatus of the vehicle is point cloud data in a coordinate system determined based on a current inaccurate position (also referred to as a "predicted position" in this application) and inaccurate attitude (also referred to as a "predicted attitude" in this application). An accurate position (also referred to as an "actual position" in this application) and an accurate attitude (also referred to as an "actual attitude" in this application) of the vehicle may be obtained by using a transformation relationship between the coordinate system and a coordinate system used for point cloud data on a point cloud map (that is, a world coordinate system). The actual position is a position of the vehicle in the world coordinate system, and the actual attitude is an accurate attitude of the vehicle. It should be understood that, in this application, a "pose" includes a "position " and an "attitude", and likewise, a predicted pose includes a predicted position and a predicted attitude, and an actual pose includes an actual position and an actual attitude.

First, point cloud data matching point cloud data collected by a vehicle may be found on a point cloud map. Then, based on the point cloud data collected by the vehicle and the point cloud data that matches the point cloud data collected by the vehicle and that is on the point cloud map, a coordinate transformation relationship between the two groups of point cloud data may be calculated by using a matching algorithm. Further, a predicted pose $S_{predict}$ is transformed by using the calculated transformation relationship T to obtain an actual position $S_{real}$ of the vehicle.

This may be expressed by using a mathematical relationship: $S_{real} = TS_{predict}$, where $T = \begin{bmatrix} R & t \\ 0 & 1 \end{bmatrix}$, indicating that there are transformations of a rotation R and a translation t between two point clouds.

(4) Pose

A pose includes a position and an attitude of a vehicle in a coordinate system. The position refers to position coordinates of the vehicle in the coordinate system. The attitude refers to rotation angles of the vehicle around an x-axis, a y-axis, and a z-axis in the coordinate system, where the rotation angles are a pitch, a yaw, and a roll respectively. There are a total of six degrees of freedom (degree of freedom, DoF).

A vehicle usually runs on a ground road, and z-axis (that is, a coordinate axis perpendicular to a ground plane) coordinates usually do not need to be freely transformed. Therefore, a pose may be alternatively expressed by using three DoF: x-axis coordinates, y-axis coordinates, and a yaw. Therefore, dimensions of point cloud data can be reduced, and a data volume of the point cloud data can be reduced. It should be understood that the foregoing pose expression manner is merely an example for description, and the pose in this application may be alternatively represented by using four DoF (that is, x-axis coordinates, y-axis coordinates, z-axis coordinates, and a yaw) or another quantity of degrees of freedom. This is not limited in this application.

(5) Geometric feature

Currently, a size of point cloud data per kilometer is approximately at a GB level or more than 10 GB. If point cloud data is used for positioning, on the one hand, a large amount of point cloud data needs to be stored, transmitted, and loaded to a computer system of a vehicle; on the other hand, a registration algorithm that needs to be run for real-time positioning of the vehicle is an operation performed based on a large amount of point cloud data, and calculation is time-consuming. This can hardly meet a real-time performance requirement. Especially when the vehicle is in a high-speed moving scenario, a great challenge is posed to real-time performance of an algorithm.

However, in a positioning method proposed in this application, registration is not performed based on point cloud data, but is performed based on a geometric feature extracted from the point cloud data.

A geometric feature is extracted from point cloud data, and the point cloud data describes information about a sampling point on a surface of an article in an environment. In the embodiments of this application, geometric shapes of articles in an environment mainly include a line and a surface. The surface may include a plane and a curved surface, and the line may include a straight line and a curve. An article may include but is not limited to a plurality of geometric features, and an object described by a geometric feature may be a part that is of the article and whose geometric shape is a line or a surface. A geometric feature of an object whose geometric shape is a plane may include a normal vector of the plane, a position of the plane, and the like. A geometric feature of a curved surface may include at least one of a plurality of normal vectors, a plurality of principal directions, a plurality of coordinate points on the curved surface, a polynomial curved surface coefficient, and the like. A geometric feature of a straight line may include a direction vector and a position of the straight line. A geometric feature of a curve may include at least one of a plurality of tangent vectors, a plurality of normal vectors, a plurality of coordinate points, a polynomial curve coefficient, and the like of the curve.

Each vector in the foregoing geometric feature is a direction vector and/or a position of an object described by the geometric feature. The direction vector may be represented by a vector, and the vector may be a unit vector. For example, a geometric feature of a pavement, that is, a normal vector of a plane on which the pavement is located, may be represented as (0, 0, 1). It should be noted that (0, 0, 1) is merely an example for description. For another example, a direction vector of a curb is (0.8, 0.6, 0). The position in the foregoing geometric feature is a position of an object described by the geometric feature, and may be represented by coordinates.

In the embodiments of this application, an object may be first identified, and then straight line, curve, plane, or curved surface fitting is performed on point cloud data of the object, to obtain a geometric feature of the determined object. It should be understood that, in the embodiments of this application, geometric features of some articles in an environment may be obtained instead of obtaining geometric features of all articles in the environment. For example, a geometric feature is extracted from a fixed article in the environment or a part of the article. In the embodiments of this application, an article or a part of an article (also referred to as an object in the embodiments of this application) from which a geometric feature needs to be obtained may be a curb, a pavement, a traffic index line (traffic index line), a traffic pole, a traffic signpost, a lane line, a tree trunk, a tunnel, a building, or the like. It should be understood that, in the embodiments of this application, an article may be referred to as an object, or a part of an article may be referred to as an object. One object corresponds to one geometric feature.

For example, the traffic pole may include a horizontal bar and a vertical bar, where the horizontal bar may correspond to a geometric feature of a straight line, and the vertical bar may correspond to a geometric feature of a straight line.

For another example, a cuboid-shaped building may include an upper edge, a lower edge, a left edge, a right edge, a main plane, and a side surface, where the upper edge, the lower edge, the left edge, and the right edge each may correspond to a geometric feature of a straight line, and the main plane and the side surface each may correspond to a geometric feature of a plane.

For another example, the tree trunk may correspond to a geometric feature of a straight line.

It should be understood that, in addition to extracting a geometric feature from point cloud data, an attribute of an object in the point cloud data may be further identified, for example, a category to which the object belongs or a size. The attribute helps more precisely perform matching between geometric features. The matching between geometric features is described in another part, and details are not described herein again.

Categories of objects may be classified based on categories of articles to which the objects belong, and include a curb, a pavement, a road index line, a traffic pole, a traffic signpost, a lane line, a tree trunk, a building, and the like. In an implementation of this application, the foregoing categories may be further classified. For example, the building includes a plane, a left edge, a right edge, an upper edge, and a lower edge of the building. For another example, the traffic pole may include a horizontal bar and a vertical bar. For another example, the road index line may include a solid line, a dashed line, and a steering line. In another implementation of the embodiments of this application, categories of objects may be alternatively classified based on geometric shapes of the objects. In this case, the categories of the objects may include a straight line shape, a curve shape, a plane shape, and a curved surface shape. It should be understood that the categories of the objects may further include a combination of the foregoing two implementations, or another manner may be used for classification, or the like. This is not limited herein.

A size may be a length of a line, an area of a plane, or the like. This is not limited in the embodiments of this application. For a category of an object described by the geometric feature, the size may correspond to a length, a width, a height, a surface area, or the like of the object.

A position may be a position of an object described by a geometric feature. Because a position is in a one-to-one correspondence with an object, the position is also referred to as a position of the geometric feature. A position of a geometric feature may be position coordinates of an object that are described in a coordinate system used for point cloud data, and an agreement may be reached on a rule for selecting the position coordinates of the geometric feature. Position coordinates of a geometric feature may be position coordinates of a geometric center of an object corresponding to the geometric feature; or position coordinates of a geometric feature are position coordinates of a lowest position on an object corresponding to the geometric feature (that is, position coordinates corresponding to a point with a smallest z-axis coordinate in point cloud data of the object); or position coordinates of an object are coordinates corresponding to a point with a smallest x-axis and/or y-axis coordinate in point cloud data of the object. It should be noted that, in the embodiments of this application, another standard may be alternatively used for setting a position of an object described by a geometric feature. This is not limited.

In an implementation of the embodiments of this application, for different categories of objects, position coordinates of geometric features corresponding to the objects may be alternatively determined by using different selection rules. For example, a geometric feature of a main plane of a building is a plane, and position coordinates of the geometric feature may be position coordinates of a geometric center of the main plane. For another example, a geometry feature of a tree trunk is a straight line, and position coordinates of the geometric feature may be position coordinates corresponding to a point with a smallest z-axis coordinate in point cloud data of the tree trunk. For another example, a geometric feature of an upper edge of a building is a straight line, and position coordinates of the geometric feature may be position coordinates corresponding to a point with a smallest x-axis coordinate in point cloud data of the upper edge of the building.

It should be noted that, for some objects such as a pavement and a curb, geometric feature selection may include but is not limited to the following two manners:

First manner: Coordinates of any position in point cloud data of an object are selected as a position of a geometric feature corresponding to the object. It should be understood that, in this case, positions may be used to reflect a relative position relationship between objects.

Second manner: Another object may be used as a reference, and a position of a geometric feature corresponding to the object is determined based on a position of the reference object. For example, a position of a geometric feature of a pavement may be a middle point between positions of two objects disposed on two sides of a road.

The following describes an expression manner of a geometric feature by using an example.

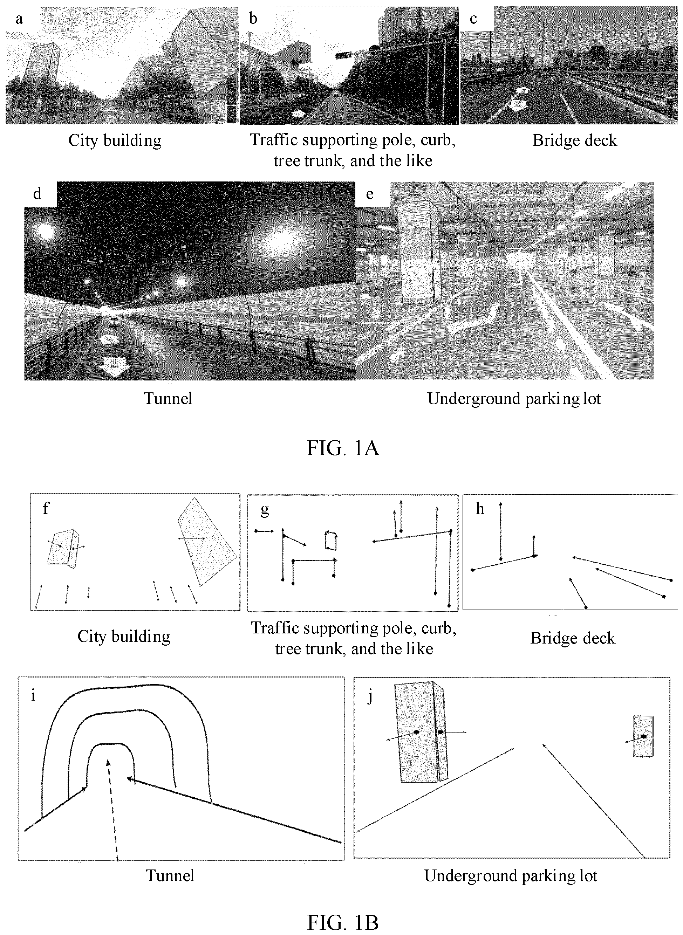

FIG. 1A is a schematic illustrative diagram of a road scenario, and FIG. 1B is a schematic illustrative diagram of a geometric feature. In FIG. 1A, a diagram a, a diagram b, a diagram c, a diagram d, and a diagram e are schematic diagrams of five road scenarios. In FIG. 1B, a diagram f, a diagram g, a diagram h, a diagram i, and a diagram j are schematic illustrative diagrams of geometric features extracted from point cloud data of the road scenarios shown in the diagram a, the diagram b, the diagram c, the diagram d, and the diagram e respectively.

For example, as shown in the diagram a and the diagram f, a left edge, a right edge, and an upper edge of a building each may correspond to a geometric feature of a straight line, where the geometric feature may include a direction vector and a position of the straight line; a wall of the building may correspond to a geometric feature of a plane, for example, the geometric feature includes a normal vector and a position of a geometric center of the plane.

For another example, as shown in the diagram b and the diagram g, a horizontal bar and a vertical bar of a traffic pole each may correspond to a geometric feature of a straight line.

For another example, as shown in the diagram c and the diagram h, a curb of a straight line shape may correspond to a geometric feature of a straight line.

For another example, as shown in the diagram d and the diagram i, an inner wall of a tunnel may correspond to a geometric feature of a curved surface.

For another example, as shown in the diagram e and the diagram j, a plurality of walls of a supporting column each may correspond to a geometric feature of a plane, and edges of the supporting column each may correspond to a geometric feature of a straight line.

(6) Geometric feature map

A geometric feature may be extracted from point cloud data on a point cloud map, and all geometric features extracted from the point cloud map form a geometric feature map. In other words, the geometric feature map is a map formed by the geometric features extracted from the point cloud data on the point cloud map. Optionally, the geometric feature map may further include an attribute of a geometric feature, for example, a size or a category to which the geometric feature belongs, and may further include a position, an address corresponding to the position, a road name corresponding to a geometric feature of a road, and the like. The geometric feature map may be used as a layer of a map (for example, a map such as Google Maps, Baidu Map, Amap, or a point cloud map), or may be independently used as a map. In a process of positioning a vehicle, the vehicle or a terminal bound to the vehicle may load a geometric feature map, or may load only data of a geometric feature map. This is not limited in the embodiments of this application.

(7) Matching between geometric features

Matching between geometric features means performing matching between two groups of geometric features in different coordinate systems, to establish a correspondence between geometric features in different coordinate systems. In the embodiments of this application, point cloud data collected by a vehicle in real time is data that is of a point in a coordinate system and that is determined based on a predicted pose (that is, an inaccurate position and attitude) of the vehicle, and a process of performing matching between geometric features is to match a geometric feature extracted from the point cloud data against a geometric feature on a geometric feature map. It should be understood that two geometric features between which a correspondence is established are essentially expressions of an object in different coordinate systems. Before positioning of a vehicle, a group of geometric features that match a group of geometric features extracted from point cloud data collected by the vehicle needs to be found on a geometric feature map. Specifically, matching between the two groups of geometric features may be established based on at least one of a position, a direction, an attribute, and the like of the two groups of geometric features. For a specific implementation, refer to related descriptions in the following positioning method. Details are not described herein again.

(8) Principle of positioning based on a geometric feature

In a road scenario, a distribution of 3D geometric features of articles such as a curb, a traffic pole, a traffic signpost, a lane line, a tree trunk, and a building in three-dimensional space has a non-parallel and non-coplanar feature. Theoretically, a transformation relationship between two coordinate systems may be determined by using at least two non-coplanar geometric features, to obtain a positioning result for a vehicle. It should be understood that, in a positioning process, more geometric features contribute to a more precise positioning result.

(9) Kalman filter

Kalman filter is an optimal state estimation method. Under an assumption of a discrete linear dynamic system, a state at a moment may be inferred based on a state at a previous moment. A prediction equation may be expressed as $\hat{x}_k^- = A_{k-1}\hat{x}_{k-1} + B_{k-1}a_{k-1}$, where a subscript "k" indicates a current moment, a subscript "k-1" indicates a previous moment, a symbol "^" in a state indicates that the state is an estimated value, a superscript "-" in a state indicates that the state is a prediction result based on a previous state, indicates a predicted estimated value of a state at the current moment, and $a_k$ is control input, such as an acceleration or steering, of a vehicle at the current moment. All predictions contain a noise. A greater noise indicates a greater uncertainty. A covariance (covariance) matrix is used to represent a state prediction noise, which is usually represented by P. A prediction of the noise covariance matrix may be expressed as $P_k^- = A_k P_{k-1} A^T + Q_k$, where $A_k$ indicates a state transfer matrix, and $Q_k$ indicates a noise matrix of a system model.

An observed value of a system is $z_k$, and an observed value $\hat{z}_k^-$ of the system may be predicted based on a system state prediction result $\hat{x}_k^-$, where $\hat{x}_k^-$, where $\hat{z}_k^- = H_k \hat{x}_k^-$, , and $H_k$ is an observation matrix of the system.

An optimal state estimated value $\hat{\chi}_k$ is obtained by multiplying a residual $(z_k - H_k\hat{x}_k^-)$ between an observed value and an observed predicted estimated value by a Kalman coefficient (also referred to as a Kalman gain) $K_k$ and

performing an update, that is, $\hat{x}_k = \hat{x}_k^- + K_k(z_k - H_k\hat{x}_k^-)$. $H_k$ is an observation matrix $(z_k - H_k\hat{x}_k^-)$, and represents

a residual between an actual observed value and an expected observed value. The predicted state $\hat{x}_k^-$ may be corrected by multiplying the residual by the coefficient $K_k$. The Kalman gain matrix $K_k$ actually represents an estimation coefficient used when a variance P between a system state and a predicted state is smallest in an optimal state estimation process.

The noise covariance matrix P for an optimal state estimation is updated for calculating a Kalman filter gain in a next iteration, and an uncertainty of a state is reduced. However, due to an introduction of a transfer noise in the next iteration, the uncertainty increases. Kalman filter is to find an optimal state estimation in changes of the uncertainty.

(10) Precision

In the embodiments of this application, a first pose, a second pose, an estimated pose, a predicted pose, and the like are all measured values of a pose of a vehicle, and precision of the poses is different. In the embodiments of this application, precision is a degree of proximity between a measured pose of a vehicle, for example, a first pose, a second pose, an estimated pose, or a predicted pose, and a real pose of the vehicle. To be specific, precision of the first pose indicates a difference between the first pose and the real pose of the vehicle, and precision of the second pose is a difference between the second pose and the real pose of the vehicle. Low precision indicates a large difference, and high precision indicates a small difference. An object of the embodiments of this application is to obtain the high-precision second pose by adjusting the low-precision first pose. To be specific, compared with the first pose, the second pose is closer to the real pose of the vehicle, and may be used as a real pose (also referred to as an actual pose) of the vehicle. Therefore, the first pose may be referred to as a predicted pose, and the second pose may be referred to as an actual pose. It should be understood that the second pose is also a measured value of the actual pose of the vehicle, and is merely closer to the actual pose of the vehicle than the first pose.

The following describes a system architecture provided in the embodiments of this application.

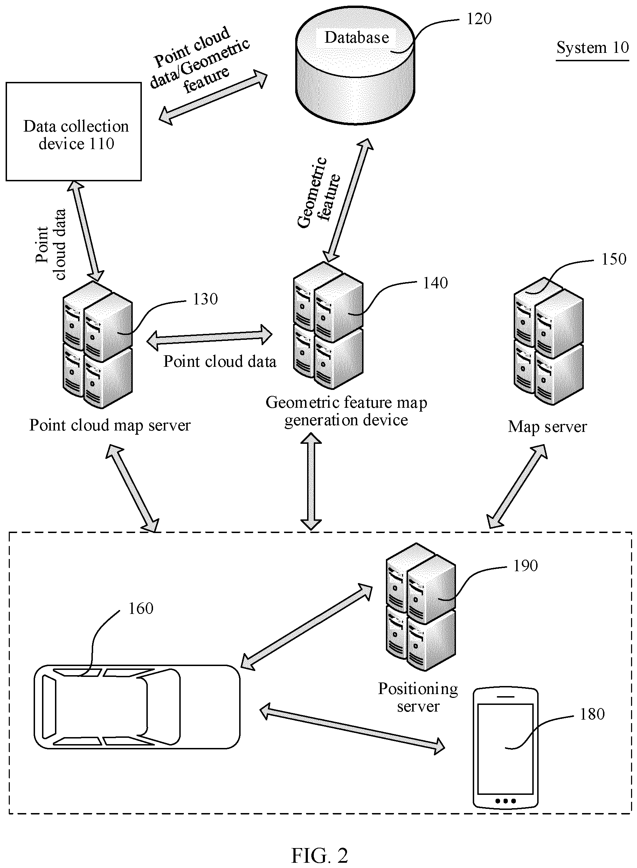

Referring to FIG. 2, an embodiment of this application provides an architecture of a system. As shown in the system 10, the system 10 may include a data collection device 110, a database 120, a point cloud map server 130, a geometric feature map generation device 140, a map server 150, a vehicle 160, a terminal 180, and a positioning server 190. For different application scenarios, the vehicle 160, the terminal 180, and the positioning server 190 each may serve as a positioning device. Whether a positioning device is specifically a vehicle, a terminal, or a positioning server is not limited in the present invention.

The data collection device 110 is configured to collect point cloud data by using a point cloud collection apparatus, and store the point cloud data into the database 120, and may be a vehicle equipped with a point cloud collection apparatus, or another apparatus that can collect point cloud data. In another implementation, the data collection device 110 may also extract a geometric feature from the collected point cloud data, and store the geometric feature into the database 120.

The point cloud map server 130 is configured to form a point cloud map by using the point cloud data collected by the data collection device 110, and may further receive, from a positioning device, a request for point cloud data in a specific region, and respond to the request to send the point cloud data in the specific region to the positioning device.

The geometric feature map generation device 140 may be a device with a calculation function, for example, a server or a computer, and is configured to obtain point cloud data on the point cloud map from the database 120 or the point cloud map server 130, and then extract a geometric feature from the point cloud data to obtain a geometric feature map, and may further store the geometric feature map into the database 120 or locally. The geometric feature map generation device 140 may further receive an obtaining request sent by the positioning device for a geometric feature in a first region, and then respond to the request to send the geometric feature in the first region to the positioning device. It should be understood that, alternatively, functions of generating the geometric feature map and responding to the positioning device may be separately implemented by different devices. This is not limited in this embodiment of this application.

The map server 150 may be a server of a map application, for example, a server of a map application such as a server of Baidu Map, a server of Google Maps, or a server of Amap. The positioning device may establish a communication connection to the map server 150 to exchange data, so that the positioning device can navigate to a destination based on a current pose obtained through positioning. It should be understood that the geometric feature map generation device 140 may also include data such as an address and a road, and the positioning device may also establish a communication connection to the geometric feature map generation device 140, to implement navigation of the positioning device.

The positioning device may be the vehicle 160, a computer system on the vehicle 160, or the terminal 180 that is communicatively connected to the vehicle 160, for example, a mobile phone or a tablet computer; or may be the positioning server 190. The vehicle 160 is equipped with a point cloud collection apparatus, an inertial sensor, and the like. When the positioning device is the positioning server 190 or the terminal 180, the vehicle 190 may send first point cloud data and a first pose in a current environment that are collected to the positioning server 190 or the terminal 180; and the positioning server 190 or the terminal 180 adjusts the first pose of the vehicle 160 based on the first point cloud data and a first pose that are received, and sends a first pose obtained through positioning to the vehicle 160.

The positioning server 190 may be a server that provides a positioning requirement for the vehicle. In an implementation scenario, the positioning server 190 may obtain the first point cloud data collected by the vehicle 160 by using the point cloud collection apparatus, or may prestore a geometric feature map, to position the vehicle. Further, the positioning server may further send a second pose obtained through positioning to the vehicle 160 or the terminal 180.

The point cloud collection apparatus may be specifically at least one laser radar, and the laser radar may be a multi-line radar laser sensor, for example, a laser radar with four lines, eight lines, 16 lines, 32 lines, 64 lines, or another quantity of lines. Alternatively, the point cloud collection apparatus may be a stereo camera, a TOF camera, or the like. The stereo camera may include a plurality of cameras, or may include a combination of one or more cameras and a laser radar. The inertial sensor may include but is not limited to one or more of a gyroscope, an accelerometer, a magnetic sensor, and the like.

The computer system on the vehicle may send, to the positioning device, motion information collected by the inertial sensor and point cloud data collected by the point cloud collection apparatus or a geometric feature extracted from the point cloud data, so that the positioning device performs positioning based on received data.

The positioning device may request to obtain the geometric feature map from the geometric feature map generation device 140, or may download the geometric feature map from the geometric feature map generation device 140, then match the geometric feature extracted from the point cloud data collected by the point cloud collection apparatus against a geometric feature on the geometric feature map, and further perform positioning by using a geometric feature obtained through matching. Specifically, a positioning method is as follows: The positioning device may determine a first pose of the vehicle. The first pose is an estimated value of a current position of the vehicle, and has comparatively low precision. The positioning device obtains point cloud data collected by the point cloud collection apparatus on the vehicle, where the point cloud data is a description in a coordinate system determined based on the first pose; and further extracts a plurality of first geometric features from the point cloud data, and then searches the geometric feature map for a plurality of second geometric features matching the plurality of first geometric features, where the first geometric features are in a one-to-one correspondence with the second geometric features. The plurality of first geometric features are expressions, based on the inaccurate first pose, of objects described by the plurality of second geometric features. Therefore, the positioning device may obtain an accurate pose, namely, a second pose, of the vehicle based on the plurality of first geometric features and the plurality of second geometric features.

It should be understood that the point cloud map server 130 and the map server 150 are not components necessarily required by the system 10 in this embodiment of this application, and the system 10 may further include another device. This is not limited herein.

The following describes a vehicle provided in the embodiments of this application.

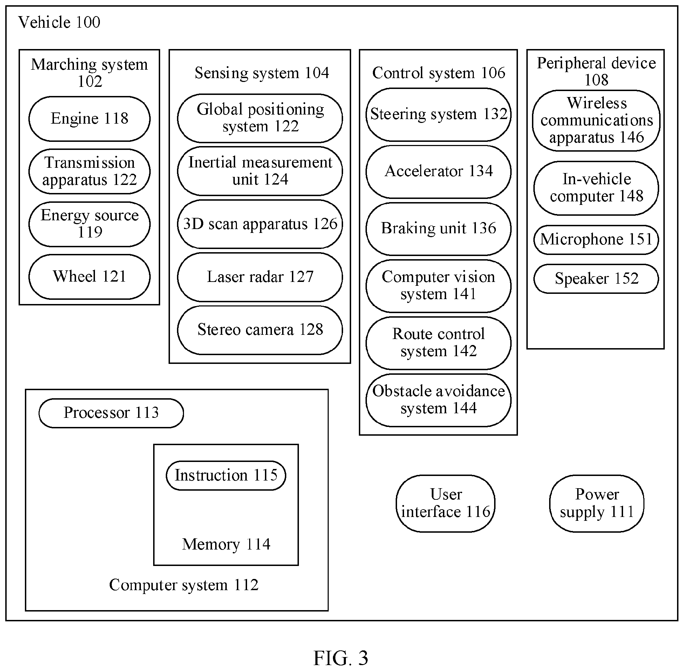

FIG. 3 is a functional block diagram of a vehicle according to an embodiment of the present invention. In an embodiment, the vehicle is configured to be in a fully or partially self-driving mode. For example, when the vehicle 100 is in a self-driving mode, the vehicle 100 may control the vehicle 100 itself, and may use manual operations to determine a current status of the vehicle and a surrounding environment of the vehicle, determine possible behavior of at least one another vehicle in the surrounding environment, determine a confidence level corresponding to a possibility that the another vehicle performs the possible behavior, and control the vehicle 100 based on determined information. When the vehicle 100 is in the self-driving mode, the vehicle 100 may be configured to operate without interacting with a person.

The vehicle 100 may be the vehicle 160 in the system shown in FIG. 2, and may include various subsystems, for example, a marching system 102, a sensing system 104, a control system 106, one or more peripheral devices 108, a power supply 111, a computer system 112, and a user interface 116. Optionally, the vehicle 100 may include more or fewer subsystems, and each subsystem may include a plurality of elements. In addition, all subsystems and elements of the vehicle 100 may be interconnected in a wired or wireless manner.

The marching system 102 may include a component that provides power for motion of the vehicle 100. In an embodiment, the propulsion system 102 may include an engine 118, an energy source 119, a transmission apparatus 122, and a wheel/tire 121. The engine 118 may be a combination of an internal combustion engine, an electric motor, an air compression engine, or another type of engine, for example, a hybrid engine including a gasoline engine and an electric motor, or a hybrid engine including an internal combustion engine and an air compression engine. The engine 118 converts the energy source 119 into mechanical energy.

Examples of the energy source 119 include gasoline, diesel, other petroleum-based fuels, propane, other compressed gas-based fuels, anhydrous alcohol, a solar cell module, a battery, and other power sources. The energy source 119 may also provide energy for other systems of the vehicle 100.

The transmission apparatus 122 may transmit mechanical power from the engine 118 to the wheel 121. The transmission apparatus 122 may include a gearbox, a differential, and a drive shaft. In an embodiment, the transmission apparatus 122 may further include another device, for example, a clutch. The drive shaft may include one or more shafts that may be coupled to one or more wheels 121.

The sensing system 104 may include several sensors that sense information about a surrounding environment of the vehicle 100. For example, the sensing system 104 may include a global positioning system 122 (the global positioning system 122 may be a GPS system, or may be a BeiDou system or another positioning system), an inertial measurement unit (inertial measurement unit, IMU) 124, and a point cloud collection apparatus 126. The point cloud collection apparatus 126 may include a laser radar 127, a stereo camera 128, a TOF camera, and the like. The sensing system 104 may further include sensors (for example, an in-vehicle air quality monitor, a fuel gauge, and an oil temperature gauge) of an internal system of the monitored vehicle 100. Sensor data from one or more of these sensors may be used to detect an object and its corresponding characteristics (a position, a shape, a direction, a speed, and the like). The detection and identification are key functions of a safe operation of the autonomous vehicle 100.

The point cloud collection apparatus 126 may be configured to obtain point cloud data of a surrounding environment of the vehicle 100, to precisely estimate a geographical position and an attitude of the vehicle 100. The global positioning system 122 in the vehicle 100, for example, GPS or BPS, may be configured to roughly estimate a geographical position of the vehicle 100. The IMU 124 is configured to sense a position and direction change of the vehicle 100 based on an inertial acceleration, and may be configured to roughly estimate an attitude of the vehicle. In an embodiment, the IMU 124 may be a combination of an accelerometer and a gyroscope.

The point cloud collection apparatus 126 may be specifically at least one laser radar 127, and the laser radar 127 may be a multi-line laser radar, for example, a laser radar with four lines, eight lines, 16 lines, 32 lines, 64 lines, or another quantity of lines. The laser radar 127 may use a radio signal to sense an article in a surrounding environment of the vehicle 100. In some embodiments, in addition to sensing an article, the point cloud collection apparatus 126 may be further configured to sense a speed and/or an advancing direction of the article. Alternatively, the point cloud collection apparatus 126 may be the stereo camera 128. The stereo camera 128 may include a plurality of cameras, or may include one or more cameras and a laser radar sensor. The stereo camera may be configured to capture a plurality of images, of a surrounding environment of the vehicle 100, that include depth information.

The control system 106 controls operations of the vehicle 100 and components of the vehicle 100. The control system 106 may include various elements, including a steering system 132, an accelerator 134, a braking unit 136, a sensor fusion algorithm 138, a computer vision system 141, a route control system 142, and an obstacle avoidance system 144.

The steering system 132 may be operated to adjust an advancing direction of the vehicle 100. For example, in an embodiment, the steering system 132 may be a steering wheel system.

The accelerator 134 is configured to control an operating speed of the engine 118, to control a speed of the vehicle 100.

The braking unit 136 is configured to control the vehicle 100 to decelerate. The braking unit 136 may slow down the wheel 121 by using friction. In another embodiment, the braking unit 136 may convert kinetic energy of the wheel 121 into a current. Alternatively, the braking unit 136 may decrease a rotational speed of the wheel 121 in another form, to control a speed of the vehicle 100.

The computer vision system 141 may be operated to process and analyze an image captured by a camera 130, to identify an article and/or a feature in a surrounding environment of the vehicle 100. The article and/or the feature may include a traffic signal, a road boundary, and an obstacle. The computer vision system 141 may use an article identification algorithm, a structure from motion (Structure from Motion, SFM) algorithm, video tracking, and another computer vision technology. In some embodiments, the computer vision system 141 may be configured to draw a map for an environment, track an article, estimate a speed of an article, and the like.

The route control system 142 is configured to determine a driving route of the vehicle 100. In some embodiments, the route control system 142 may determine the driving route of the vehicle 100 with reference to data from the sensor 138, the GPS 122, and one or more predetermined maps.

The obstacle avoidance system 144 is configured to identify, evaluate, and avoid or bypass, in another manner, a potential obstacle in an environment of the vehicle 100.

Certainly, in an example, the control system 106 may additionally or alternatively include components other than those shown and described. Alternatively, some of the components shown above may be omitted.

The vehicle 100 interacts with an external sensor, another vehicle, another computer system, or a user by using the peripheral device 108. The peripheral device 108 may include a wireless communications apparatus 146, an in-vehicle computer 148, a microphone 151, and/or a speaker 152.

In some embodiments, the peripheral device 108 provides a means for a user of the vehicle 100 to interact with the user interface 116. For example, the in-vehicle computer 148 may provide information for the user of the vehicle 100. The user interface 116 may be further used for operating the in-vehicle computer 148 to receive user input. The in-vehicle computer 148 may be operated by using a touchscreen. In another case, the peripheral device 108 may provide a means for the vehicle 100 to communicate with another device located in the vehicle. For example, the microphone 151 may receive audio information (for example, a voice command or other audio input) from the user of the vehicle 100. Similarly, the speaker 152 may output audio information to the user of the vehicle 100.

The wireless communications apparatus 146 may wirelessly communicate with one or more devices directly or by using a communications network. For example, the wireless communications apparatus 146 may use 3G cellular communication such as CDMA, EVD0, or GSM/GPRS, or 4G cellular communication such as LTE, or 5G cellular communication. The wireless communications apparatus 146 may communicate with a wireless local area network (wireless local area network, WLAN) by using Wi-Fi. In some embodiments, the wireless communications apparatus 146 may directly communicate with a device by using an infrared link, Bluetooth, or ZigBee. Alternatively, the wireless communications apparatus 146 may include one or more dedicated short range communications (dedicated short range communications, DSRC) devices. These devices may implement public and/or private data communication between the vehicle and/or a road side unit (road side unit, RSU).

The power supply 111 may supply power to various components of the vehicle 100. In an embodiment, the power supply 111 may be a rechargeable lithium-ion or lead-acid battery. One or more battery packs of such batteries may be configured as a power supply to supply power to various components of the vehicle 100. In some embodiments, the power supply 111 and the energy source 119 may be implemented together, for example, in some all-electric vehicles.

Some or all functions of the vehicle 100 are controlled by the computer system 112. The computer system 112 may include at least one processor 113. The processor 113 executes an instruction 115 stored in a non-transitory computer-readable medium such as a data storage apparatus 114. The computer system 112 may be alternatively a plurality of computing devices that control an individual component or a subsystem of the vehicle 100 in a distributed manner.

The processor 113 may be any conventional processor such as a commercially available CPU. Alternatively, the processor may be a dedicated device such as an ASIC or another hardware-based processor. Although FIG. 3 functionally shows the processor, the memory, and other elements of the computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium not located in a housing of the computer 110. Therefore, a reference to a processor or a computer is understood as including a reference to a set of processors or computers or memories that may or may not be operated in parallel. Unlike using a single processor to perform the steps described herein, some components such as a steering component and a deceleration component each may have its own processor, and the processor performs only calculation related to a component-specific function.

In various aspects described herein, the processor may be located far away from the vehicle and wirelessly communicate with the vehicle. In other aspects, some of the processes described herein are performed on a processor disposed in the vehicle, and others are performed by a remote processor, including performing a step necessary for performing a single operation.

In some embodiments, the data storage apparatus 114 may include an instruction 115 (for example, program logic), and the instruction 115 may be executed by the processor 113 to perform various functions of the vehicle 100, including the functions described above. The data storage apparatus 114 may also include an additional instruction, including an instruction for sending data to, receiving data from, interacting with, and/or controlling one or more of the propulsion system 102, the sensing system 104, the control system 106, and the peripheral device 108.

In addition to the instruction 115, the data storage apparatus 114 may further store data, for example, first point cloud data collected by the point cloud collection apparatus 126; a first geometric feature extracted from the first point cloud data; a geometric feature map; a road map; route information; a position, a direction, and a speed of the vehicle and other similar vehicle data; and other information. The information may be used by the vehicle 100 and the computer system 112 during operating of the vehicle 100 in an autonomous, semi-autonomous, and/or manual mode.

In this embodiment of this application, the vehicle 100 or the computer system 112 may determine a first pose of the vehicle based on the positioning system 122, for example, the global positioning system 122 and the inertial measurement unit 124, to roughly estimate a current position of the vehicle; then obtain first point cloud data collected by the point cloud collection apparatus 126 on the vehicle; and further extract a plurality of first geometric features from the first point cloud data, where the first geometric features being descriptions of a plurality of objects in a coordinate system determined based on the first pose, and then search a geometric feature map for a plurality of second geometric features matching the plurality of first geometric features, where the first geometric features are in a one-to-one correspondence with the second geometric features. The plurality of first geometric features are expressions, based on the inaccurate first pose, of objects described by the plurality of second geometric features. Therefore, the vehicle 100 or the computer system 112 may obtain an accurate pose, namely, a second pose, of the vehicle based on the plurality of first geometric features and the plurality of second geometric features.

The user interface 116 is configured to provide information for or receive information from the user of the vehicle 100. Optionally, the user interface 116 may include one or more input/output devices in a set of peripheral devices 108, for example, the wireless communications apparatus 146, the in-vehicle computer 148, the microphone 151, and the speaker 152.

The computer system 112 may control a function of the vehicle 100 based on input received from various subsystems (for example, the marching system 102, the sensing system 104, and the control system 106) and the user interface 116. For example, the computer system 112 may use input from the control system 106 to control the steering unit 132 to avoid obstacles detected by the sensing system 104 and the obstacle avoidance system 144. In some embodiments, the computer system 112 may be operated to provide control over many aspects of the vehicle 100 and the subsystems of the vehicle 100.

Optionally, one or more of the foregoing components may be mounted in separation from or associated with the vehicle 100. For example, the data storage apparatus 114 may exist in partial or complete separation from the vehicle 1100. The foregoing components may be communicatively coupled in a wired and/or wireless manner.

Optionally, the foregoing components are merely examples. In actual application, components in the foregoing modules may be added or omitted according to an actual requirement. FIG. 3 should not be understood as a limitation on the embodiments of the present invention.

A self-driving vehicle running on a road, for example, the vehicle 100, may identify an article in a surrounding environment of the vehicle, to determine an adjustment on a current speed. The article may be another vehicle, a traffic control device, or another type of article. In some examples, each identified article may be independently considered, and a speed to which the self-driving vehicle needs to be adjusted may be determined based on a feature of the article, for example, a current speed or an acceleration of the article, or a distance between the article and the vehicle.

Optionally, the self-driving vehicle 100 or a computing device (for example, the computer system 112, the computer vision system 141, or the data storage apparatus 114 in FIG. 3) associated with the self-driving vehicle 100 may predict behavior of an identified article based on a characteristic of the identified article and a condition (for example, traffic, rain, or ice on a road) of a surrounding environment. Optionally, all identified articles depend on behavior of each other. Therefore, all the identified articles may be jointly considered to predict behavior of a single identified article. The vehicle 100 can adjust a speed of the vehicle 100 based on the predicted behavior of the identified article. In other words, the self-driving vehicle can determine, based on the predicted behavior of the article, a stable status to which the vehicle needs to be adjusted (for example, acceleration, deceleration, or stop). In this process, another factor may also be considered to determine the speed of the vehicle 100, for example, a lateral position of the vehicle 100 on a road on which the vehicle 100 runs, a curvature of the road, or a degree of proximity of static and dynamic articles.

In addition to providing an instruction for adjusting the speed of the self-driving vehicle, the computing device may further provide an instruction for modifying a steering angle of the vehicle 100, so that the self-driving vehicle follows a given trajectory and/or maintains safe lateral and longitudinal distances between the self-driving vehicle and an article near the self-driving vehicle (for example, a car in an adjacent lane on the road).

The vehicle 100 may be a car, a truck, a motorcycle, a bus, a boat, an airplane, a helicopter, a lawn mower, an entertainment vehicle, a playground vehicle, a construction device, a tram, a golf cart, a train, a handcart, or the like. This is not particularly limited in the embodiments of the present invention.

The following describes the embodiments of this application in detail with reference to the accompanying drawings.

**Embodiment (1)**

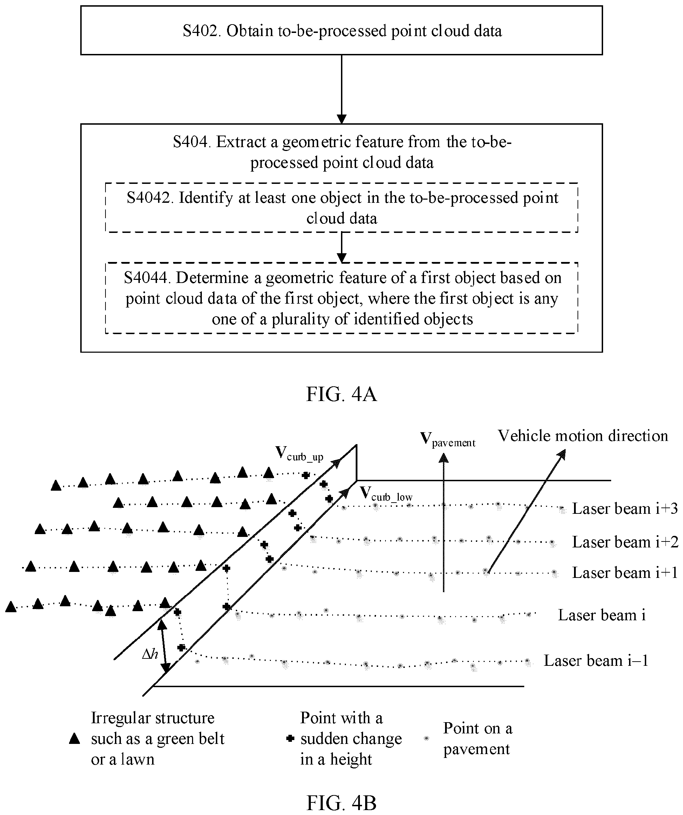

First, a geometric feature extraction method in this embodiment of this application is described. The method may be performed by the vehicle 160, the positioning device, or the geometric feature map generation device 140 in FIG. 2, or the vehicle 100 in FIG. 3. In this embodiment of this application, an example in which the method is performed by a vehicle is used for description. Referring to the geometric feature extraction method shown in FIG. 4A, the method may include but is not limited to the following steps.

S402. Obtain to-be-processed point cloud data.

In an application scenario of positioning a vehicle (Embodiment (3) of this application), the to-be-processed point cloud data is first point cloud data, of a surrounding environment, that is obtained by the vehicle by using a point cloud collection apparatus. Geometric features extracted from the first point cloud data are a plurality of first geometric features or N first geometric features in Embodiment (3), and the extracted geometric features are used to position the vehicle. In this case, the first point cloud data may be one frame of point cloud data, or may be a plurality of frames of point cloud data, or may be point cloud data obtained by performing inter-frame point cloud superposition on a plurality of frames of point cloud data. This is not limited in this embodiment of this application.

It should be understood that, for a positioning device, if the positioning device is a terminal or a server, the positioning device may establish a communication connection to the vehicle, to receive the first point cloud data obtained by the vehicle by using the point cloud collection apparatus.

In an application scenario of generating a geometric feature map (Embodiment (2) of this application), the to-be-processed point cloud data is second point cloud data obtained by a geometric feature map generation device from a database, a data collection device, or a point cloud map, and geometric features extracted from the to-be-processed point cloud data are used to generate a geometric feature map. In this case, the to-be-processed point cloud data obtained by the geometric feature map generation device may be point cloud data in a to-be-processed region, or may be one or more frames of to-be-processed point cloud data, or may be point cloud data obtained by performing inter-frame point cloud superposition on a plurality of frames of point cloud data. This is not limited in this embodiment of this application.

Optionally, before S404, the vehicle may further perform noise reduction processing on the to-be-processed point cloud data, for example, filter out an outlier in the point cloud data, to filter out an interfering point with an excessively large noise and retain only a valid data point, thereby improving accuracy of geometric feature extraction. For another example, the vehicle may perform down-sampling on the point cloud data, that is, reduce a quantity of sampling points in the point cloud data, to reduce a data volume and a data processing amount, thereby increasing a positioning speed for the vehicle.

S404. Extract a geometric feature from the to-be-processed point cloud data.

In an implementation of S404, S404 may include the following steps.

S4042. Identify at least one object in the to-be-processed point cloud data.

In this embodiment of this application, identifying a plurality of objects in the to-be-processed point cloud data includes but is not limited to identifying an attribute of an object in the to-be-processed point cloud data. The attribute may be a category to which the object belongs. In an implementation of this embodiment of this application, the category (a first category) to which the object belongs includes a straight line, a curve, a plane, a curved surface, and the like. In another implementation of this embodiment of this application, the category (a second category) to which the object belongs includes a curb; a pavement; a tree trunk; a plane, a left edge, a right edge, an upper edge, and a lower edge of a building; a horizontal bar and a vertical bar of a traffic pole; a solid line, a dashed line, and a steering line of a road index line; and the like.

In an implementation of this embodiment of this application, the object may not include a physical meaning, and the vehicle identifies only a geometric shape of the object, and then extracts a geometric feature of the object by using a technical method corresponding to the geometric shape. In another implementation of this embodiment of this application, the object may include a specific physical meaning, for example, a curb; a pavement; a road index line; a traffic signpost; a road index line; a tree trunk; a plane, a left edge, a right edge, an upper edge, or a lower edge of a building; a horizontal bar or a vertical bar of a traffic pole; a solid line, a dashed line, or a steering line of a road index line; or the like. This is not limited in this embodiment of this application.

S4044. Determine a geometric feature of a first object based on point cloud data of the first object, where the first object is any one of the plurality of identified objects.

In this embodiment of this application, preferably, a geometric shape of an object in the to-be-processed point cloud data is identified; and further, point cloud data of each object may be obtained from the to-be-processed point cloud data through division, and then fitting such as straight line, curve, plane, or curved surface fitting is performed on the point cloud data of each object, for example, a straight line, a curve, a plane, or a curved surface. A geometric feature of a geometric expression of an object is a geometric feature of the object.

If a geometric shape of the first object is a straight line, straight line fitting is performed on the point cloud data of the first object to obtain a first geometric feature of the first object. The first geometric feature of the first object is a geometric feature that is of the straight line and that is obtained through fitting. If a geometric shape of the first object is a curve, curve fitting is performed on the point cloud data of the first object to obtain a first geometric feature of the first object. The first geometric feature of the first object is a geometric feature that is of the curve and that is obtained through fitting. If a geometric shape of the first object is a plane, plane fitting is performed on the point cloud data of the first object to obtain a first geometric feature of the first object. The first geometric feature of the first object is a geometric feature that is of the plane and that is obtained through fitting. If a geometric shape of the first object is a curved surface, curved surface fitting is performed on the point cloud data of the first object to obtain a first geometric feature of the first object. The first geometric feature of the first object is a geometric feature that is of the curve and that is obtained through curved surface fitting.

It should be understood that, for the second category, the vehicle may determine, based on a correspondence between a category and a geometric shape, a fitting manner used for each category. For example, for a linear object, for example, a category is a left edge, a right edge, an upper edge, or a lower edge of a building, a horizontal bar or a vertical bar of a traffic pole, a pole of a signpost, or a tree trunk, a geometric feature of the linear object is calculated in a manner of straight line fitting. For another example, for a planar object such as a plane of a building or a face of a billboard, a geometric feature of the planar object is calculated in a manner of plane fitting.

The following examples describe an extraction principle and method for each object.

(1) Pavement and curb

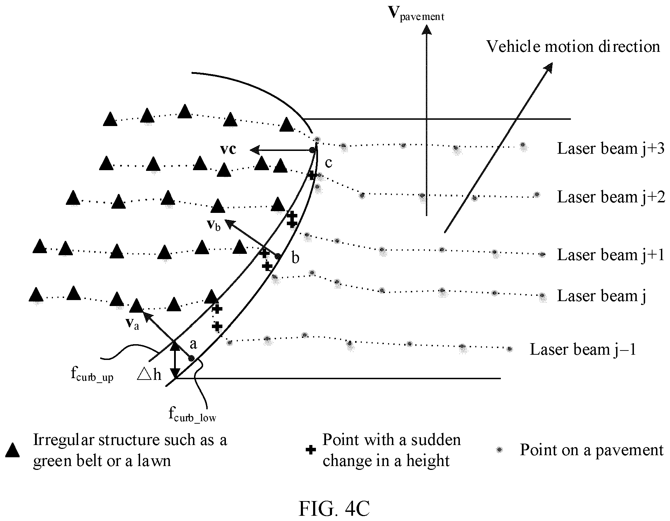

FIG. 4B and FIG. 4C are schematic principle diagrams of extracting geometric features of a pavement and a curb. FIG. 4B shows a distribution of point cloud data of the curb. The pavement is usually a flat plane, and the curb may include an upper edge and a lower edge. Both point cloud data of the upper edge and point cloud data of the lower edge have a sudden change in a height. For a multi-line laser radar, in a motion direction of the vehicle, a laser beam emitted by the laser radar, for example, a laser beam i in FIG. 4B or a laser beam j in FIG. 4C, crosses the pavement and the curb. Therefore, an observed height change may be obtained in point cloud data obtained by each laser beam scanning. Therefore, the vehicle may determine the upper edge of the curb and a boundary (the lower edge) between the pavement and the curb based on the height change in the point cloud data obtained by each laser beam. For example, when a height difference $\Delta h$ between the upper edge and the lower edge is greater than a first height, it is determined that a region between the upper edge and the lower edge is the curb. Further, a geometric feature of the curb is obtained based on the point cloud data of the upper edge and the lower edge.

In an implementation of this embodiment of this application, a geometric feature of the pavement may be a normal vector of a plane on which the pavement is located, for example, $V_{pavement}$ in FIG. 4B and FIG. 4C.

In another implementation of this embodiment of this application, a geometric feature of a straight line or a curve on which the upper edge or the lower edge of the curb is located may be used as a geometric feature of the curb. For example, a vector $V_{curb\_up}$ or a vector $V_{curb\_low}$ in FIG. 4B is the geometric feature of the curb. As shown in FIG. 4C, a combination of a plurality of coordinate points on a curve (that is, a curve $f_{curb\_low}$ in the figure) on which the boundary between the pavement and the curb is located or a combination of normal vectors on the plurality of coordinate points is used as a geometric feature of the curve, that is, (coordinates of a point a, a normal vector $v_a$ of the point a, coordinates of a point b, a normal vector $v_b$ of the point b, coordinates of a point c, a normal vector $v_c$ of the point c).

In still another implementation of this embodiment of this application, an average value of a geometric feature of a straight line or a curve on which the upper edge of the curb is located and a geometric feature of a straight line or a curve on which the lower edge of the curb is located may be alternatively used as a geometric feature of the curb, that is, the geometric feature of the curb is $(V_{curb\_low} + V_{curb\_low})/2$. This is not limited in this embodiment of this application.

In this embodiment of this application, the geometric feature of the curb may further include a position of the curb. The position of the curb may be as follows: Coordinates of any position in the point cloud data of the curb are used as a position of a geometric feature corresponding to the object. It should be understood that another rule may be alternatively included to determine the position of the curb. This is not limited herein.

In this embodiment of this application, the vehicle may further mark an attribute of the geometric feature, for example, a size and a category to which the geometric feature belongs.

It can be learned that, in this embodiment of this application, a large amount of point cloud data on an object is replaced with a vector, a position, and an attribute. Compared with original point cloud data, the geometric feature occupies smaller storage space, thereby greatly reducing a data storage amount, and further reducing data calculation complexity, to meet a real-time performance requirement of vehicle positioning.

(2) Road index line

Because a coating material of the road index line is different from a material of the pavement, laser reflection strength of the road index line is far greater than that of the pavement. Therefore, the vehicle may extract, from the point cloud data of the pavement, a point for which laser reflection strength is greater than a preset strength, to obtain point cloud data of the road index line. Further, a geometric feature of the road index line is obtained based on the point cloud data of the road index line.

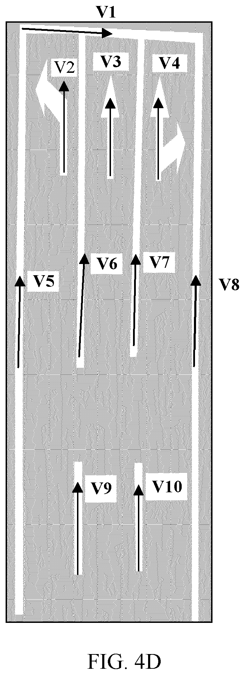

FIG. 4D is a schematic principle diagram of extracting a geometric feature of a road index line. The geometric feature of the road index line may be a geometric feature of a straight line or a curve on which the road index line is located. A geometric feature of each road index line may be V1 to V10 shown in 4D.

In another implementation of this embodiment of this application, if the point cloud data is obtained by using a stereo camera, the road index line in the point cloud data may be identified based on an image recognition technology. Further, the geometric feature of the road index line is obtained based on the point cloud data of the road index line. In some embodiments, if a lane line is lost because the road index line is damaged, stained, or the like, the vehicle may restore the road index line by using an image enhancement technology. In some embodiments, a beam sent by a laser radar is blocked by another vehicle due to traffic congestion. As a result, information about a lane index line that can be measured is missing. In this case, the vehicle may estimate a geometric feature of the lane index line at a current moment based on a motion trajectory of the vehicle and a geometric feature of the lane index line that is obtained at a previous moment.

In some embodiments, a road index line such as a left-turn, right-turn, straight-through, or U-turn road index line may be used as an attribute of a geometric feature, to assist in matching between geometric features.

(3) Pole-shaped object such as a traffic pole, a tree trunk, a street nameplate, or a billboard

In an implementation of this embodiment of this application, the vehicle may divide point cloud data by using a three-dimensional grid as a ruler. A size (an X-axis length $\times$ a Y-axis length $\times$ a Z-axis length) of the three-dimensional grid may be 0.2 m $\times$ 0.2 m $\times$ 0.2 m, or another value. This is not limited. It should be understood that the three-dimensional grid includes an article when the three-dimensional grid includes point cloud data. A height of the article in the three-dimensional grid is encoded to obtain a height profile. A three-dimensional grid denoted as (i,j,k) represents a three-dimensional grid determined by an $i^{th}$ grid in an X direction, a $j^{th}$ grid in a Y direction, and a $k^{th}$ grid in a Z direction. An

$$H = \sum_{k=1}^{K} 2^k \times N(k)$$

encoded height value H of the three-dimensional grid (i, j, k) is                    ' where when it is identified that the three-dimensional grid (i, j, k) includes an article, a value of N(k) is 1; otherwise, a value of N(k) is 0, where i, j, and k are positive integers.

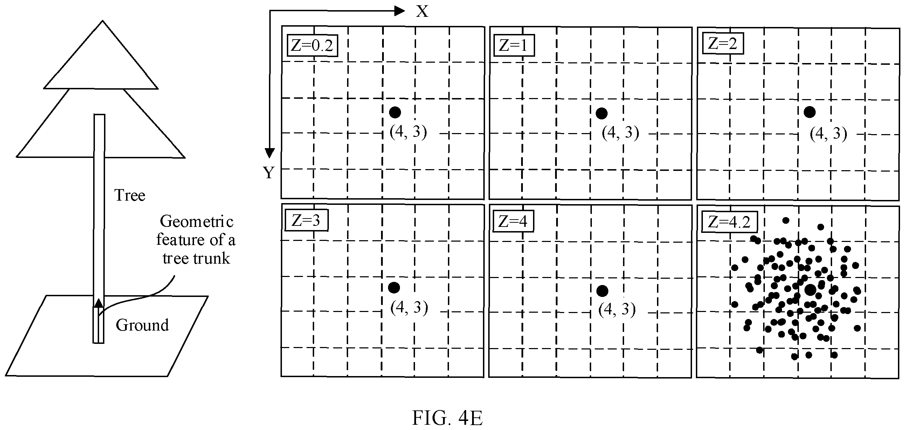

FIG. 4E is a schematic distribution diagram of point cloud data of a tree. An encoded height value of a three-dimensional grid (4, 3, 5) is greater than a first threshold. In FIG. 4E, k is 5. On a three-dimensional network at an upper layer (that is, Z = 4.0 or higher) of the three-dimensional grid (4, 3, 5), around a position (4, 3), a height value of a three-dimensional grid rapidly expands toward a surrounding three-dimensional grid. For example, as shown in a point cloud data distribution in FIG. 4E when Z = 4.2, it may be determined that an article is a tree. A height value corresponding to the three-dimensional grid (4, 3, 5) is a height of a tree trunk. Straight line fitting is performed based on point cloud data located in a three-dimensional grid (4, 3), to calculate a direction vector of the tree trunk, determine a position of the tree trunk, and the like.

It should be understood that, for articles such as a street lamp pole, a billboard, a traffic pole, and a tree, as a value in the Z direction increases, encoded height values in a neighborhood have different features. Therefore, pole-shaped articles such as the street lamp pole and the billboard can be distinguished.

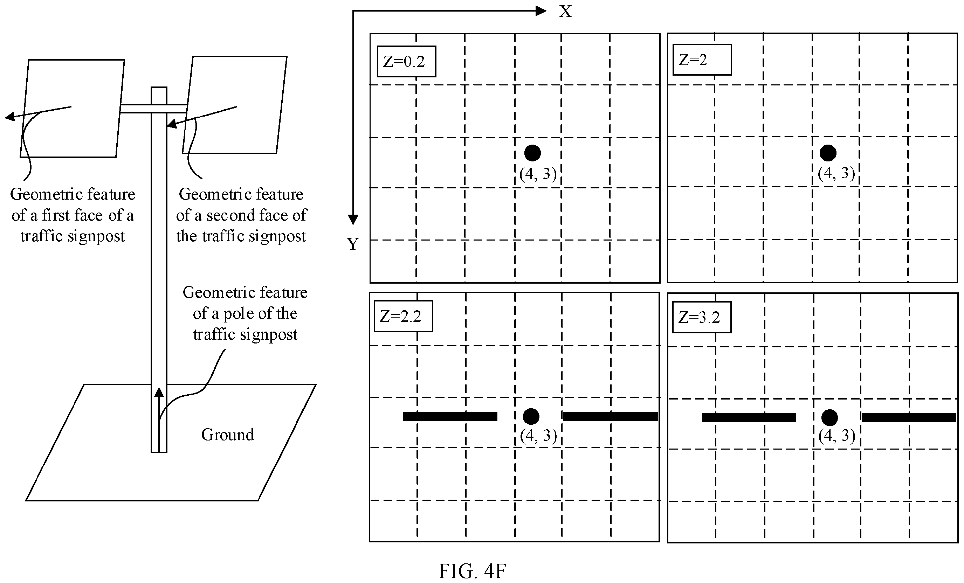

FIG. 4F is a schematic illustrative diagram of a geometric feature of a billboard. Based on a distribution of point cloud data at different heights, it may be identified that an article described by the point cloud is a billboard. Further, for a face of the billboard, a direction vector of a pole of the billboard may be extracted based on a distribution of a plurality of point cloud data that have a height of Z and that is located in a three-dimensional grid (4, 3); for the pole of the billboard, a point cloud in the billboard is extracted based on a profile of point cloud data with a height Z ranging from 2.2 to 3.2, and plane fitting is performed on the point cloud in the billboard, to extract a normal vector of the face of the billboard.

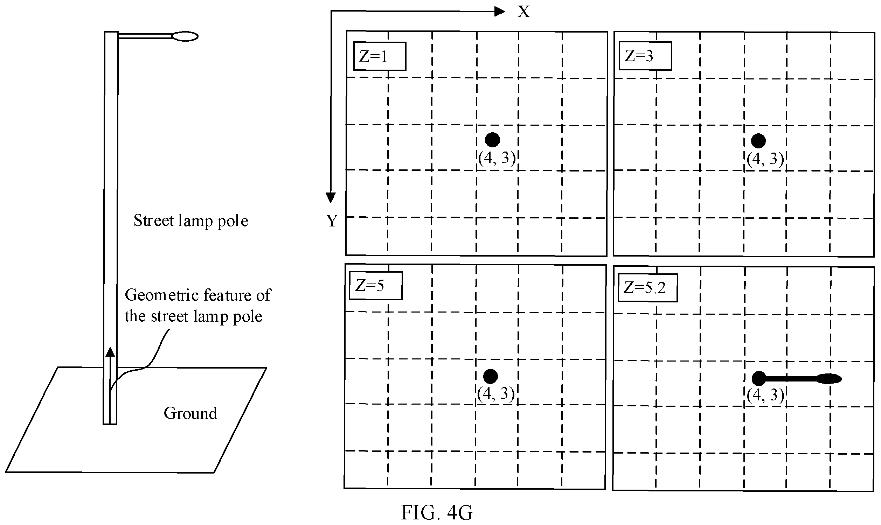

FIG. 4G is a schematic illustrative diagram of a geometric feature of a street lamp pole. Based on a distribution of point cloud data at different heights, it may be identified that an article described by the point cloud is a street lamp pole. Further, based on point cloud data located in a three-dimensional grid (4, 3), a direction vector of the street lamp pole is calculated, a position of the street lamp pole is determined, and the like.

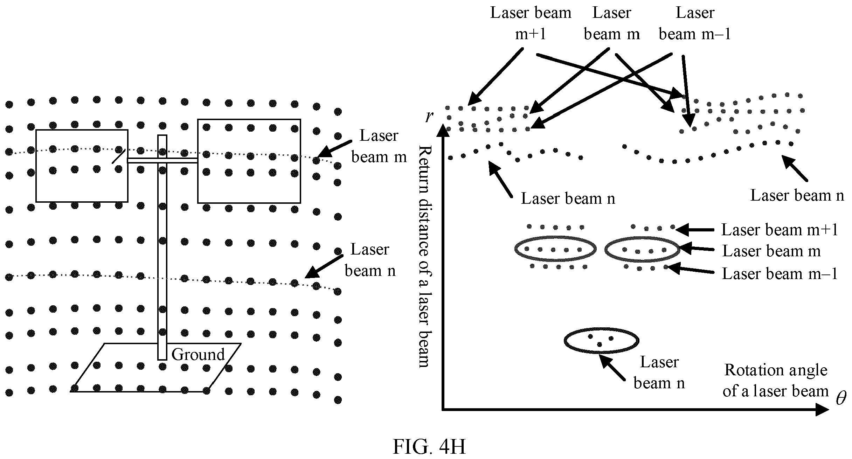

In another embodiment of this application, when a single laser beam of a multi-line laser radar performs scanning around a radar rotation center, a measurement distance is represented in a form of polar coordinates. FIG. 4H is a schematic illustrative diagram of a distance and an angle of a point on a signpost. When a difference between return distances at two adjacent angles of a single laser beam is greater than a distance threshold, it is considered that a boundary of an article is between the two angles, and a measurement point of the article may be obtained through segmentation with reference to a point obtained by an adjacent laser beam. Further, straight line, curve, plane, or curved surface fitting is performed based on the measurement point obtained through segmentation, to obtain a geometric feature of each part of the article.

The foregoing listed embodiments are merely example descriptions for describing an implementation process of the method. In an actual implementation, the foregoing implementations may be combined in different forms, optimized, transformed in various methods, and the like, to achieve an object of extracting a geometric feature.

(4) Outer edge and wall of a building

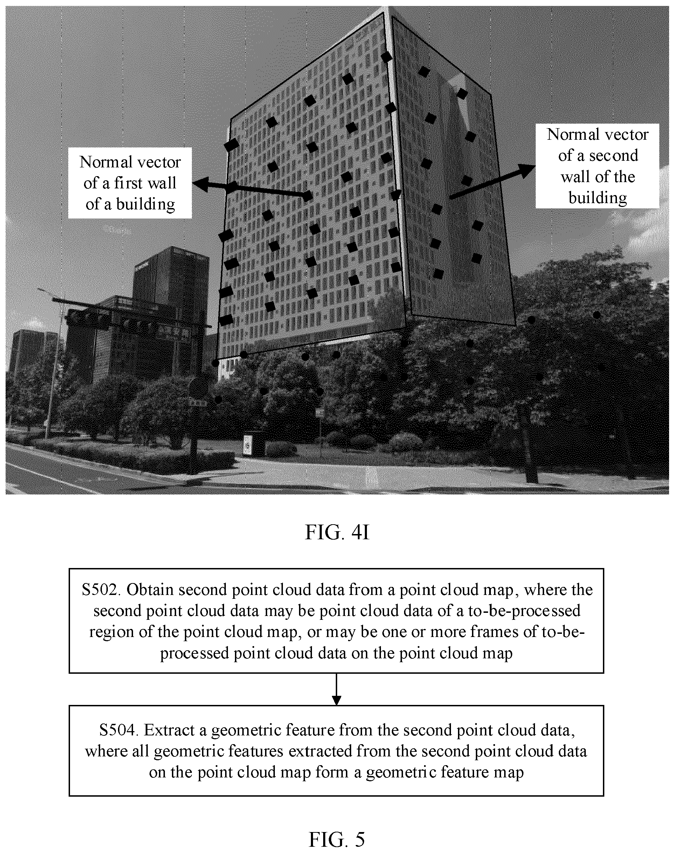

FIG. 4I is a schematic distribution diagram of point cloud data of a building. In the foregoing manner of identifying a pole-shaped article in (3), the vehicle may identify an outer edge (a left edge, a right edge, an upper edge, a lower edge, or the like) of a building, and obtain point cloud data of each outer edge of the building through segmentation, and then determine, in a manner of straight line or curve fitting or the like, that a geometric feature of each outer edge is a geometric feature of a straight line or a curve on which the outer edge is located. In the foregoing manner of identifying a face of a billboard in (3), the vehicle may identify a wall of a building, and then determine, in a manner of plane or curved surface fitting or the like, that a geometric feature of the wall of the building is a geometric feature of a plane or a curved surface on which the wall of the building is located.

It should be understood that, for principles of identifying other objects, segmenting point cloud data of the objects, and generating a geometric feature, reference may be made to related descriptions of the foregoing objects. Details are not described again in this embodiment of this application.

**Embodiment (2)**

This embodiment of this application describes a map generation method. The geometric feature extraction method in Embodiment (1) is applied in the method. The method may be performed by the geometric feature map generation device 140 in FIG. 2. Referring to the geometric map generation method shown in FIG. 5, the method may include but is not limited to the following steps.

S502. Obtain second point cloud data from a point cloud map, where the second point cloud data may be point cloud data in a to-be-processed region of the point cloud map, or may be one or more frames of to-be-processed point cloud data on the point cloud map, or may be point cloud data obtained by performing inter-frame point cloud superposition on a plurality of frames of point cloud data. This is not limited in this embodiment of this application. It should be understood that the geometric feature map generation device may divide point cloud data on the point cloud map based on a region in which the point cloud data is located.

S504. Extract a geometric feature from the second point cloud data, where all geometric features extracted from the second point cloud data on the point cloud map form a geometric feature map.

The geometric features extracted from the second point cloud data are used to generate the geometric feature map. In this case, for a specific implementation, refer to related descriptions of the implementation of extracting the geometric feature from the first point cloud data in Embodiment (1). Details are not described herein again.

Optionally, the geometric feature may further include an attribute, for example, information such as a size and a category to which the geometric feature belongs.

A geometric feature on the geometric feature map may be encoded into various forms of storage formats, for example, an image, an XML file, a text, or a table. The geometric feature map may be stored in the geometric feature map generation device or a database.

For example, the geometric feature map may be stored in a format of an image. Each pixel in the image has a determined position. When the position has a geometric feature, a value of the pixel may be encoded into a vector or a size of the geometric feature, a category to which the geometric feature belongs, or the like.

Optionally, the geometric feature map may further include a position, an address corresponding to the position, a road name corresponding to a geometric feature of a road, and the like. The geometric feature map may be used as a layer of a map (for example, a map such as Google Maps, Baidu Map, Amap, or a point cloud map), or may be independently used as a map. This is not limited.

It can be learned that, on the geometric feature map obtained by using this method, a large amount of point cloud data on an object is replaced with a vector, a position, and an attribute. Compared with an original point cloud map, the geometric feature map occupies smaller storage space, thereby greatly reducing a data storage amount, reducing data calculation complexity in a subsequent vehicle positioning process, and meeting a real-time performance requirement of vehicle positioning.

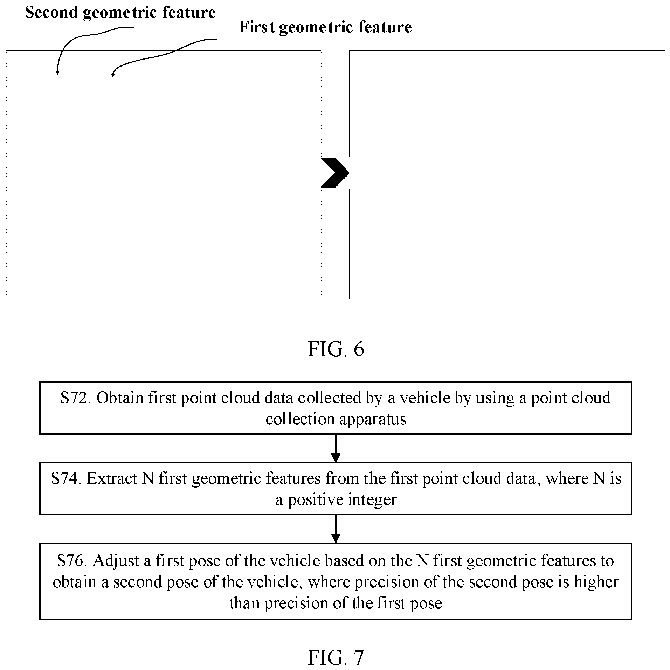

Referring to a schematic diagram of a positioning principle shown in FIG. 6, an object of positioning is to obtain a high-precision position and attitude of a vehicle. As shown in FIG. 6, a first geometric feature (a geometric feature indicated by a dashed line) extracted from first point cloud data collected by the vehicle, and a second geometric feature (a geometric feature indicated by a solid line) that is on the geometric feature map and that matches the first geometric feature are essentially expressions of a same object in different coordinate systems. Because a first pose estimated by the vehicle for a current pose is inaccurate, a first coordinate system determined by the vehicle based on the first pose is different from a second coordinate system (that is, a world coordinate system) on the geometric feature map, and the two coordinate systems need to be rotated and translated to coincide with each other. Theoretically, if the first pose estimated by the vehicle is very precise, the first coordinate system coincides with the second coordinate system, and a collected first geometric feature of an object is the same as a second geometric feature of the object on the geometric feature map, in other words, the first geometric feature coincides with the second geometric feature. Therefore, the first pose of the vehicle may be adjusted based on a difference between the first geometric feature collected by the vehicle and the second geometric feature, to obtain a precise position of the vehicle, namely, a second pose.

The following describes a positioning method in the embodiments of this application. The positioning method may be performed by a positioning device. The positioning device may be a vehicle or a computer system on a vehicle; or may be a terminal that is communicatively connected to a vehicle, for example, a mobile phone or a tablet computer; or may be a positioning chip or a positioning apparatus; or may be a server, a cloud, or the like. In the embodiments of this application, an example in which an execution device is a positioning device is used for description. Positioning methods shown in Embodiment (4), Embodiment (5), and Embodiment (6) may be implemented based on a positioning method shown in Embodiment (3).

**Embodiment (3)**

Referring to a schematic flowchart of a positioning method shown in FIG. 7, the method may include but is not limited to the following steps.

S72. Obtain first point cloud data collected by a vehicle by using a point cloud collection apparatus.

S74. Extract N first geometric features from the first point cloud data, where N is a positive integer.

S76. Adjust a first pose of the vehicle based on the N first geometric features to obtain a second pose of the vehicle, where precision of the second pose is higher than precision of the first pose.

In another implementation of this embodiment of this application, a positioning device may also receive the N first geometric features sent by the vehicle or a terminal, where the N first geometric features are extracted from the first point cloud data collected by the vehicle by using the point cloud collection apparatus.

The foregoing method provides a positioning method. The high-precision second pose can be obtained by correcting the low-precision first pose by using the N first geometric features extracted from the first point cloud data collected by the point cloud collection apparatus. Compared with point cloud data in the prior art, in this embodiment of this application, a geometric feature with a small data volume is used for positioning, to greatly reduce a data operation amount, so that time consumption of vehicle positioning is less, and real-time performance of positioning is good.

An object of this embodiment of this application is to obtain a high-precision position and attitude of the vehicle, that is, the second pose in this embodiment of this application. The precision of the first pose is lower than the precision of the second pose, and the first pose is a low-precision position and attitude of the vehicle, that is, the first pose includes a first position and a first attitude. Before S72, the method may further include S71: Obtain the first pose of the vehicle. A manner of obtaining the first pose of the vehicle may include but is not limited to the following three implementations.

Implementation A:

The positioning device determines the first position of the vehicle by using a positioning system. The positioning system may be a global positioning system (global positioning system, GPS), a BeiDou navigation satellite system (Beidou navigation satellite system, BDS), base station positioning (also referred to as a mobile location based service (location based service, LBS)), an indoor positioning system, or the like.

The first attitude may be a pitch, a yaw, and a roll of the vehicle that are measured by an inertial sensor. The vehicle may determine a first coordinate system based on the first pose, and then describe, in the first coordinate system, the first point cloud data collected by the point cloud collection apparatus. The inertial sensor may include an accelerometer, an angular velocity sensor (for example, a gyroscope), a magnetic sensor, or the like.

Implementation B:

In this implementation, by using the positioning method in this embodiment of this application, the positioning device may enter, into a dynamics equation of the vehicle, a second pose obtained through positioning at a previous moment (k-1), control input of the vehicle, and the like, to predict a first pose of the vehicle at a current moment (k).

Implementation C:

Specifically, the positioning device may determine a first pose of the vehicle at a moment T2 based on a second pose of the vehicle at a moment T1 and a motion trajectory detected by an inertial sensor of the vehicle from the moment T1 to the moment T2, where the moment T2 is a moment at which the point cloud collection apparatus collects the first point cloud data.

It should be understood that, in this embodiment of this application, the obtaining the first pose is not limited to the foregoing three implementations, and may further include another implementation. This is not limited herein.

It should be further understood that, after obtaining the first pose, the vehicle may collect first point cloud data of a current environment by using the point cloud collection apparatus, and then send the collected first point cloud data to the positioning device, so that the positioning device performs S74 after obtaining the first point cloud data, to obtain the N first geometric features. The first point cloud data is information for a point on a surface of an object, that is observed by the vehicle, and that is represented in space determined based on the first pose. Each of the N first geometric features is used to indicate a geometric feature that is of an object and that is observed by the vehicle in the space (also referred to as space described by the first coordinate system) determined based on the first pose. In another implementation of this embodiment of this application, the vehicle may alternatively perform step S74, and then the vehicle sends, to the positioning device, the N first geometric features extracted from the first point cloud data.

It should be further understood that the first coordinate system is a coordinate system (space) determined by the vehicle based on the first pose. Because the precision of the first pose is not high, there is a deviation between the first coordinate system and a world coordinate system.

It should be further understood that collection of the first point cloud data belongs to the prior art. Refer to related descriptions in manners of collecting and generating point cloud data and the like in the prior art. This is not limited herein.

For a specific implementation in which the positioning device extracts the N first geometric features from the first point cloud data, refer to related descriptions in Embodiment (1). Details are not described again in this embodiment of this application. In this embodiment of this application, an example in which the N first geometric features are extracted from the first point cloud data is used for description. N is a positive integer greater than 1, and the N first geometric features may be expressed as $V=\{V_1, V_2, L\ V_N\}$

In an implementation of this embodiment of this application, before S76, the method may further include the following step.

S75. Search a geometric feature map for N second geometric features matching the N first geometric features, where the first geometric features are in a one-to-one correspondence with the second geometric features. It should be understood that the geometric feature map may include a geometric feature of an object described in the world coordinate system. Then the positioning device may adjust the first pose based on the N first geometric features observed by the vehicle and the N second geometric features on the geometric feature map, to obtain the second pose.

The geometric feature map includes a geometric feature in each region of the map. In an implementation, the positioning device caches the geometric feature map. To improve matching efficiency, the positioning device may search a first region of the geometric feature map for the N second geometric features matching the N first geometric features, for example, a first geometric feature and a second geometric feature shown in FIG. 6. The first region may be a region determined based on the first pose. The first region may be larger than a scan range of the point cloud collection apparatus of the vehicle. In another implementation, the positioning device may request to obtain a geometric feature in the first region of the geometric feature map from a geometric feature map generation device or a geometric feature map generation device. This is not limited.

An implementation of determining the first region may be as follows: The positioning device may determine, based on the first position and a road at the first position, different scenarios in which the vehicle is located at the first position, for example, a road intersection or a plurality of layers of roads, and delimit the first region in different manners. Main implementations are as follows.

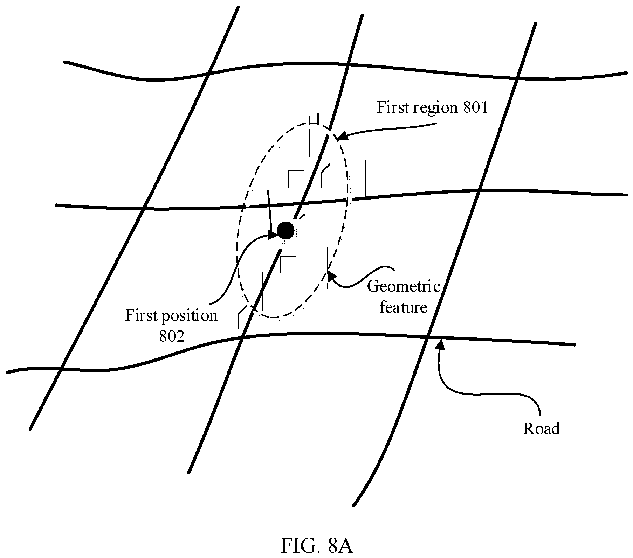

Referring to a schematic illustrative diagram of the first region in FIG. 8A, if the first position is in a non-intersection region on a road, the first region may be an elliptic region 801 shown in FIG. 8A, and the first position 802 is in the elliptical region 801. It can be understood that the first region may be a spherical region or a circular region determined by using the first position as a center and using a first length as a radius; or may be a cuboid region or a rectangular region determined by using the first position as a center; or may be a detection range of the point cloud collection apparatus when the point cloud collection apparatus is at the first position.

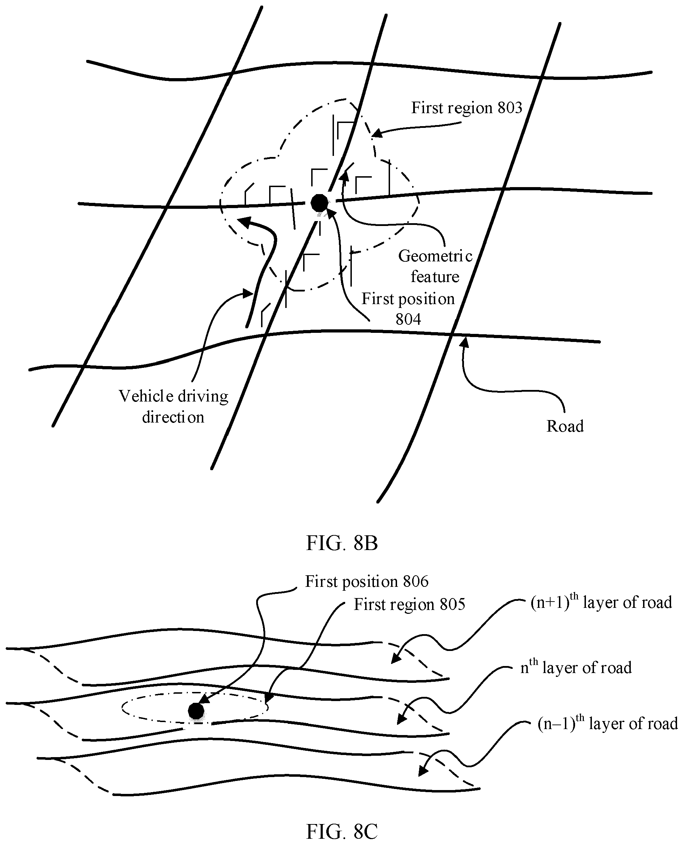

Referring to a schematic illustrative diagram of the first region in FIG. 8B, if the first position is at a road intersection, for example, an intersection of a first road and a second road, the first region may be a region 803 shown in FIG. 8B, and the first position 804 is in the region 803. In this case, because the first pose is inaccurate, the first region needs to include an object on each road, to avoid a case in which the first region, obtained through division, of the geometric feature map cannot completely cover an object described by the N first geometric features.

Referring to a schematic illustrative diagram of the first region in FIG. 8C, if there are a plurality of layers of roads at the first position 806, the first region may be a region 805 shown in FIG. 8C. In an implementation, the positioning device may first determine a road layer at which the vehicle is located, and then determine the first region 805. The positioning device may determine a road on which the vehicle is located, based on a destination to which the vehicle is to arrive based on navigation, a pose and a motion path that are obtained by positioning the vehicle at a previous moment, a height in the first pose, and the like. Then the first region may be determined by using the method shown in 8A or 8B.

After the first region is determined, a geometric feature in the first region of the geometric feature map may be matched against the N first geometric features extracted from the collected first point cloud data, to obtain the N second geometric features matching the N first geometric features. The first geometric features are matching in one-to-one correspondence with the second geometric features. In this embodiment of this application, an example in which the first region includes M geometric features and the positioning device extracts the N first geometric features from the collected first point cloud data is used for description, where M and N are positive integers, and M ≥ N. A matching process may include but is not limited to the following three implementations.

Implementation 1:

The positioning device may match a first geometric feature against the M geometric features one by one, and a geometric feature in the M geometric features that has a smallest deviation from the first geometric feature is a second geometric feature matching the first geometric feature (also referred to as a second geometric feature corresponding to the first geometric feature in this application).

Specifically, for a first geometric feature Vi, the positioning device calculates a deviation between the first geometric feature Vi and each geometric feature in the first region, and one of the geometric features in the first region that has a smallest deviation from the first geometric feature $V_i$ is a second geometric feature $U_i$ matching the first geometric feature $V_i$, where i = 1, 2, ..., N.

For a vector in a geometric feature, a deviation between the first geometric feature $V_i$ and the second geometric

feature $U_i$ may be an included angle between a vector in the first geometric feature $V_i$ and a vector in the second geometric feature $U_i$. For a coordinate point in a geometric feature, a deviation between the first geometric feature $V_i$ and the second geometric feature $U_i$ may be a distance between a coordinate point in the first geometric feature $V_i$ and a coordinate point in the second geometric feature $U_i$.

It should be understood that, for an object whose surface is a curve or a curved surface, a geometric feature of the object may include a plurality of vectors and a set of coordinate points that are in a one-to-one correspondence with the vectors, or include a set of a plurality of coordinate points. In this case, when a deviation between geometric features of two curves or a deviation between geometric features of two curved surfaces is calculated, the calculation should be performed by using a plurality of vectors including coordinate points or a plurality of coordinate points as a whole.

It should be understood that, when a geometric feature includes both a vector and a coordinate point, only an included angle between vectors may be considered in a matching process, or only a distance between two coordinate points may be considered, or both an included angle and a distance may be considered.

Implementation 2:

To reduce calculations and accelerate a matching process, the positioning device may implement matching by using an attribute of a geometric feature. In a specific implementation, for a first geometric feature $V_i$, the positioning device selects, from geometric features (that is, the M geometric features) in the first region, a geometric feature matching an attribute of the first geometric feature $V_i$ as a second geometric feature $U_i$ matching the first geometric feature $V_i$, where i = 1,2, ..., N.

Matching of the attributes of two geometric features includes that an error between sizes of the two geometric features is less than a first threshold, categories of objects to which the two geometric features belong are the same, and the like. For example, an error between lengths of the two geometric features is less than 0.01 m. For another example, the categories of the objects to which the two geometric features belong are both traffic poles.

Implementation 3:

The positioning device may implement matching by combining an attribute of a geometric feature and the geometric feature. In a specific implementation, for a first geometric feature $V_i$, the positioning device may select, from geometric features (that is, the M geometric features) in the first region, a geometric feature matching an attribute of the first geometric feature $V_i$. If a plurality of geometric features are selected, a second geometric feature $U_i$ matching the first geometric feature $V_i$ may be further determined in the selected geometric features in another manner. For example, a deviation between the first geometric feature $V_i$ and each of the selected geometric features is calculated, and a geometric feature in the selected geometric features that has a smallest deviation from the first geometric feature $V_i$ is selected as the second geometric feature $U_i$ matching the first geometric feature $V_i$, where i = 1,2,...,N.

For related descriptions of matching of attributes of two geometric features and a deviation between two geometric features, refer to related descriptions in the implementation 1 and the implementation 2 respectively. Details are not described herein again.

It should be noted that, alternatively, the positioning device may first select one of the geometric features in the first region whose deviation from the first geometric feature $V_i$ is less than a second threshold; and if a plurality of geometric features are selected, may further determine, through comparison, whether attributes of two geometric features match, to determine, in the selected geometric features, the second geometric feature $U_i$ matching the first geometric feature $V_i$. For a specific implementation, refer to related descriptions in the implementation 3. Details are not described herein again.

It should be further noted that the positioning device may select different matching implementations depending on different categories to which first geometric features belong.

For example, for a first geometric feature that belongs to a category of a straight line type such as a tree trunk, a traffic pole, or an outer edge of a building, or for a category of a building plane, a wall, or a column plane, an included angle between a vector of the first geometric feature and a vector of each of the geometric features in the first region may be calculated. Then one of the geometric features in the first region that has a smallest included angle with the first geometric feature is a second geometric feature matching the first geometric feature.

It should be understood that the positioning device obtains the first position in real time, loads the geometric features in the first region in real time, and matches the geometric features in the first region against the N first geometric features.

In this embodiment of this application, the N first geometric features are used as examples for description. The N first geometric features may be N first geometric features selected by the positioning device from all geometric features extracted from the first point cloud data collected by the point cloud collection apparatus, or may be all geometric features extracted from the first point cloud data collected by the point cloud collection apparatus. It may be assumed that a set of the N first geometric features is expressed as $V=\{V_1, V_2, L\ V_N\}$, and a set of the second geometric features on the geometric feature map is expressed as $U=\{U_1, U_2, L\ U_N\}$, where a first geometric feature $V_i$ corresponds to a second geometric feature $U_i$. Specific implementations of S76 may include but are not limited to five positioning manners described in Embodiment (4), Embodiment (5), and Embodiment (6).

### Embodiment (4)

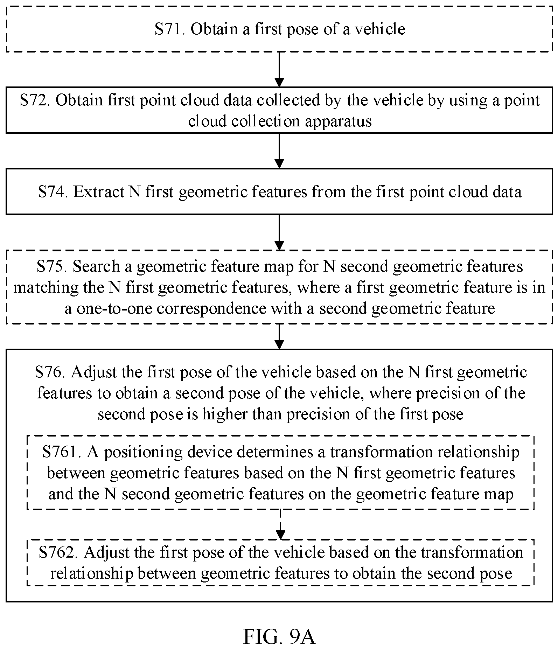

FIG. 9A is a schematic flowchart of a positioning method according to an embodiment of this application. In the positioning method, an implementation of S76 may include the following steps.

S761. A positioning device determines a transformation relationship between geometric features based on the N first geometric features and N second geometric features on a geometric feature map.

S762. Adjust the first pose of the vehicle based on the transformation relationship between geometric features to obtain the second pose.

In the foregoing method, the high-precision second pose can be obtained by correcting the low-precision first pose by using a transformation relationship between an observed first geometric feature and a second geometric feature on the geometric feature map. Compared with point cloud data in the prior art, in this embodiment of this application, a geometric feature with a small data volume is used for positioning, to greatly reduce a data operation amount, so that time consumption of vehicle positioning is less, and real-time performance of positioning is good.

First positioning manner:

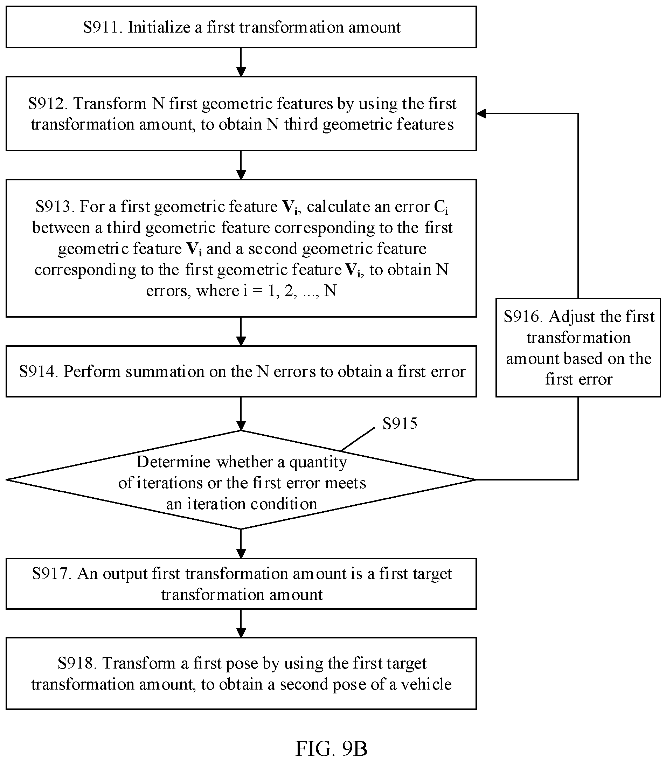

A positioning principle of the first positioning manner is as follows: The first pose (that is, an estimated pose) of the vehicle is transformed by using a transformation relationship (also referred to as a target transformation amount in this embodiment of this application) between a first coordinate system determined based on a current first pose of the vehicle and a second coordinate system used on the geometric feature map, to obtain the second pose of the vehicle, that is, an accurate pose of the vehicle. The target transformation amount between the first coordinate system and the second coordinate system means that the first coordinate system needs to be rotated and translated to be transformed into the second coordinate system. The rotation and the translation may be obtained by calculating a rotation and a translation between a first geometric feature and a second geometric feature corresponding to the first geometric feature. For different first geometric features, rotations and translations between the first geometric features and second geometric features corresponding to the first geometric features may be different. Therefore, to position the vehicle more precisely, the positioning device may separately perform rotation $R$ and translation $t$ on the N first geometric features extracted from collected point cloud data, to obtain N third geometric features, so that a transformation amount including a rotation $R$ and a translation $t$ that minimize an error (that is, a first error) between the N third geometric features and the N second geometric features is an inverse of the target transformation amount, where N is a positive integer greater than 1. As shown in FIG. 9B, a specific implementation of the first positioning manner may include but is not limited to some or all of the following steps.

S911. Initialize a first transformation amount.

S912. Transform the N first geometric features by using the first transformation amount, to obtain the N third geometric features, where the third geometric features are in a one-to-one correspondence with the first geometric features.

S913. For a first geometric feature $V_i$, calculate an error between a third geometric feature corresponding to the first geometric feature $V_i$ and a second geometric feature corresponding to the first geometric feature $V_i$, to obtain N errors, where i = 1, 2, ..., N.

S914. Perform summation on the N errors to obtain the first error, where the first error is obtained by performing direct summation or weighted summation on the N errors.

S915. Determine whether a quantity of iterations or the first error meets an iteration stop condition.

In a specific implementation of S915, the positioning device may determine whether the quantity of iterations is equal to a preset quantity of times, where the preset quantity of times may be 4, 5, 10, 30, or another value; and if the quantity of iterations is equal to the preset quantity of times, perform S916; otherwise, perform S917.

In another specific implementation of S915, the positioning device may determine whether the first error converges; and if the first error converges, perform S916; otherwise, perform S917.

It should be understood that this embodiment of this application may further include another implementation, for example, determining whether the first error is less than a preset value, for example, 0.1, 0.2, or another value. This is not limited.

S916. Adjust the first transformation amount based on the first error.

After S916, the positioning device repeatedly performs S912 to S915 until the quantity of iterations or the first error meets the iteration stop condition.

S917. Output a first transformation amount **T,** where the first transformation amount is a first target transformation amount.

S918. Transform the first pose **S1** by using the first target transformation amount **T**, to obtain the second pose

S2 of the vehicle. This may be expressed by using a mathematical relationship: **S2 = TS1,** where $\mathbf{T} = \begin{bmatrix} \mathbf{R} & t \\ 0 & 1 \end{bmatrix}$.

"An error (that is, the first error) between a third geometric feature corresponding to a first geometric feature and a second geometric feature corresponding to the first geometric feature" may be calculated by using a first target function. A larger output value of the first target function indicates a larger error. A process of adjusting an initial transformation amount is a process of reducing the first error as much as possible. It should be understood that, in a first adjustment process of the first transformation amount, the first transformation amount is an initialized rotation amount and translation amount that are preset by a positioning system. The first error becomes increasingly small through a plurality of iterations and adjustments, and a transformation amount that minimizes the first error is the first target transformation amount. It should be further understood that, in another implementation of this embodiment of this application, the first target transformation amount may be alternatively a transformation amount obtained through a preset quantity of adjustments.

In an implementation of this embodiment of this application, the first target function may be constructed, and the first target function may include but is not limited to the following three forms.

First form of the first target function:

The positioning device may determine the first error based on the first target function, where the first target function may be as follows:

$$\varepsilon = \sum_{i=1}^{i=N} w_i \left\| \left( \mathbf{R} \mathbf{V}_i + \mathbf{t} \right) - \mathbf{U}_i \right\|^2 \tag{1}$$

where $\varepsilon$ is the first error, the first transformation amount includes a rotation **R** and a translation **t**, $w_i$ is a weight of a first geometric feature **V**$_i$, **U**$_i$ is a second geometric feature corresponding to the first geometric feature **V**$_i$, i is an index of a first geometric feature in the N first geometric features, i is a positive integer, and i ≤ N.

Second form of the first target function:

In an implementation, a first geometric feature may include only a vector, for example, a direction vector of a straight line, a normal vector of a plane, a normal vector of a curve, or a normal vector of a curved surface. In this case, the first geometric feature is **V**$_i$=**V**$_i$, where **V**$_i$ is a vector of the first geometric feature **V**$_i$. In this case, the first target function may be expressed as follows:

$$\varepsilon = \sum_{i=1}^{i=N} w_i \left\| \left( \mathbf{R} \mathbf{v}_i + \mathbf{t} \right) - \mathbf{u}_i \right\|^2 \tag{2}$$

where a rotation **R** and a translation **t** are the first transformation amount, and are variables, i is an index of a first geometric feature in the N first geometric features, i is a positive integer, and i ≤ N. In this embodiment of this application, a value of the first target function is continuously calculated by adjusting the rotation **R** and the translation t, and a rotation **R** and a translation **t** that minimize the first target function are the first target transformation amount. In another implementation of this embodiment, the rotation **R** and the translation **t** that minimize the first target function may be alternatively obtained by using a method such as factorization. This is not limited in this embodiment of this application. In this embodiment of this application, (**Rv**$_i$+t) is a third geometric feature obtained by transforming a vector **u**$_i$ of the second geometric feature **U**$_i$ by using the initial transformation amount.

In the first and second forms of the first target function, $w_i$ is the weight of the first geometric feature **V**$_i$, and is used to limit a contribution of the first geometric feature **V**$_i$ to the first target transformation amount. A weight of a first geometric feature may be determined based on a distance between the first geometric feature and the vehicle or a point cloud collection apparatus on the vehicle. For example, the weight $w_i$ of the first geometric feature **V**$_i$ is negatively correlated with a distance between the vehicle and an object to which the first geometric feature **V**$_i$ belongs, in other

words, a first geometric feature closer to the point cloud collection apparatus or the vehicle has a larger weight.

In the first and second forms of the first target function, a weight of a first geometric feature may be alternatively determined based on a type of an object corresponding to the first geometric feature, that is, different weights may be set for different objects. For example, for a building plane, an obtained normal vector of the building plane has high precision, and a first geometric feature corresponding to the building plane may have a larger weight. For another example, for a tree trunk, a direction vector of a straight line corresponding to the tree trunk has comparatively low precision, and a first geometric feature corresponding to the tree trunk may have a comparatively small weight. It should be understood that, in this embodiment of this application, not limited to the foregoing weight setting manners, a weight may be alternatively set in another setting manner. For example, a distance of a first geometric feature and a type of an object corresponding to the first geometric feature are comprehensively considered. For another example, in this embodiment of this application, a weight may alternatively not be included. To be specific, a weight of any first geometric feature is 1. This is not limited herein.

Third form of the first target function:

In an implementation, a first geometric feature may include a vector and a position. In this case, the first target function may be expressed as follows:

$$\varepsilon = \sum_{i=1}^{i=N} \left( w_i \left\| (\mathbf{R}\mathbf{v}_i + \mathbf{t}) - \mathbf{u}_i \right\|^2 + w_i^* \left\| (\mathbf{R}\mathbf{G}_{1,j} + \mathbf{t}) - \mathbf{G}_{2,i} \right\|^2 \right) \tag{3}$$

where $\mathbf{G}_{1,j}$ is a position of the first geometric feature $\mathbf{V}_i$; $\mathbf{G}_{2,i}$ is a position of the second geometric feature $\mathbf{U}_i$; $w_i$ is a weight of a vector $\mathbf{v}_i$ of the first geometric feature $\mathbf{V}_i$, where for details, refer to related descriptions in the first form of the first target function, and details are not described herein again; and $w_i^*$ is a weight of the position $\mathbf{G}_{1,j}$ of the first geometric feature $\mathbf{V}_i$, and is used to limit a contribution of the position $\mathbf{G}_{1,j}$ of the first geometric feature $\mathbf{V}_i$ to the first target transformation amount. A weight of a position of a first geometric feature may be determined based on a type of a corresponding object, that is, different weights may be set for different objects. For example, for a traffic pole, a position of the traffic pole may be precisely determined according to a position setting rule, and a position of a geometric feature of the traffic pole has a comparatively large weight, for example, 1. For another example, for a curb, a precise position can be hardly defined, and a position of a geometric feature of the curb has a comparatively small weight, for example, 0.

It should be understood that, in this embodiment of this application, not limited to the foregoing setting manner of the weight $w_i^*$, the weight $w_i^*$ may be alternatively set in another setting manner. For example, a distance of the first geometric feature $\mathbf{V}_i$ and a type of an object corresponding to the first geometric feature $\mathbf{V}_i$ are comprehensively considered to set $w_i^*$. This is not limited in this embodiment of this application.

Second positioning manner:

In the first positioning manner, the transformation relationship is described by using an example in which a first geometric feature is transformed into a second geometric feature on the geometric feature map. It should be understood that the transformation relationship may be alternatively transforming a second geometric feature on the geometric feature map into a first geometric feature.

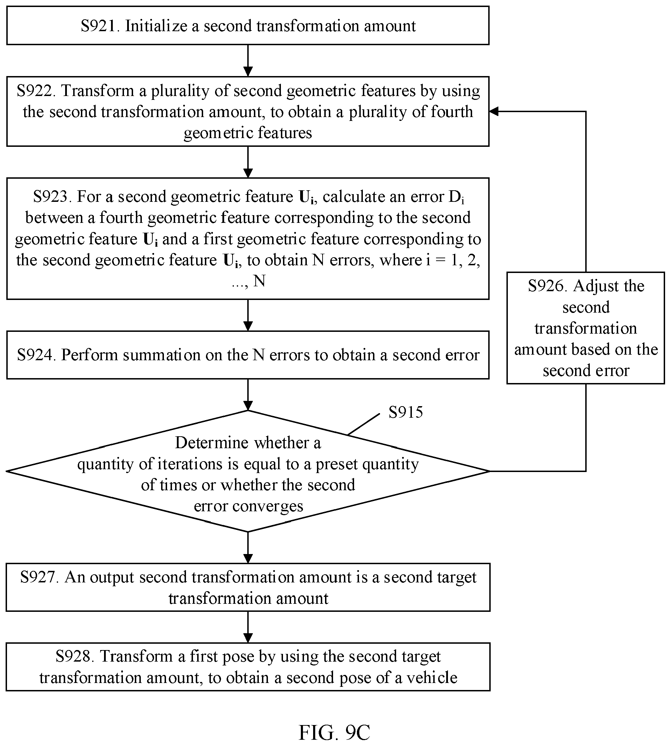

A positioning principle of the second positioning manner is similar to that of the first positioning manner, and a difference lies in a calculation method for the transformation relationship. In the second positioning manner, the positioning device may separately perform rotation $\mathbf{R}$ and translation $\mathbf{t}$ on the N second geometric features to obtain N fourth geometric features, and a rotation $\mathbf{R'}$ and a translation $\mathbf{t'}$ that minimize an error between the N fourth geometric features and the N first geometric features extracted from collected point cloud data are an inverse matrix of a target transformation amount T, where N is a positive integer greater than 1. As shown in FIG. 9C, a specific implementation of the second positioning manner may include but is not limited to some or all of the following steps.

S921. Initialize a second transformation amount.

S922. Transform a plurality of second geometric features by using the second transformation amount, to obtain a plurality of fourth geometric features, where the fourth geometric features are in a one-to-one correspondence with the second geometric features.

S923. For a second geometric feature $U_i$, calculate an error between a fourth geometric feature corresponding to the second geometric feature $U_i$ and a first geometric feature corresponding to the second geometric feature $U_i$, to obtain N errors, where i = 1, 2, ..., N.

S924. Perform summation on the N errors to obtain a second error, where the second error is obtained by performing direct summation or weighted summation on the N errors.

S925. Determine whether a quantity of iterations or the second error meets an iteration stop condition. For a specific implementation, refer to related descriptions in S914. When a determining result is yes, S926 is performed; otherwise, S927 is performed.

S926. Adjust the second transformation amount based on the second error.

After S926, the positioning device repeatedly performs S922 to S925 until the quantity of iterations or the error meets the iteration stop condition.

S927. Output a second transformation amount, where an inverse matrix of the output second transformation amount is a second target transformation amount.

S928. Transform the first pose **S1** by using the second target transformation amount **T'**, to obtain the second

$$\mathbf{T}' = \begin{bmatrix} \mathbf{R}' & \mathbf{t}' \\ 0 & 0 \end{bmatrix}^{-1}$$

pose **S2** of the vehicle. This may be expressed by using a mathematical relationship: **S2=TS1**, where                                      .

For specific implementations of S921 to S928, refer to related descriptions in the first positioning manner. Details are not described herein again.

Likewise, a second target function may be constructed to calculate the second error. Similar to the first form of the first target function, the second target function may be expressed as follows:

$$\varepsilon = \sum_{i=1}^{i=N} w_i \left\| \left( \mathbf{R}' \mathbf{u}_i + \mathbf{t}' \right) - \mathbf{v}_i \right\|^2 \tag{4}$$

Similar to the second form of the first target function, the second target function may be expressed as follows:

$$\varepsilon = \sum_{i=1}^{i=N} \left( w_i \left\| \left( \mathbf{R}' \mathbf{u}_i + \mathbf{t}' \right) - \mathbf{v}_i \right\|^2 + w_i^* \left\| \left( \mathbf{R}' \mathbf{G}_{2i} + \mathbf{t}' \right) - \mathbf{G}_{1,i} \right\|^2 \right) \tag{5}$$

For related descriptions of $w_i$, $w_i^*$, $\mathbf{u}_i$, $\mathbf{v}_i$, $\mathbf{G}_{1,i}$, $G_{2,i}$, and i, refer to related descriptions in the first positioning manner. Details are not described herein again.

It should be understood that, not limited to the foregoing two forms of the first target function or the second target function, the first target function or the second target function may further include another form, and an error may be alternatively a mean absolute error (mean absolute error, MAE), a mean squared error (mean squared error, MSE), a root mean square error (root mean squared error, RMSE), another form, or the like. This is not limited in this application.

It should be further understood that a process of calculating a target transformation amount is solving minimization of the first target function or the second target function, and a method for solving minimization of a target function may include but is not limited to a Gauss-Newton method, a gradient descent method, an L-M (Levenberg-Marquardt) method, QR decomposition, or another solving method.

**Embodiment (5)**

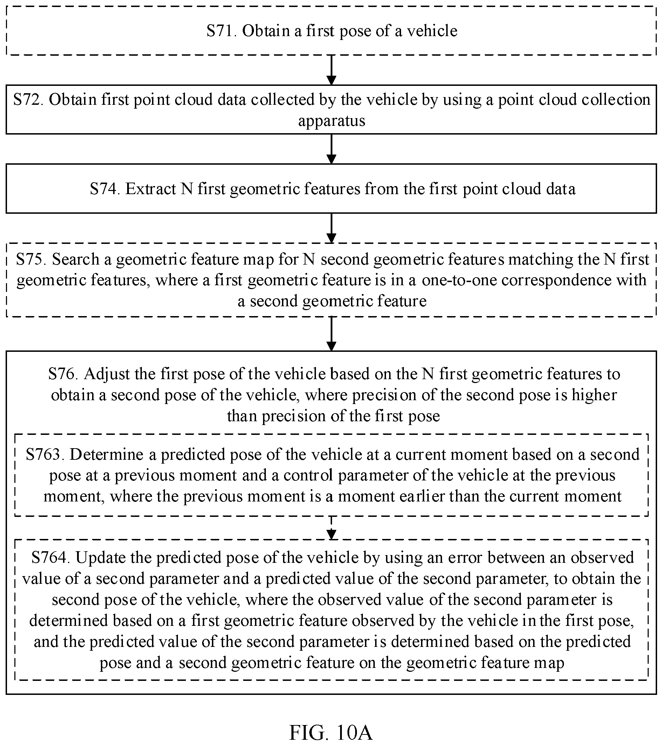

Referring to a schematic flowchart of a positioning method shown in FIG. 10A, in addition to S72, S74, and S76, the method may further include S71 and S75. For details, refer to related descriptions in Embodiment (3). S76 may include but is not limited to the following steps.

S763. Determine a predicted pose of the vehicle at a current moment based on a second pose at a previous moment and a control parameter of the vehicle at the previous moment, where the previous moment is a moment earlier than the current moment.

S764. Update the predicted pose of the vehicle by using an error between an observed value of a second parameter and a predicted value of the second parameter, to obtain the second pose of the vehicle.

The observed value of the second parameter is determined based on a first geometric feature observed by the vehicle in a first pose, and the predicted value of the second parameter is determined based on the predicted pose and a second geometric feature on a geometric feature map.

It should be understood that the first pose may be the predicted pose at the current moment, or may be a pose that is of the vehicle at the current moment and that is obtained through positioning by using another method. For example, the positioning device determines a first position of the vehicle based on a positioning system, and determines a first attitude of the vehicle based on an inertial sensor, where the first pose includes the first position and the first attitude.

In an implementation of this embodiment of this application, before S764, the positioning device may further obtain N first geometric features observed by the vehicle, where a first geometric feature is used to represent, in space determined based on the first pose, a geometric feature that is of an object and that is observed by the vehicle, and N is a positive integer; search the geometric feature map for N second geometric features matching the N first geometric features, where the first geometric features are in a one-to-one correspondence with the second geometric features; and then determine the error between the observed value of the second parameter and the predicted value of the second parameter based on the first pose, the predicted pose, the N first geometric features, and the N second geometric features.

It should be understood that, for a specific implementation in which the positioning device obtains the N first geometric features, reference may be made to related descriptions in Embodiment (3); and for a specific implementation in which the positioning device searches the geometric feature map for the N second geometric features matching the N first geometric features, reference may be made to related descriptions of step S75 and the three implementations of the matching process in Embodiment (3). Details are not described herein again.

Embodiment (5) provides a vehicle positioning method. An estimated pose is scored by using an observed first geometric feature and a second geometric feature on the geometric feature map, and an estimated pose with a highest score is determined as an actual pose of the vehicle. Compared with point cloud data in the prior art, in this embodiment of this application, a geometric feature with a small data volume is used for positioning, to greatly reduce a data operation amount, so that time consumption of vehicle positioning is less, and real-time performance of positioning is good.

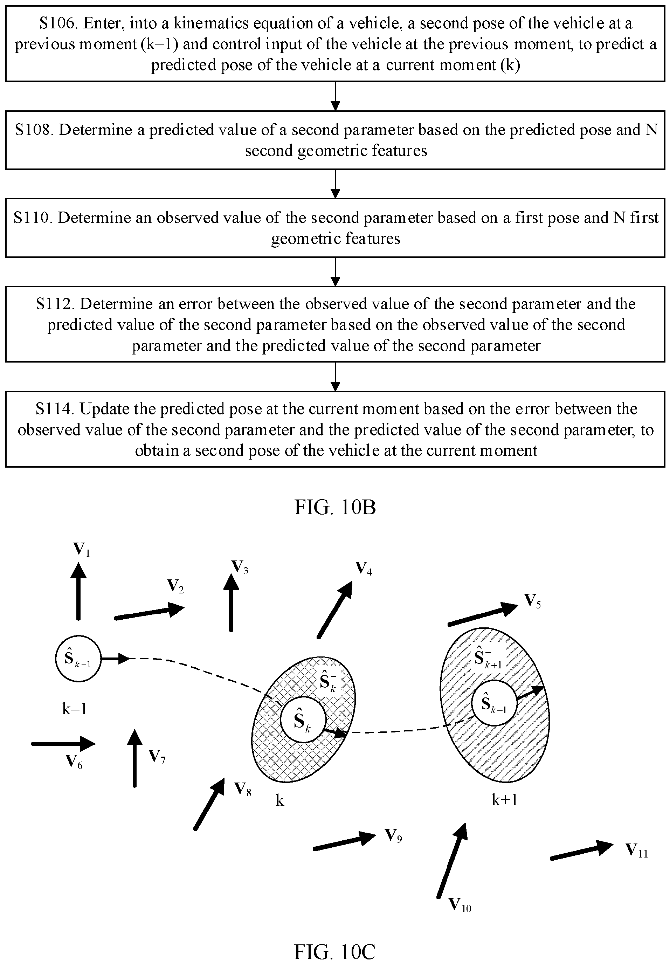

In step S76, the second pose of the vehicle may be specifically calculated by using a Kalman filter method. FIG. 10B is a schematic flowchart of a third positioning manner, and FIG. 10C is a schematic illustrative diagram of the third positioning manner. A third positioning implementation includes a Kalman prediction process and a Kalman update process. The third positioning implementation includes but is not limited to the following steps.

S102. Enter, into a kinematics equation of the vehicle, the second pose $\hat{S}_{k-1}$ of the vehicle at the previous moment (k-1) and control input $a_k$ of the vehicle at the previous moment, to predict the predicted pose $\hat{S}_k^-$ of the vehicle at the current moment (k), where k is a positive integer greater than 1.

It should be understood that S102 is a Kalman prediction process, and may be an implementation of S71. In this case, the first pose is the predicted pose. In this embodiment of this application, a status of the vehicle may be obtained based on a dynamics equation (that is, a motion equation in this embodiment of this application) of the vehicle. In this embodiment of this application, the status of the vehicle is a pose, including a position and an attitude. In an implementation of this application,

$$\hat{S}_k^- = \begin{bmatrix} \hat{x}_k^- \\ \hat{y}_k^- \\ \hat{\theta}_k^- \end{bmatrix}$$ is used as an example for description. In this embodiment of this application, the position of the vehicle is represented by using two-dimensional coordinates $(\hat{x}_k^-, \hat{y}_k^-)$, and a yaw of the vehicle is represented by using a yaw $\hat{\theta}_k^-$. In another implementation of this application, the position of the vehicle may be alternatively represented by using three-dimensional coordinates, and the attitude of the vehicle is represented by using three angles (a pitch, a yaw, and a roll). This is not limited in this embodiment of this application. The pose is predicted by using the motion equation of the vehicle. The motion equation (that is, a prediction equation in this embodiment of this application) of the vehicle may be expressed as follows:

$$\hat{S}_k^- = f(\hat{S}_{k-1}, a_k) = A_k \hat{S}_{k-1} + B_k a_k + \omega_k \qquad (6)$$

where $\mathbf{A}_k$ is a state transfer matrix at the current moment; $\mathbf{B}_k$ is a control input matrix at the current moment; $\mathbf{a}_k$ is the control input of the vehicle, for example, an acceleration or steering; and $\omega_k$ is a state noise, where a mean of $\omega_k$ is 0, and a covariance matrix is $\mathbf{Q}_k$.

A covariance matrix $\hat{\mathbf{P}}_k^-$ at the current moment (k) is predicted based on a covariance matrix $\hat{P}_{k-1}$ at the previous moment (k-1):

$$\hat{\mathbf{P}}_k^- = \mathbf{A}_k \hat{\mathbf{P}}_{k-1} \mathbf{A}_k^T + \mathbf{Q}_k \qquad (7)$$

S104. Determine the predicted value $\hat{Z}_k$ of the second parameter based on the predicted pose $\hat{\mathbf{S}}_k^-$ and the N second geometric features.

Specifically, the predicted pose $\hat{\mathbf{S}}_k^-$ and the N second geometric features may be entered into an observation equation, to obtain the predicted value of the second parameter at the current moment (k).

The observation equation is an equation based on the second parameter, and the second parameter may be at least one of a distance, an azimuth, an elevation, and the like of an object described by a first geometric feature relative to the vehicle. The predicted value of the second parameter is a second parameter for each of the N second geometric features relative to the vehicle in the predicted pose. The observed value of the second parameter is a second parameter for each of the N first geometric features relative to the vehicle in the first pose. In this embodiment of this application, an example in which the second parameter is a distance and an azimuth of an object described by a first geometric feature relative to the vehicle is used for description. It should be understood that another second parameter and another observation equation may be alternatively constructed by using Kalman filter. It should be understood that an object described by a first geometric feature and an object described by a second geometric feature corresponding to the first geometric feature are a same object.

For a geometric feature described by a position point, the second parameter may be a distance and an azimuth of the position point relative to the vehicle. If the N first geometric features include a position of an object, or are represented by using a plurality of coordinate points, the predicted value of the second parameter at the current moment (k) may be expressed as $\hat{\mathbf{Z}}_k = \begin{bmatrix} \hat{\mathbf{Z}}_{k,1}^T & \hat{\mathbf{Z}}_{k,2}^T & \dots & \hat{\mathbf{Z}}_{k,N}^T \end{bmatrix}^T$, where a predicted value $\hat{Z}_{k,i}$ of a second parameter for a first geometric feature Vi relative to the vehicle in the predicted pose, that is, a second parameter corresponding to the first geometric feature Vi, is as follows:

$$\hat{\mathbf{Z}}_{k,i} = h(\mathbf{G}_{2,i}, \hat{\mathbf{S}}_k^-) = \begin{bmatrix} \sqrt{\left(x_{2,i} - \hat{x}_k^-\right)^2 + \left(y_{2,i} - \hat{y}_k^-\right)^2} \\ arc\tan\left(\dfrac{y_{2,i} - \hat{y}_k^-}{x_{2,i} - \hat{x}_k^-}\right) - \hat{\theta}_k^- \end{bmatrix} + \sigma(k) \qquad (8)$$

where $\mathbf{G}_{2,i} = [x_{2,i}, y_{2,i}]$ represents a coordinate point in a second geometric feature Ui. In this embodiment of this application, two-dimensional coordinates are used as examples for description. It should be understood that, in another implementation of this application, $\mathbf{G}_{2,i}$ may be alternatively represented by using three-dimensional coordinates, that is, $\mathbf{G}_{2,i} = [x_{2,i}, y_{2,i}, z_{2,i}]$. This is not limited in this embodiment of this application.

For a geometric feature described by a vector, the second parameter may be a distance, an azimuth, and an elevation of the vector relative to the vehicle. If the N first geometric features include a direction of an object, that is, are represented by using a direction vector, the predicted value of the second parameter at the current moment (k) may be expressed as $\hat{\mathbf{Z}}_k = [\hat{\mathbf{Z}}_{k,1}^T \hat{\mathbf{Z}}_{k,2}^T \dots \hat{\mathbf{Z}}_{k,N}^T]^T$. In this case, a predicted value $\hat{\mathbf{Z}}_{k,i}$ of a second parameter for a first geometric feature $\mathbf{V}_i$ relative to the vehicle in the predicted pose, that is, a second parameter corresponding to the first geometric feature $\mathbf{V}_i$, is as follows:

$$\hat{\mathbf{Z}}_{k,i} = h(\mathbf{U}_i, \hat{\mathbf{S}}_k^-) = \begin{bmatrix} \hat{r}_{k,i} \\ {}^a\hat{\theta}_{k,i} \\ {}^e\hat{\theta}_{k,i} \end{bmatrix} \quad (9)$$

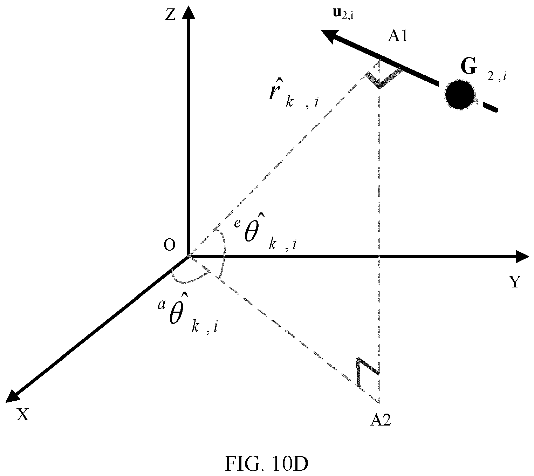

where $\hat{r}_{k,1}$ is a predicted distance at the current moment, ${}^a\hat{\theta}_{k,i}$ is a predicted azimuth at the current moment, and ${}^e\hat{\theta}_{k,i}$ is a predicted elevation at the current moment. Referring to a schematic diagram of an elevation and an azimuth of a vector in FIG. 10D, a distance OA1 from an origin of a coordinate system of the vehicle to the vector is $\hat{r}_{k,i}$, and a projection of a coordinate A1 to an OXY plane of the coordinate system of the vehicle is a coordinate A2. In this case, an included angle between OA2 and OX is ${}^a\hat{\theta}k,i$, and an included angle between OA2 and OA1 is ${}^e\hat{\theta}_{k,i}$.

S106. Determine the observed value of the second parameter based on the first pose and the N first geometric features.

Specifically, the positioning device may enter the first pose **S1** and the N first geometric features into the observation equation, to obtain the observed value of the second parameter at the current moment (k).

Corresponding to the second parameter in the formula (6), the observed value of the second parameter at the current moment (k) may be expressed as $\hat{\mathbf{Z}}_k = [\hat{\mathbf{Z}}_{k,1}{}^T \mathbf{Z}_{k,2}{}^T \dots \mathbf{Z}_{k,N}{}^T]^T$, where an observed value $\mathbf{Z}_{k,i}$ of a second parameter for the first geometric feature **V**i relative to the vehicle in the first pose, that is, a second parameter corresponding to the first geometric feature **V**$_i$, is as follows:

$$\mathbf{Z}_{k,i} = \begin{bmatrix} \sqrt{\left(x_{1,i} - x_{\text{int}}\right)^2 + \left(y_{1,i} - y_{\text{int}}\right)^2} \\ arc\tan\left(\dfrac{y_{1,i} - y_{\text{int}}}{x_{1,i} - x_{\text{int}}}\right) - \theta_{\text{int}} \end{bmatrix} \quad (10)$$

Corresponding to the expression form of a pose in the motion equation of the vehicle, the first pose may be expressed as $\mathbf{S1} = \begin{bmatrix} x_{\text{int}} \\ y_{\text{int}} \\ \theta_{\text{int}} \end{bmatrix}$, where $(x_{\text{int}}, y_{\text{int}})$ indicates the first position of the vehicle, and $\theta_{\text{int}}$ indicates the first attitude of the vehicle.

S108. Determine the error $\mathbf{E}_k$ between the observed value $\hat{\mathbf{Z}}_k$ of the second parameter and the predicted value $\mathbf{Z}_k$ of the second parameter based on the observed value $\hat{\mathbf{Z}}_k$ of the second parameter and the predicted value $\mathbf{Z}_k$ of the second parameter.

Predicted values of second parameters for the N first geometric features at the current moment may be expressed as $\hat{\mathbf{Z}}_k = [\hat{\mathbf{Z}}_{k,1}{}^T \hat{\mathbf{Z}}_{k,2}{}^T \dots \hat{\mathbf{Z}}_{k,N}{}^T]^T$, and observed values of the second parameters for the N first geometric features may be expressed as $\mathbf{Z}_k = [\mathbf{Z}_{k,1}{}^T \mathbf{Z}_{k,1}{}^T \dots \mathbf{Z}_{k,1}{}^T]^T$. In this case, a third error at the current moment may be expressed as $\mathbf{E}_k = \hat{\mathbf{Z}}_k - \mathbf{Z}_k$.

S110. Update the predicted pose $\hat{\mathbf{S}}_k^-$ at the current moment based on the error $\mathbf{E}_k$ between the observed value $\hat{\mathbf{Z}}_k$ of the second parameter and the predicted value $\mathbf{Z}_k$ of the second parameter, to obtain the second pose $\hat{\mathbf{S}}_k$ of the vehicle at the current moment.

It should be understood that S110 is a Kalman update process. The update minimizes a state error, and the following equations may be obtained: a pose update equation $\hat{\mathbf{S}}_k = \hat{\mathbf{S}}_k^- + \mathbf{K}_k \mathbf{E}_k$, a Kalman gain update equation $\mathbf{K}_k = \mathbf{P}_k^- \mathbf{H}_k^T (\mathbf{H}_k \mathbf{P}_k^- \mathbf{H}_k^T + \mathbf{R}_k)^{-1}$, and a pose covariance matrix update equation $\mathbf{P}_k = \mathbf{P}_k^- - \mathbf{K}_k \mathbf{H}_k^T \mathbf{P}_k^-$. $\mathbf{R}_k$ and $\mathbf{Q}_k$ are an observation noise matrix and a pose noise matrix respectively. $\mathbf{A}_k$ and $\mathbf{H}_k$ are a vehicle pose conversion matrix and an observation conversion matrix respectively. $\hat{\mathbf{S}}_k$ obtained through the update is the second pose at the current moment.

After step S110, the positioning device may enter the second pose $\hat{\mathbf{S}}_k$ at the current moment into the motion equation to predict a predicted pose $\hat{\mathbf{S}}_{k+1}^{-}$ at a next moment (k+1), and then perform the method in S71 to S76 or S102 to S110 to obtain a second pose $\hat{S}_{k+1}$ of the vehicle at the next moment (k+1).

## Embodiment (6)

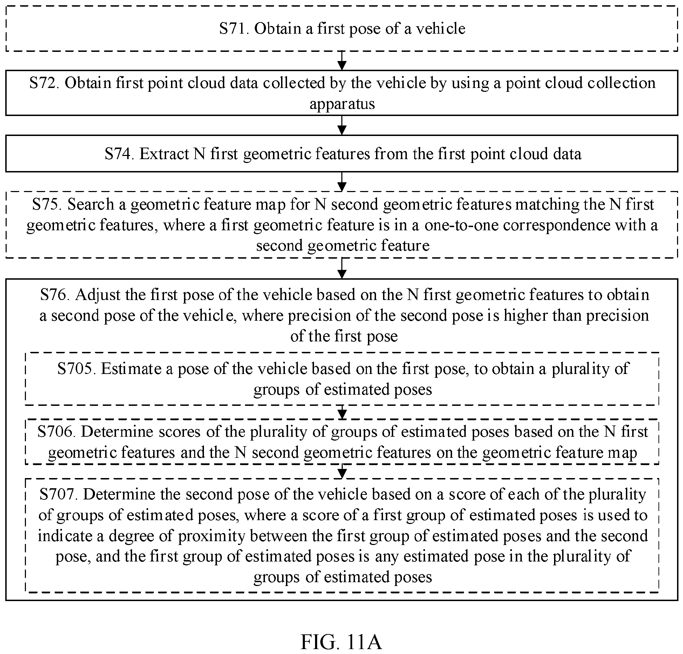

Referring to a schematic flowchart of a positioning method shown in FIG. 11A, in addition to S72, S74, and S76, the method may further include S71 and S75. S76 may include but is not limited to the following steps.

S705. Estimate a pose of the vehicle based on the first pose, to obtain a plurality of groups of estimated poses.

S706. Determine scores of the plurality of groups of estimated poses based on the N first geometric features and the N second geometric features on the geometric feature map.

S707. Determine the second pose of the vehicle based on a score of each of the plurality of groups of estimated poses, where a score of a first group of estimated poses is used to indicate a degree of proximity between the first group of estimated poses and the second pose, and the first group of estimated poses is any estimated pose in the plurality of groups of estimated poses.

Optionally, the score of the first group of estimated poses is determined based on the first group of estimated poses, the first pose, the N first geometric features observed by the vehicle, and the N second geometric features on the geometric feature map.

In an implementation of this embodiment of this application, before S706, a positioning device may further obtain the N first geometric features observed by the vehicle, where a first geometric feature is used to represent, in space determined based on the first pose, a geometric feature that is of an object and that is observed by the vehicle, and N is a positive integer; then search the geometric feature map for the N second geometric features matching the N first geometric features, where the first geometric features are in a one-to-one correspondence with the second geometric features; and then determine the score of each group of estimated poses based on each group of estimated poses, the first pose, the N first geometric features, and the N second geometric features.

It should be understood that, for a specific implementation in which the positioning device obtains the N first geometric features observed by the vehicle, reference may be made to related descriptions in Embodiment (3); and for a specific implementation in which the positioning device searches the geometric feature map for the N second geometric features matching the N first geometric features, reference may be made to related descriptions of step S75 and the three implementations of the matching process in Embodiment (3). Details are not described herein again.

In Embodiment (6), a predicted pose at a current moment is updated by using an error between an observed value that is of a second parameter and that is determined based on an observed first geometric feature and a predicted value that is of the second parameter and that is determined based on a second geometric feature on the geometric feature map, to obtain an actual pose of the vehicle. Compared with point cloud data in the prior art, in this embodiment of this application, a geometric feature with a small data volume is used for positioning, to greatly reduce a data operation amount, so that time consumption of vehicle positioning is less, and real-time performance of positioning is good.

In this embodiment of this application, the positioning device may adjust the first pose to obtain the second pose in at least the following three positioning manners.

Fourth positioning manner:

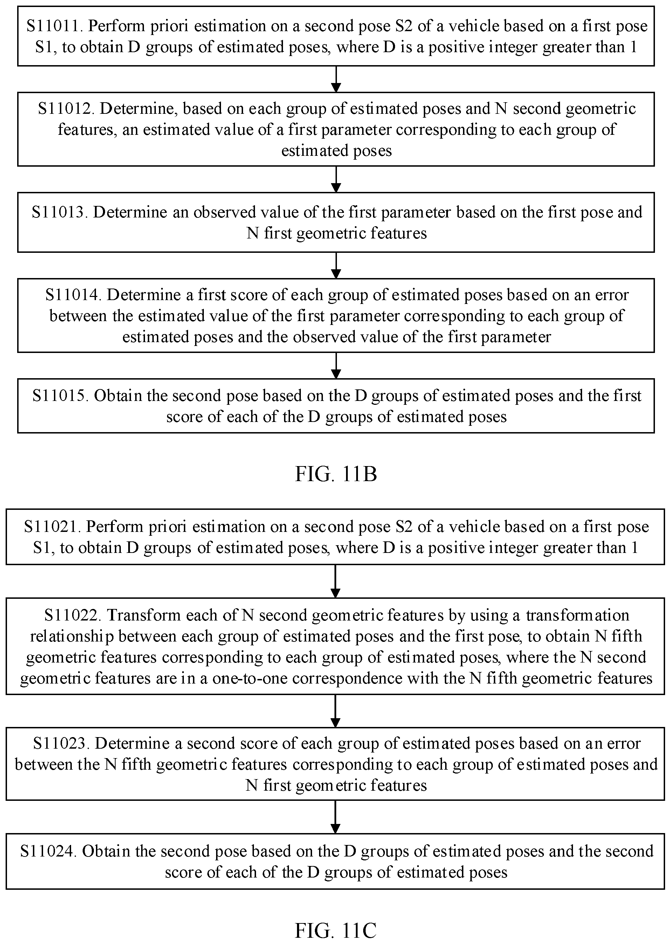

In the fourth positioning manner, priori pose estimation may be performed on the pose of the vehicle, to obtain the plurality of groups of estimated poses and an estimated value of a first parameter for each group of estimated poses; and then, for each estimated pose, a first score is obtained based on an error between an estimated value of a first parameter and an observed value of the first parameter, and a degree of proximity between the estimated pose and the second pose is evaluated by using the first score. It should be understood that a smaller error between an estimated value and an observed value that correspond to an estimated pose indicates a higher first score of the estimated pose, and indicates that the estimated pose is closer to an actual pose of the vehicle, namely, the second pose. FIG. 11B is a schematic flowchart of the fourth positioning manner provided in this embodiment of this application. The fourth positioning manner may include but is not limited to the following steps.

511011. Perform priori estimation on the second pose **S2** of the vehicle based on the first pose **S1**, to obtain D groups of estimated poses, where D is a positive integer greater than 1.

In an implementation of 51102, the first pose **S1** may be a predicted pose at a current moment that is predicted by the positioning device based on a second pose at a previous moment and a motion equation of the vehicle, that is,

$\hat{\mathbf{S}}_{k}^{-}$ described in the third positioning manner. Refer to related descriptions in the third positioning manner. Details are not described herein again. It should be understood that the first pose may be alternatively a pose at the current moment that is obtained through positioning by using a GPS and an inertial sensor of the vehicle, or a pose obtained through positioning in another manner. This is not limited in this embodiment of this application.

The D groups of estimated poses may be a set of poses whose expectations are the first pose **S1** and that are normally distributed around the first pose **S1**. D may be 100, 1000, 3000, another value, or the like.

In this embodiment of this application, the D groups of estimated poses may be expressed as $[\tilde{S}_1\ \tilde{S}_2\ ...\ \tilde{S}_D]$.

S11012. Determine, based on each group of estimated poses and the N second geometric features, an estimated value of a first parameter corresponding to each group of estimated poses.

In this embodiment of this application, an estimated pose $\tilde{S}_j$ is used as an example for description. The positioning device may enter the estimated pose $\tilde{S}_j$ and the N second geometric features into an observation equation, to obtain an estimated value $\hat{Z}_k(j)$ of a first parameter corresponding to the estimated pose $\tilde{S}_j$. The estimated pose $\tilde{S}_j$ is an estimated pose in the D groups of estimated poses. The estimated value of the first parameter corresponding to the estimated pose $\tilde{S}_j$ may be expressed as $\hat{Z}_k(j) = \hat{Z}_{k,1}(j)\ \hat{Z}_{k,2}(j)\ L\ \hat{Z}_{k,N}(j)$, where j is an index of an estimated pose in the D groups of estimated poses, j = 1, 2, ..., D, and $\hat{Z}_{k,i}(j)$ is an estimated value, of the first parameter, that is obtained by entering the estimated pose $\tilde{S}_j$ and a second geometric feature Ui into the observation equation.

Optionally, similar to the second parameter in Embodiment (5), the observation equation is an equation based on the first parameter, and the first parameter may be at least one of a distance, an azimuth, an elevation, and the like of an object described by a first geometric feature relative to the vehicle. The estimated value of the first parameter is a first parameter for each of the N second geometric features relative to the vehicle in the estimated pose. The observed value of the first parameter is a first parameter for each of the N first geometric features relative to the vehicle in the first pose.

For related descriptions of a kinematics equation and the observation equation of the vehicle, refer to related descriptions in Embodiment (5). Details are not described herein again. For a manner of calculating the estimated value of the first parameter corresponding to the estimated pose, refer to related descriptions in the manner of calculating the predicted value of the second parameter (that is, step S104) in Embodiment (5). Details are not described herein again.

It can be understood that the estimated value of the first parameter corresponding to each of the D groups of estimated poses may be obtained by using S11012. In this case, estimated values of first parameters corresponding to the D groups of estimated poses may be expressed as $\hat{Z}_k = [\hat{Z}_k(1)\ \hat{Z}_k(2)\ L\ \hat{Z}_k(D)]$.

S11013. Determine an observed value of the first parameter based on the first pose and the N first geometric features.

The first pose and the N first geometric features are entered into the observation equation, to obtain the observed value of the first parameter.

Likewise, for a manner of calculating the observed value of the first parameter, refer to related descriptions in the manner of calculating the observed value of the second parameter (that is, step S106) in Embodiment (5). Details are not described herein again.

S11014. Determine a first score of each group of estimated poses based on an error between the estimated value of the first parameter corresponding to each group of estimated poses and the observed value of the first parameter.

It should be understood that a score of an estimated pose in S1104 is also referred to as a first score of an estimated pose in the fourth positioning manner.

It can be understood that a smaller error between an estimated value of a first parameter corresponding to an estimated pose and an observed value of the first parameter indicates that the estimated pose is closer to the second pose (the actual pose). If the estimated value of the first parameter corresponding to the estimated pose is equal to the observed value of the first parameter, the estimated pose is the second pose. A function used to calculate the first score may be constructed based on an error between the estimated value of the first parameter corresponding to the estimated pose and the observed value of the first parameter. A higher first score indicates that an estimated pose corresponding to the first score is closer to the second pose. For example, a first score of the estimated pose $\tilde{S}_j$ may be calculated by using the following formula:

$$score_j = \exp\left\{-\frac{1}{2}corr\left(\hat{\mathbf{Z}}_k(j), \mathbf{Z}_k\right) + 1\right\} \tag{11}$$

where corr() is a Pearson product-moment correlation coefficient, and may be a quotient of a covariance between the estimated value $\hat{Z}_k(j)$ of the first parameter corresponding to the estimated pose $\tilde{S}_j$ and an observed value $\mathbf{Z}_k$ of a second parameter, and a standard deviation product of the estimated value and the observed value.

It should be understood that a first score of each estimated pose in the D groups of estimated poses may be obtained by using the method in S11011 to S11014.

S11015. Obtain the second pose based on the D groups of estimated poses and the first score of each of the D groups of estimated poses.

In an implementation of S11015, the second pose may be an estimated pose with a highest first score in the D groups of estimated poses.

In another implementation of S 11015, the second pose S2 may be expressed as follows:

$$S2 = \sum_{j=1}^{j=D} \mu_j S_j \qquad (12)$$

where $\mu_j$ is a normalization coefficient of $score_j$.

It should be understood that the second pose may be alternatively obtained in another manner based on the D groups of estimated poses and a score of each of the D groups of estimated poses. This is not limited in this embodiment of this application.

Fifth positioning manner:

In the fourth positioning manner, if a first parameter is a second geometric feature, the fourth positioning manner is a positioning manner described in the fifth positioning manner. FIG. 11C is a schematic flowchart of the fifth positioning manner provided in this embodiment of this application. The fifth positioning manner may include but is not limited to the following steps.

S11021. Perform priori estimation on the second pose S2 of the vehicle based on the first pose **S1**, to obtain D groups of estimated poses, where D is a positive integer greater than 1.

For a specific implementation of S11021, refer to related descriptions of S11011 in the fourth positioning manner. Details are not described herein again.

S11022. Transform each of the N second geometric features by using a transformation relationship between each group of estimated poses and the first pose, to obtain N fifth geometric features corresponding to each group of estimated poses, where the N second geometric features are in a one-to-one correspondence with the N fifth geometric features.

In this embodiment of this application, an estimated pose $\tilde{S}_j$ is used as an example. Each of the N second geometric features is transformed by using a transformation relationship between a first estimated pose and the first pose, to obtain N fifth geometric features corresponding to the first estimated pose. The estimated pose $\tilde{S}_j$ is an estimated pose in the D groups of estimated poses, j is an index of an estimated pose in the D groups of estimated poses, and j = 1, 2, ..., D. The second geometric features are in a one-to-one correspondence with the fifth geometric features.

It should be understood that a second geometric feature and a fifth geometric feature are expressions of a same object in different coordinate systems. If the estimated pose $\tilde{S}_j$ is the second pose (the actual pose) of the vehicle, theoretically, N fifth geometric features corresponding to the estimated pose $\tilde{S}_j$ are the same as the N first geometric features. In other words, if there is an error between the N fifth geometric features corresponding to the estimated pose $\tilde{S}_j$ and the N first geometric features, a degree of proximity between the estimated pose $\tilde{S}_j$ and the second pose may be evaluated, that is, a score (also referred to as a second score in this embodiment of this application) of the estimated pose $\tilde{S}_j$ is obtained. The second score is used to evaluate a degree of proximity between an estimated pose and the second pose. A higher second score indicates that an estimated pose corresponding to the second score is closer to the second pose.

S11023. Determine a second score of each group of estimated poses based on an error between the N fifth geometric features corresponding to each group of estimated poses and the N first geometric features.

The N fifth geometric features corresponding to the estimated pose $\tilde{S}_j$ may be expressed as $^j\mathbf{O}=[^j\mathbf{O}_1 \, ^j\mathbf{O}_2 \, \mathbf{L} \, ^j\mathbf{O}_N]$, and the error between the N fifth geometric features corresponding to the estimated pose $\tilde{S}_j$ and the N first geometric features $\mathbf{V}=\{\mathbf{V}_1, \mathbf{V}_2, \mathbf{L} \, \mathbf{V}_N\}$ may be expressed as follows:

$$error_j = \sum_{m=1}^{N_1} {}^\alpha w_m \left\langle \mathbf{V}_m, {}^j\mathbf{O}_m \right\rangle + \sum_{n=1}^{N_2} {}^d w_n \left\| \mathbf{V}_n - {}^j\mathbf{O}_n \right\|^2 \qquad (13)$$

where $N_1$ first geometric features in the N first geometric features are represented by using vectors, $N_2$ first geometric features in the N first geometric features are represented by using coordinate points, m is an index of a first geometric feature in the $N_1$ first geometric features, n is an index of a first geometric feature in the $N_2$ first geometric features, m,

n, $N_1$, and $N_2$ are positive integers, $m \leq N_1$, $n \leq N_2$, and $N_1 + N_2 = N$; $^\alpha W_m$ indicates a weight of a first geometric feature $U_m$, and $^d W_m$ indicates a weight of a first geometric feature $U_n$, where similar to that in the formula (2), a weight of a first geometric feature may be determined based on a distance between the first geometric feature and the vehicle, for details, reference may be made to related descriptions in the first positioning manner, and details are not described herein again; $\langle \mathbf{V}_m, {}^j\mathbf{O}_m \rangle$ indicates an included angle between two vectors, and a corresponding weight coefficient is $^\alpha W_m$; and when a feature is a position of a target, $\| \mathbf{V}_n - {}^j\mathbf{O}_n \|^2$ indicates a distance between two coordinate points, and a corresponding weight coefficient is $^d W_n$.

In this case, a score of the estimated pose $\tilde{S}_j$ may be expressed as follows:

$$score_j = \exp\left\{ -\frac{1}{2} error_j \right\} \tag{14}$$

The score of each of the D groups of estimated poses may be obtained by using S11022 and S11023.

S11024. Obtain the second pose based on the D groups of estimated poses and the second score of each of the D groups of estimated poses.

For a specific implementation of S11024, refer to related descriptions of S11014 in the fourth positioning manner. Details are not described herein again.

Sixth positioning manner:

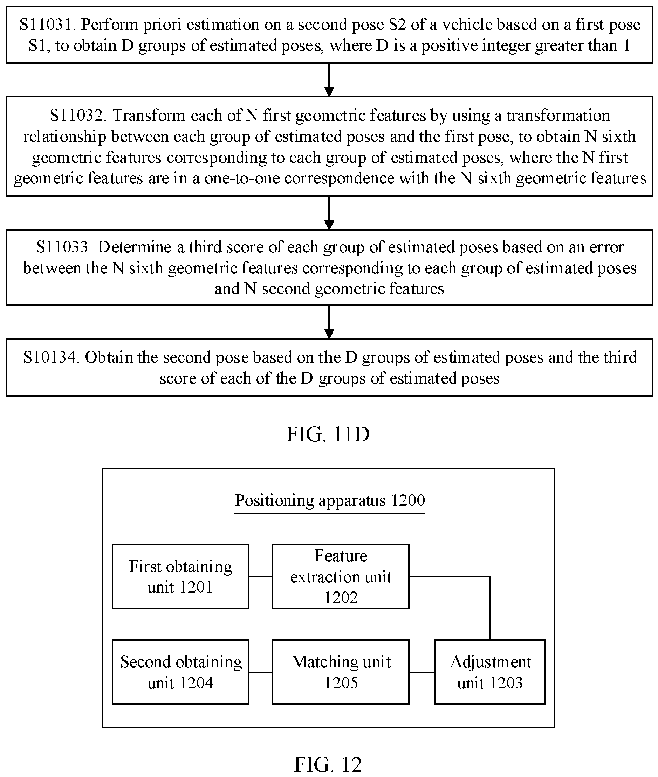

In the fourth positioning manner, if a first parameter is a first geometric feature, the fourth positioning manner is a positioning manner described in the sixth positioning manner. FIG. 11D is a schematic flowchart of the sixth positioning manner provided in this embodiment of this application. The sixth positioning manner may include but is not limited to the following steps.

S11031. Perform priori estimation on the second pose S2 of the vehicle based on the first pose **S1**, to obtain D groups of estimated poses, where D is a positive integer greater than 1.

For a specific implementation of S11031, refer to related descriptions of S11011 in the fourth positioning manner. Details are not described herein again.

S11032. Transform each of the N first geometric features by using a transformation relationship between each group of estimated poses and the first pose, to obtain N sixth geometric features corresponding to each group of estimated poses, where the N first geometric features are in a one-to-one correspondence with the N sixth geometric features.

It should be understood that a first geometric feature and a sixth geometric feature are expressions of a same object in different coordinate systems. If an estimated pose $\tilde{\mathbf{S}}_j$ is the second pose (the actual pose) of the vehicle, theoretically, N fifth geometric features corresponding to the estimated pose $\tilde{\mathbf{S}}_j$ are the same as the N second geometric features. In other words, if there is an error between the N sixth geometric features corresponding to the estimated pose $\tilde{\mathbf{S}}_j$ and the N second geometric features, a degree of proximity between the estimated pose $\tilde{\mathbf{S}}_j$ and the second pose may be evaluated, that is, a score (also referred to as a third score) of the estimated pose $\tilde{\mathbf{S}}_j$ is obtained. The third score is used to evaluate a degree of proximity between an estimated pose and the second pose. A higher third score indicates that an estimated pose corresponding to the third score is closer to the second pose.

S11033. Determine a third score of each group of estimated poses based on an error between the N sixth geometric features corresponding to each group of estimated poses and the N second geometric features.

It should be understood that, for a manner of calculating the error between the N sixth geometric features corresponding to the estimated pose $\tilde{\mathbf{S}}_j$ and the N second geometric features in S11033, reference may be made to the manner of calculating the error between the N fifth geometric features corresponding to the estimated pose $\tilde{\mathbf{S}}_j$ and the N first geometric features in the fifth positioning manner (that is, step S11023). Details are not described herein again.

S10134. Obtain the second pose based on the D groups of estimated poses and the third score of each of the D groups of estimated poses.

It should be understood that, for a specific implementation of S10134, reference may be made to related descriptions of step S11024 in the fifth positioning manner. Details are not described herein again.

It should be noted that the foregoing positioning method may be applied to a scenario in which a pose of a vehicle needs to be precisely estimated, for example, navigation of the vehicle or self-driving of the vehicle. By using the foregoing positioning method, both a more precise position of the vehicle and an attitude of the vehicle can be obtained.

The following describes an apparatus and a device in the embodiments of this application.

FIG. 12 is a schematic block diagram of a positioning apparatus according to an embodiment of the present invention. The positioning apparatus shown in FIG. 12 (the apparatus 1200 may be specifically the positioning device in the embodiment corresponding to FIG. 2, for example, the vehicle 160, the terminal 180, or the positioning server 190, or may be the vehicle 100 in FIG. 3. Specifically, the positioning apparatus 1200 may include:

> a first obtaining unit 1201, configured to obtain first point cloud data collected by a vehicle by using a point cloud collection apparatus;
> a feature extraction unit 1202, configured to extract N first geometric features from the first point cloud data, where N is a positive integer; and
> an adjustment unit 1203, configured to adjust a first pose of the vehicle based on the N first geometric features to obtain a second pose of the vehicle, where precision of the second pose is higher than precision of the first pose.

In a possible implementation of this application, the apparatus 1200 further includes:
a second obtaining unit 1204, configured to obtain the first pose of the vehicle before the adjustment unit adjusts the first pose of the vehicle based on the N first geometric features to obtain the second pose of the vehicle.

In a possible implementation of this application, the apparatus 1200 further includes:
a matching unit 1205, configured to search a geometric feature map for N second geometric features matching the N first geometric features.

In another positioning apparatus in this embodiment of this application, the positioning apparatus may not include the first obtaining unit 1201 or the feature extraction unit 1202 in the positioning apparatus 1200, and the positioning apparatus 1200 may be adjusted to include a receiving unit, configured to receive N first geometric features sent by the vehicle or a terminal.

It should be noted that the second obtaining unit 1204 and the matching unit 1205 in the positioning apparatus 1200 are not units necessarily required by the positioning apparatus 1200. It should be further noted that the positioning apparatus 1200 further includes other units configured to implement the positioning method in Embodiment (3), Embodiment (4), Embodiment (5), or Embodiment (6). For specific implementations of the units or the other units of the positioning apparatus 1200, refer to related descriptions in Embodiment (3), Embodiment (4), Embodiment (5), or Embodiment (6). Details are not described herein again.

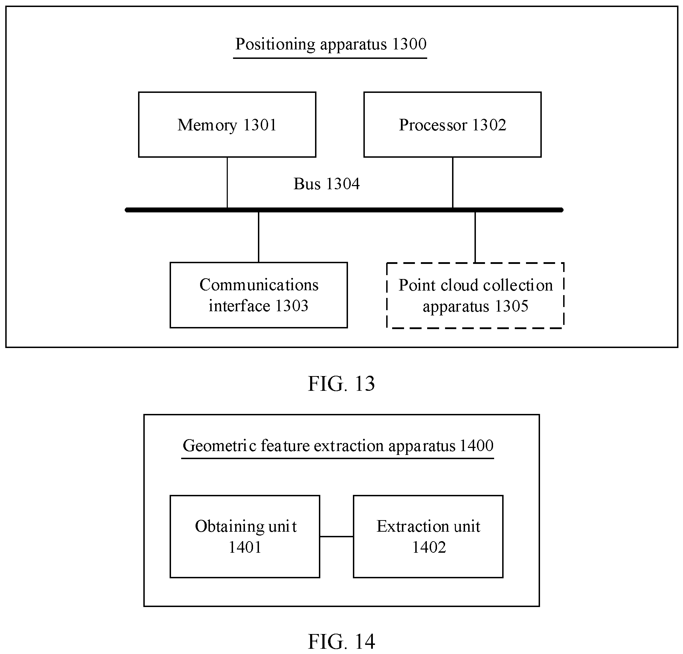

FIG. 13 is a schematic diagram of a hardware structure of a positioning apparatus according to an embodiment of this application. The positioning apparatus 1300 (the apparatus 1300 may be specifically a computer device) shown in FIG. 13 includes a memory 1301, a processor 1302, a communications interface 1303, and a bus 1304. The memory 1301, the processor 1302, and the communications interface 1303 are communicatively connected to each other by using the bus 1304.

The memory 1301 may be a read only memory (Read Only Memory, ROM), a static storage device, a dynamic storage device, or a random access memory (Random Access Memory, RAM). The memory 1301 may store a program. When the program stored in the memory 1301 is executed by the processor 1302, the processor 1302 and the communications interface 1303 are configured to perform the steps of the positioning method in Embodiment (3) of this application.

The processor 1302 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement a function that needs to be performed by a unit in the positioning apparatus 1200 in the embodiment of this application, or perform the positioning method in Embodiment (3) of this application.

The processor 1302 may be an integrated circuit chip and has a signal processing capability. In an implementation process, the steps of the sampling generation method in this application may be performed by using an integrated logic circuit of hardware in the processor 1302 or an instruction in a form of software. The processor 1302 may be a general purpose processor, a digital signal processor (Digital Signal Processing, DSP), an application-specific integrated circuit (ASIC), a field programmable gate array (Field Programmable Gate Array, FPGA) or another programmable logical device, a discrete gate or transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1301. The processor 1302 reads information in the memory 1301, and performs, in combination with hardware of the processor 1302, a function that needs to be performed by a unit included in the positioning apparatus 1200 in the embodiment of this application, or performs the positioning method in Embodiment (3), Embodiment (4), Embodiment (5), or Embodiment (6) of this application.

The communications interface 1303 uses a transceiver apparatus, for example, but not limited to, a transceiver, to implement communication between the apparatus 1300 and another device or a communications network. For example, data such as point cloud data, a first geometric feature, a second geometric feature, and a geometric feature map may be obtained by using the communications interface 1303. The communications interface 1303 is further configured to implement communication with another device, for example, a geometric feature map generation device, a map server, or a terminal.

The bus 1304 may include a channel for transmitting information between components (for example, the memory 1301, the processor 1302, and the communications interface 1303) of the apparatus 1300.

When the positioning apparatus 1300 is disposed on a vehicle, the vehicle may be the vehicle 100 shown in FIG. 3, the apparatus 1300 may further include a point cloud collection apparatus 1305, and the positioning apparatus 1300 may further perform the geometric feature extraction method in Embodiment (1). The point cloud collection apparatus 1305 may be an apparatus that can obtain point cloud data, for example, a laser radar (laser radar), a stereo camera (stereo camera), or a time of flight camera (time of flight camera).

When the positioning apparatus 1300 is a terminal such as a mobile phone or a tablet computer, or is a server, a cloud, or the like, the point cloud collection apparatus 1305 is not a device necessarily required by the positioning apparatus 1300.

It should be understood that the first obtaining unit 1201, the second obtaining unit 1204, and the receiving unit in the positioning apparatus 1200 may be equivalent to the communications interface 1303 in the apparatus 1300, and the extraction unit 1202, the adjusting unit 1203, and the matching unit 1205 may be equivalent to the processor 1302.

For specific implementations of the foregoing devices, refer to related descriptions in Embodiment (3), Embodiment (4), Embodiment (5), or Embodiment (6). Details are not described again in this embodiment of this application.

FIG. 14 is a schematic block diagram of a geometric feature extraction apparatus according to an embodiment of the present invention. The geometric feature extraction apparatus shown in FIG. 14 (the apparatus 1400 may be specifically the positioning device in the embodiment corresponding to FIG. 2, for example, the vehicle 160, the terminal 180, or the positioning server 190, or the apparatus 1400 may be the geometric feature map generation device 140). Specifically, the apparatus 1400 may include:

an obtaining unit 1401, configured to obtain to-be-processed point cloud data; and
an extraction unit 1402, configured to extract at least one geometric feature from the to-be-processed point cloud data, where the at least one geometric feature is used to position a vehicle.

Optionally, the apparatus 1400 may further include a map generation unit, configured to generate a geometric feature map based on the extracted geometric feature.

It should be noted that the apparatus 1400 further includes other units configured to implement the geometric feature extraction method in Embodiment (1) or other units configured to implement the geometric feature map generation method in Embodiment (2). For specific implementations of the units or the other units of the apparatus 1400, refer to related descriptions in Embodiment (1) or Embodiment (2). Details are not described herein again.

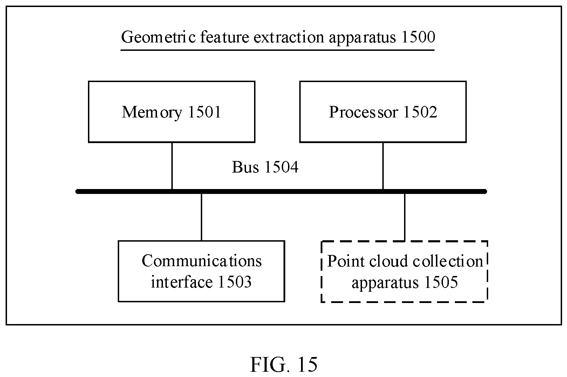

FIG. 15 is a schematic diagram of a hardware structure of a geometric feature extraction apparatus according to an embodiment of this application. The geometric feature extraction apparatus 1500 (the apparatus 1500 may be specifically a computer device) shown in FIG. 15 includes a memory 1501, a processor 1502, a communications interface 1503, and a bus 1504. The memory 1501, the processor 1502, and the communications interface 1503 are communicatively connected to each other by using the bus 1504.

The memory 1501 may be a read only memory (Read Only Memory, ROM), a static storage device, a dynamic storage device, or a random access memory (Random Access Memory, RAM). The memory 1501 may store a program. When the program stored in the memory 1501 is executed by the processor 1502, the processor 1502 and the communications interface 1503 are configured to perform the steps of the method in Embodiment (1) or Embodiment (2) of this application.

The processor 1502 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement a function that needs to be performed by a unit in the positioning apparatus 1400 in the embodiment of this application, or perform the method in Embodiment (1) or Embodiment (2) of this application.

The processor 1502 may be an integrated circuit chip and has a signal processing capability. In an implementation process, the steps of the sampling generation method in this application may be performed by using an integrated logic circuit of hardware in the processor 1502 or an instruction in a form of software. The processor 1502 may be a general purpose processor, a digital signal processor (Digital Signal Processing, DSP), an application-specific integrated circuit (ASIC), a field programmable gate array (Field Programmable Gate Array, FPGA) or another programmable logical device, a discrete gate or transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1501. The processor 1502 reads information in the memory 1501, and performs, in combination with hardware of the processor 1502, a function that needs to be performed by a unit included in the positioning apparatus 1400 in the embodiment of this application, or performs the method in Method Embodiment (1) or Embodiment (2) of this application.

The communications interface 1503 uses a transceiver apparatus, for example, but not limited to, a transceiver, to implement communication between the apparatus 1500 and another device or a communications network. For example, data such as point cloud data, a first geometric feature, a second geometric feature, and a geometric feature map may be obtained by using the communications interface 1503. The communications interface 1503 is further configured to implement communication with another device, for example, a geometric feature map generation device, a map server, or a terminal.

The bus 1504 may include a channel for transmitting information between components (for example, the memory 1501, the processor 1502, and the communications interface 1503) of the apparatus 1500.

When the apparatus 1500 is disposed on a vehicle, the vehicle may be the vehicle 100 shown in FIG. 3, the apparatus 1500 may further include a point cloud collection apparatus 1505, and the positioning apparatus 1500 may further perform the geometric feature extraction method in Embodiment (1). The point cloud collection apparatus 1505 may be an apparatus that can obtain point cloud data, for example, a laser radar (laser radar), a stereo camera (stereo camera), or a time of flight camera (time of flight camera).

If the apparatus 1500 is a terminal such as a mobile phone or a tablet computer, or is a server, a cloud, or the like, the point cloud collection apparatus 1505 is not a device necessarily required by the apparatus 1500.

It should be understood that the obtaining unit 1401 in the apparatus 1400 may be equivalent to the communications interface 1503 in the apparatus 1500, and the extraction unit 1402 may be equivalent to the processor 1502.

For specific implementations of the foregoing devices, refer to related descriptions in Embodiment (1) or Embodiment (2). Details are not described again in this embodiment of this application.

It should be noted that, although the apparatuses 1300 and 1500 shown in FIG. 13 and FIG. 15 show only the memory, the processor, and the communications interface or a wireless communications module, in a specific implementation process, a person skilled in the art should understand that the apparatuses 1300 and 1500 further include other devices required for implementing normal running. In addition, according to a specific requirement, a person skilled in the art should understand that the apparatus 1300 and the apparatus 1500 may further include hardware components for implementing other additional functions. In addition, a person skilled in the art should understand that the apparatuses 1300 and 1500 may alternatively include only devices required for implementing the embodiments of this application, and do not need to include all the devices shown in FIG. 13 or FIG. 15.

For example, the apparatuses 1300 and 1500 may further include an input/output apparatus. The input apparatus may be a touch panel, a microphone, another output apparatus, or the like. The output apparatus may be a display, an audio play apparatus, another apparatus, or the like. The apparatuses 1300 and 1500 may further include various sensors, for example, an accelerometer, a camera, a photosensitive sensor, and a fingerprint sensor. This is not limited herein.

It can be understood that the apparatus 1300 may be equivalent to the positioning device in the embodiment corresponding to FIG. 2, for example, the vehicle 160, the terminal 180, or the positioning server 190, or the vehicle 100 in FIG. 3; and the apparatus 1500 may be equivalent to the positioning device in the embodiment corresponding to FIG. 2, for example, the vehicle 160, the terminal 180, or the positioning server 190, or the apparatus 1500 may be equivalent to the geometric feature map generation device 140 in FIG. 2, or the vehicle 100 in FIG. 3. A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objects of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The terms used in the foregoing embodiments are merely intended to describe specific embodiments, but are not intended to limit this application. The terms "one", "a" and "this" of singular forms used in this specification and the appended claims of this application are also intended to include plural forms, unless otherwise specified in the context clearly. It should be further understood that, in the following embodiments of this application, "at least one" or "one or more" means one, two, or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

Referring to "an embodiment" or "some embodiments" or the like in this specification means that one or more embodiments of this application include a specific feature, structure, or characteristic described with reference to the embodiment. Therefore, a statement such as "in an embodiment", "in some embodiments", or "in some other embodiments" that appears along with a difference in this specification does not necessarily mean referring to a same embodiment, but means "one or more but not all of embodiments", unless otherwise specifically emphasized in another manner. The terms "include", "comprise", "have", and their variants all mean "including but not limited to", unless otherwise specifically emphasized in another manner.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A positioning method, comprising:

   obtaining, by a positioning device, first point cloud data collected by a vehicle by using a point cloud collection apparatus;
   extracting, by the positioning device, N first geometric features from the first point cloud data, wherein N is a positive integer; and
   adjusting, by the positioning device, a first pose of the vehicle based on the N first geometric features to obtain a second pose of the vehicle, wherein precision of the second pose is higher than precision of the first pose.

2. The method according to claim 1, wherein the adjusting, by the positioning device, a first pose of the vehicle based on the N first geometric features to obtain a second pose of the vehicle comprises:
   adjusting, by the positioning device, the first pose of the vehicle based on the N first geometric features and N second geometric features on a geometric feature map to obtain the second pose, wherein the geometric feature map is a map formed by geometric features extracted from second point cloud data on a point cloud map, and the N second geometric features are geometric features matching the N first geometric features.

3. The method according to claim 2, wherein the adjusting, by the positioning device, the first pose of the vehicle based on the first geometric features and second geometric features on a geometric feature map to obtain the second pose comprises:

determining, by the positioning device, a transformation relationship between geometric features based on the N first geometric features and the N second geometric features on the geometric feature map; and
adjusting, by the positioning device, the first pose of the vehicle based on the transformation relationship between geometric features to obtain the second pose.

4. The method according to claim 3, wherein the determining, by the positioning device, a transformation relationship between geometric features based on the N first geometric features and the N second geometric features on the geometric feature map comprises:

transforming, by the positioning device, the N first geometric features by using a first transformation amount to obtain N third geometric features, wherein the third geometric features are in a one-to-one correspondence with the first geometric features;
adjusting, by the positioning device, the first transformation amount based on a first error between the N third geometric features and the N second geometric features; and
obtaining, by the positioning device, a first target transformation amount when a quantity of iterations for the first transformation amount meets an iteration stop condition or the first error meets an iteration stop condition, wherein the first target transformation amount is a first transformation amount obtained when the iteration stop condition is met, and the first target transformation amount is used to indicate a transformation relationship between the N first geometric features and the N second geometric features.

5. The method according to claim 3, wherein the determining, by the positioning device, a transformation relationship between geometric features based on the N first geometric features and the N second geometric features on the geometric feature map specifically comprises:

transforming, by the positioning device, the N second geometric features by using a second transformation amount to obtain N fourth geometric features, wherein the fourth geometric features are in a one-to-one correspondence with the second geometric features;
adjusting, by the positioning device, the second transformation amount based on a second error between the N fourth geometric features and the N first geometric features; and
obtaining, by the positioning device, a second target transformation amount when a quantity of iterations for the second transformation amount meets an iteration stop condition or the second error meets an iteration stop condition, wherein the second target transformation amount is an inverse matrix of the second transformation amount obtained when the iteration stop condition is met; and the second target transformation amount is used to indicate a transformation relationship between the N first geometric features and the N second geometric features.

6. The method according to claim 2, wherein the adjusting, by the positioning device, the first pose of the vehicle based on the N first geometric features and N second geometric features on a geometric feature map to obtain the second pose comprises:

estimating, by the positioning device, a pose of the vehicle based on the first pose to obtain a plurality of groups of estimated poses;
determining, by the positioning device, scores of the plurality of groups of estimated poses based on the N first geometric features and the N second geometric features on the geometric feature map; and
determining, by the positioning device, the second pose of the vehicle based on the score of each of the plurality of groups of estimated poses, wherein the score of each group of estimated poses is used to indicate a degree of proximity between each group of estimated poses and the second pose.

7. The method according to claim 6, wherein the determining, by the positioning device, scores of the plurality of groups of estimated poses based on the N first geometric features and the N second geometric features on the geometric feature map comprises:

determining, by the positioning device, an estimated value of a first parameter corresponding each group of estimated poses based on each group of estimated poses and the N second geometric features;

determining, by the positioning device, an observed value of the first parameter based on the first pose and the N first geometric features; and

determining, by the positioning device, the score of each group of estimated poses based on an error between the estimated value of the first parameter corresponding to each group of estimated poses and the observed value of the first parameter.

8. The method according to claim 7, wherein the first parameter is at least one of a distance, an azimuth, or an elevation angle; the estimated value of the first parameter corresponding to each group of estimated poses is a first parameter for each of the N second geometric features relative to the vehicle in each group of estimated poses; and the observed value of the first parameter is a first parameter for each of the N first geometric features relative to the vehicle in the first pose.

9. The method according to claim 6, wherein the determining, by the positioning device, scores of the plurality of groups of estimated poses based on the N first geometric features and the N second geometric features on the geometric feature map comprises:

obtaining, by respectively transforming the N second geometric features by using a transformation relationship between each group of estimated poses and the first pose, N fifth geometric features corresponding to each group of estimated poses, wherein the second geometric features are in a one-to-one correspondence with the fifth geometric features; and

determining, by the positioning device, the score of each group of estimated poses based on errors between the N fifth geometric features corresponding to each group of estimated poses and the N first geometric features.

10. The method according to claim 6, wherein the determining, by the positioning device, scores of the plurality of groups of estimated poses based on the N first geometric features and the N second geometric features on the geometric feature map comprises:

obtaining, by respectively transforming the N first geometric features by using a transformation relationship between each group of estimated poses and the first pose, N sixth geometric features corresponding to each group of estimated poses, wherein the first geometric features are in a one-to-one correspondence with the sixth geometric features; and

determining, by the positioning device, the score of each group of estimated poses based on errors between the N sixth geometric features corresponding to each group of estimated poses and the N second geometric features.

11. The method according to any one of claims 1 to 10, wherein before the adjusting, by the positioning device, a first pose of the vehicle based on the N first geometric features to obtain a second pose of the vehicle, the method further comprises:

obtaining, by the positioning device, the first pose of the vehicle.

12. The method according to claim 11, wherein the obtaining, by the positioning device, the first pose of the vehicle specifically comprises:

determining, by the positioning device, an estimated pose of the vehicle at a current moment based on a second pose at a previous moment, wherein the estimated pose at the current moment is the first pose of the vehicle obtained by the positioning device, and the previous moment is a moment earlier than the current moment; or

determining, by the positioning device, a first position of the vehicle based on a positioning system, and determining a first attitude of the vehicle based on an inertial sensor, wherein the first pose comprises the first position and the first attitude.

13. The method according to any one of claims 2 to 12, wherein the method further comprises: searching, by the positioning device, the geometric feature map for N second geometric features matching the N first geometric features.

14. The method according to claim 13, wherein the searching, by the positioning device, the geometric feature map for N second geometric features matching the N first geometric features specifically comprises:

searching, by the positioning device, a first region of the geometric feature map for the N second geometric features matching the N first geometric features, wherein the first region is a region determined based on the first pose, and the first region is not smaller than a scanning range of the point cloud collection apparatus of the vehicle.

15. The method according to any one of claims 1 to 14, wherein the first point cloud data is information for a point on a surface of an object, that is observed by the vehicle and that is represented in a space determined based on the first pose, and each of the N first geometric features is used to indicate a geometric feature of an object observed by the vehicle in the space determined based on the first pose.

16. The method according to any one of claims 1 to 15, wherein the extracting, by the positioning device, N first geometric features from the first point cloud data comprises:

    identifying, by the positioning device, N objects in the first point cloud data; and
    determining, by the positioning device, a first geometric feature of each of the N objects based on point cloud data of each of the N objects.

17. The method according to claim 16, wherein a first object is any one of the N objects, and the determining, by the positioning device, a first geometric feature of each of the N objects based on point cloud data of each of the N objects comprises one of the following steps:

    if a geometric shape of the first object is a straight line, performing, by the positioning device, straight line fitting on point cloud data of the first object to obtain a first geometric feature of the first object, wherein the first geometric feature of the first object is a geometric feature that is of the straight line and that is obtained through fitting;
    if the geometric shape of the first object is a curve, performing, by the positioning device, curve fitting on the point cloud data of the first object to obtain the first geometric feature of the first object, wherein the first geometric feature of the first object is a geometric feature that is of the curve and that is obtained through fitting;
    if the geometric shape of the first object is a plane, performing, by the positioning device, plane fitting on the point cloud data of the first object to obtain the first geometric feature of the first object, wherein the first geometric feature of the first object is a geometric feature that is of the plane and that is obtained through fitting; and
    if the geometric shape of the first object is a curved surface, performing, by the positioning device, curved surface fitting on the point cloud data of the first object to obtain the first geometric feature of the first object, wherein the first geometric feature of the first object is a geometric feature that is of the curved surface and that is obtained through fitting.

18. A positioning apparatus, comprising:

    a first obtaining unit, configured to obtain first point cloud data collected by a vehicle by using a point cloud collection apparatus;
    a feature extraction unit, configured to extract N first geometric features from the first point cloud data, wherein N is a positive integer; and
    an adjusting unit, configured to adjust a first pose of the vehicle based on the N first geometric features to obtain a second pose of the vehicle, wherein precision of the second pose is higher than precision of the first pose.

19. The apparatus according to claim 18, wherein the adjusting unit is specifically configured to:
    adjust the first pose of the vehicle based on the N first geometric features and N second geometric features on a geometric feature map to obtain the second pose, wherein the geometric feature map is a map formed by geometric features extracted from second point cloud data on a point cloud map, and the N second geometric features are geometric features matching the N first geometric features.

20. The apparatus according to claim 19, wherein that an adjusting unit, configured to adjust a first pose of the vehicle based on the N first geometric features to obtain a second pose of the vehicle comprises:

    determining a transformation relationship between geometric features based on the N first geometric features and the N second geometric features on the geometric feature map; and
    adjusting the first pose of the vehicle based on the transformation relationship between geometric features to obtain the second pose.

21. The apparatus according to claim 20, wherein that the adjusting unit, configured to determine a transformation relationship between geometric features based on the N first geometric features and the N second geometric features on the geometric feature map comprises:

transforming the N first geometric features by using a first transformation amount to obtain N third geometric features, wherein the third geometric features are in a one-to-one correspondence with the first geometric features;

adjusting the first transformation amount based on a first error between the N third geometric features and the N second geometric features; and

obtaining, by the positioning device, a first target transformation amount when a quantity of iterations for the first transformation amount meets an iteration stop condition or the first error meets an iteration stop condition, wherein the first target transformation amount is a first transformation amount obtained when the iteration stop condition is met, and the first target transformation amount is used to indicate a transformation relationship between the N first geometric features and the N second geometric features.

22. The apparatus according to claim 20, wherein that an adjusting unit, configured to determine a transformation relationship between geometric features based on the N first geometric features and the N second geometric features on the geometric feature map comprises:

transforming the N second geometric features by using a second transformation amount to obtain N fourth geometric features, wherein the fourth geometric features are in a one-to-one correspondence with the second geometric features;

adjusting the second transformation amount based on a second error between the N fourth geometric features corresponding to the second geometric feature and the N first geometric features corresponding to the second geometric feature; and

obtaining, by the positioning device, a second target transformation amount when a quantity of iterations for the second transformation amount meets an iteration stop condition or the second error meets an iteration stop condition, wherein the second target transformation amount is an inverse matrix of a second transformation amount obtained when the iteration stop condition is met; and the second target transformation amount is used to indicate the transformation relationship between the N first geometric features and the N second geometric features.

23. The apparatus according to claim 19, wherein the adjusting unit is specifically configured to:

estimate a pose of the vehicle based on the first pose to obtain a plurality of groups of estimated poses;

determine scores of the plurality of groups of estimated poses based on the N first geometric features and the N second geometric features on the geometric feature map; and

determine the second pose of the vehicle based on the score of each of the plurality of groups of estimated poses, wherein the score of each group of estimated poses are used to indicate a degree of proximity between each group of estimated poses and the second pose.

24. The apparatus according to claim 23, wherein that the adjusting unit is configured to determine scores of the plurality of groups of estimated poses based on the N first geometric features and the N second geometric features on the geometric feature map, comprising:

determining an estimated value of a first parameter corresponding to each group of estimated poses based on each group of estimated poses and the N second geometric features;

determining an observed value of the first parameter based on the first pose and the N first geometric features; and

determining the score of each group of estimated poses based on an error between the estimated value of the first parameter corresponding to each group of estimated poses and the observed value of the first parameter.

25. The apparatus according to claim 24, wherein the first parameter is at least one of a distance, an azimuth, and an elevation angle; the estimated value of the first parameter corresponding to each group of estimated poses is a first parameter for each of the N second geometric features relative to the vehicle in each group of estimated poses; and the observed value of the first parameter is a first parameter for each of the N first geometric features relative to the vehicle in the first pose.

26. The apparatus according to claim 23, wherein that the adjusting unit is configured to determine scores of the plurality of groups of estimated poses based on the N first geometric features and the N second geometric features on the geometric feature map, comprising:

obtaining, by respectively transforming the N second geometric features by using a transformation relationship between each group of estimated poses and the first pose, N fifth geometric features corresponding to each group of estimated poses, wherein the second geometric features are in a one-to-one correspondence with the fifth geometric features; and

determining the score of each group of estimated poses based on errors between the N fifth geometric features corresponding to each group of estimated poses and the N first geometric features.

27. The apparatus according to claim 23, wherein that the adjusting unit is configured to determine scores of the plurality of groups of estimated poses based on the N first geometric features and the N second geometric features on the geometric feature map, comprising:

obtaining, by respectively transforming the N first geometric features by using a transformation relationship between each group of estimated poses and the first pose, N sixth geometric features corresponding to each group of estimated poses, wherein the first geometric features are in a one-to-one correspondence with the sixth geometric features; and
determining the score of each group of estimated poses based on errors between the N sixth geometric features corresponding to each group of estimated poses and the N second geometric features.

28. The apparatus according to any one of claims 18 to 27, wherein the apparatus further comprises:
a second obtaining unit, configured to obtain the first pose of the vehicle before the adjusting unit adjusts the first pose of the vehicle based on the N first geometric features to obtain the second pose of the vehicle.

29. The apparatus according to claim 28, wherein the second obtaining unit is specifically configured to:

determine an estimated pose of the vehicle at a current moment based on a second pose at a previous moment, wherein the estimated pose at the current moment is the first pose of the vehicle obtained by the positioning device, and the previous moment is a moment earlier than the current moment; or
determine a first position of the vehicle based on a positioning system, and determining a first attitude of the vehicle based on an inertial sensor, wherein the first pose comprises the first position and the first attitude.

30. The apparatus according to any one of claims 19 to 29, wherein the apparatus further comprises:
a matching unit, configured to search the geometric feature map for N second geometric features matching the N first geometric features.

31. The apparatus according to claim 30, wherein the matching unit is specifically configured to:
search a first region of the geometric feature map for the N second geometric features matching the N first geometric features, wherein the first region is a region determined based on the first pose, and the first region is not smaller than a scanning range of the point cloud collection apparatus of the vehicle.

32. The apparatus according to any one of claims 18 to 31, wherein the first obtaining unit is specifically configured to:

identify N objects in the first point cloud data; and
determine a first geometric feature of each of the N objects based on point cloud data of each of the N objects.

33. A positioning apparatus, comprising a processor and a memory, wherein the memory is configured to store a program, the processor executes the program stored in the memory, and when the program stored in the memory is executed, the method according to any one of claims 1 to 17 may be implemented.

34. A vehicle, comprising a point cloud collection apparatus, a processor, and a memory, wherein the processor is connected to the point cloud collection apparatus by using a bus, the point cloud collection apparatus is configured to collect point cloud data, the memory is configured to store a program, and the processor executes the program stored in the memory; and when the program stored in the memory is executed, the method according to any one of claims 1 to 17 may be implemented.

35. A computer-readable storage medium, wherein the computer storage medium stores a computer program, the computer program comprises a program instruction, and when the program instruction is executed by a processor, the method according to any one of claims 1 to 17 may be implemented.

City building

Traffic supporting pole, curb, tree trunk, and the like

Bridge deck

Tunnel

Underground parking lot

FIG. 1A

City building

Traffic supporting pole, curb, tree trunk, and the like

Bridge deck

Tunnel

Underground parking lot

FIG. 1B

System 10

Database 120

Point cloud data/Geometric feature

Data collection device 110

Point cloud data

Geometric feature

130

Point cloud data

140

150

Point cloud map server

Geometric feature map generation device

Map server

160

190

Positioning server

180

FIG. 2

Vehicle 100

**Marching system 102**
- Engine 118
- Transmission apparatus 122
- Energy source 119
- Wheel 121

**Sensing system 104**
- Global positioning system 122
- Inertial measurement unit 124
- 3D scan apparatus 126
- Laser radar 127
- Stereo camera 128

**Control system 106**
- Steering system 132
- Accelerator 134
- Braking unit 136
- Computer vision system 141
- Route control system 142
- Obstacle avoidance system 144

**Peripheral device 108**
- Wireless communications apparatus 146
- In-vehicle computer 148
- Microphone 151
- Speaker 152

**Computer system 112**
- Processor 113
- Memory 114
  - Instruction 115

User interface 116

Power supply 111

FIG. 3

S402. Obtain to-be-processed point cloud data

S404. Extract a geometric feature from the to-be-processed point cloud data

S4042. Identify at least one object in the to-be-processed point cloud data

S4044. Determine a geometric feature of a first object based on point cloud data of the first object, where the first object is any one of a plurality of identified objects

FIG. 4A

$V_{curb\_up}$

$V_{pavement}$  Vehicle motion direction

$V_{curb\_low}$

Laser beam i+3

Laser beam i+2

Laser beam i+1

Laser beam i

Laser beam i−1

$\Delta h$

▲ Irregular structure such as a green belt or a lawn

✦ Point with a sudden change in a height

⊛ Point on a pavement

FIG. 4B

FIG. 4C

FIG. 4D

FIG. 4E

EP 3 819 673 A1

Geometric feature of a first face of a traffic signpost

Geometric feature of a second face of the traffic signpost

Geometric feature of a pole of the traffic signpost

Ground

X

Y

Z=0.2

(4, 3)

Z=2

(4, 3)

Z=2.2

(4, 3)

Z=3.2

(4, 3)

FIG. 4F

EP 3 819 673 A1

Street lamp pole

Geometric feature of
the street lamp pole

Ground

EP 3 819 673 A1

X

Y

Z=1

(4, 3)

Z=3

(4, 3)

Z=5

(4, 3)

Z=5.2

(4, 3)

FIG. 4G

FIG. 4H

Normal vector of a first wall of a building

Normal vector of a second wall of the building

FIG. 4I

S502. Obtain second point cloud data from a point cloud map, where the second point cloud data may be point cloud data of a to-be-processed region of the point cloud map, or may be one or more frames of to-be-processed point cloud data on the point cloud map

S504. Extract a geometric feature from the second point cloud data, where all geometric features extracted from the second point cloud data on the point cloud map form a geometric feature map

FIG. 5

**Second geometric feature**

**First geometric feature**

## FIG. 6

| S72. Obtain first point cloud data collected by a vehicle by using a point cloud collection apparatus |
| --- |

| S74. Extract N first geometric features from the first point cloud data, where N is a positive integer |
| --- |

| S76. Adjust a first pose of the vehicle based on the N first geometric features to obtain a second pose of the vehicle, where precision of the second pose is higher than precision of the first pose |
| --- |

## FIG. 7

FIG. 8A

First region 803

Geometric
feature
First position
804

Vehicle driving
direction

Road

FIG. 8B

First position 806

First region 805

$(n+1)^{th}$ layer of road

$n^{th}$ layer of road

$(n-1)^{th}$ layer of road

FIG. 8C

S71. Obtain a first pose of a vehicle

S72. Obtain first point cloud data collected by the vehicle by using a point cloud collection apparatus

S74. Extract N first geometric features from the first point cloud data

S75. Search a geometric feature map for N second geometric features matching the N first geometric features, where a first geometric feature is in a one-to-one correspondence with a second geometric feature

S76. Adjust the first pose of the vehicle based on the N first geometric features to obtain a second pose of the vehicle, where precision of the second pose is higher than precision of the first pose

S761. A positioning device determines a transformation relationship between geometric features based on the N first geometric features and the N second geometric features on the geometric feature map

S762. Adjust the first pose of the vehicle based on the transformation relationship between geometric features to obtain the second pose

FIG. 9A

S911. Initialize a first transformation amount

S912. Transform N first geometric features by using the first transformation amount, to obtain N third geometric features

S913. For a first geometric feature $V_i$, calculate an error $C_i$ between a third geometric feature corresponding to the first geometric feature $V_i$ and a second geometric feature corresponding to the first geometric feature $V_i$, to obtain N errors, where i = 1, 2, ..., N

S914. Perform summation on the N errors to obtain a first error

S916. Adjust the first transformation amount based on the first error

S915

Determine whether a quantity of iterations or the first error meets an iteration condition

S917. An output first transformation amount is a first target transformation amount

S918. Transform a first pose by using the first target transformation amount, to obtain a second pose of a vehicle

FIG. 9B

S921. Initialize a second transformation amount

S922. Transform a plurality of second geometric features by using the second transformation amount, to obtain a plurality of fourth geometric features

S923. For a second geometric feature $U_i$, calculate an error $D_i$ between a fourth geometric feature corresponding to the second geometric feature $U_i$ and a first geometric feature corresponding to the second geometric feature $U_i$, to obtain N errors, where i = 1, 2, ..., N

S924. Perform summation on the N errors to obtain a second error

S926. Adjust the second transformation amount based on the second error

S915

Determine whether a quantity of iterations is equal to a preset quantity of times or whether the second error converges

S927. An output second transformation amount is a second target transformation amount

S928. Transform a first pose by using the second target transformation amount, to obtain a second pose of a vehicle

FIG. 9C

S71. Obtain a first pose of a vehicle

S72. Obtain first point cloud data collected by the vehicle by using a point cloud collection apparatus

S74. Extract N first geometric features from the first point cloud data

S75. Search a geometric feature map for N second geometric features matching the N first geometric features, where a first geometric feature is in a one-to-one correspondence with a second geometric feature

S76. Adjust the first pose of the vehicle based on the N first geometric features to obtain a second pose of the vehicle, where precision of the second pose is higher than precision of the first pose

S763. Determine a predicted pose of the vehicle at a current moment based on a second pose at a previous moment and a control parameter of the vehicle at the previous moment, where the previous moment is a moment earlier than the current moment

S764. Update the predicted pose of the vehicle by using an error between an observed value of a second parameter and a predicted value of the second parameter, to obtain the second pose of the vehicle, where the observed value of the second parameter is determined based on a first geometric feature observed by the vehicle in the first pose, and the predicted value of the second parameter is determined based on the predicted pose and a second geometric feature on the geometric feature map

FIG. 10A

S106. Enter, into a kinematics equation of a vehicle, a second pose of the vehicle at a previous moment (k–1) and control input of the vehicle at the previous moment, to predict a predicted pose of the vehicle at a current moment (k)

↓

S108. Determine a predicted value of a second parameter based on the predicted pose and N second geometric features

↓

S110. Determine an observed value of the second parameter based on a first pose and N first geometric features

↓

S112. Determine an error between the observed value of the second parameter and the predicted value of the second parameter based on the observed value of the second parameter and the predicted value of the second parameter

↓

S114. Update the predicted pose at the current moment based on the error between the observed value of the second parameter and the predicted value of the second parameter, to obtain a second pose of the vehicle at the current moment

FIG. 10B

FIG. 10C

FIG. 10D

S71. Obtain a first pose of a vehicle

S72. Obtain first point cloud data collected by the vehicle by using a point cloud collection apparatus

S74. Extract N first geometric features from the first point cloud data

S75. Search a geometric feature map for N second geometric features matching the N first geometric features, where a first geometric feature is in a one-to-one correspondence with a second geometric feature

S76. Adjust the first pose of the vehicle based on the N first geometric features to obtain a second pose of the vehicle, where precision of the second pose is higher than precision of the first pose

S705. Estimate a pose of the vehicle based on the first pose, to obtain a plurality of groups of estimated poses

S706. Determine scores of the plurality of groups of estimated poses based on the N first geometric features and the N second geometric features on the geometric feature map

S707. Determine the second pose of the vehicle based on a score of each of the plurality of groups of estimated poses, where a score of a first group of estimated poses is used to indicate a degree of proximity between the first group of estimated poses and the second pose, and the first group of estimated poses is any estimated pose in the plurality of groups of estimated poses

FIG. 11A

S11011. Perform priori estimation on a second pose S2 of a vehicle based on a first pose S1, to obtain D groups of estimated poses, where D is a positive integer greater than 1

↓

S11012. Determine, based on each group of estimated poses and N second geometric features, an estimated value of a first parameter corresponding to each group of estimated poses

↓

S11013. Determine an observed value of the first parameter based on the first pose and N first geometric features

↓

S11014. Determine a first score of each group of estimated poses based on an error between the estimated value of the first parameter corresponding to each group of estimated poses and the observed value of the first parameter

↓

S11015. Obtain the second pose based on the D groups of estimated poses and the first score of each of the D groups of estimated poses

FIG. 11B

S11021. Perform priori estimation on a second pose S2 of a vehicle based on a first pose S1, to obtain D groups of estimated poses, where D is a positive integer greater than 1

↓

S11022. Transform each of N second geometric features by using a transformation relationship between each group of estimated poses and the first pose, to obtain N fifth geometric features corresponding to each group of estimated poses, where the N second geometric features are in a one-to-one correspondence with the N fifth geometric features

↓

S11023. Determine a second score of each group of estimated poses based on an error between the N fifth geometric features corresponding to each group of estimated poses and N first geometric features

↓

S11024. Obtain the second pose based on the D groups of estimated poses and the second score of each of the D groups of estimated poses

FIG. 11C

S11031. Perform priori estimation on a second pose S2 of a vehicle based on a first pose S1, to obtain D groups of estimated poses, where D is a positive integer greater than 1

S11032. Transform each of N first geometric features by using a transformation relationship between each group of estimated poses and the first pose, to obtain N sixth geometric features corresponding to each group of estimated poses, where the N first geometric features are in a one-to-one correspondence with the N sixth geometric features

S11033. Determine a third score of each group of estimated poses based on an error between the N sixth geometric features corresponding to each group of estimated poses and N second geometric features

S10134. Obtain the second pose based on the D groups of estimated poses and the third score of each of the D groups of estimated poses

FIG. 11D

Positioning apparatus 1200

| First obtaining unit 1201 | Feature extraction unit 1202 | |
|---|---|---|
| Second obtaining unit 1204 | Matching unit 1205 | Adjustment unit 1203 |

FIG. 12

Positioning apparatus 1300

Memory 1301

Processor 1302

Bus 1304

Communications interface 1303

Point cloud collection apparatus 1305

FIG. 13

Geometric feature extraction apparatus 1400

Obtaining unit 1401

Extraction unit 1402

FIG. 14

Geometric feature extraction apparatus 1500

| Memory 1501 | Processor 1502 |

Bus 1504

| Communications interface 1503 | Point cloud collection apparatus 1505 |

FIG. 15

## INTERNATIONAL SEARCH REPORT

| International application No. |
| --- |
| **PCT/CN2019/105810** |

| A. | CLASSIFICATION OF SUBJECT MATTER |
| --- | --- |
| | G01S 19/40(2010.01)i |

According to International Patent Classification (IPC) or to both national classification and IPC

| B. | FIELDS SEARCHED |
| --- | --- |

Minimum documentation searched (classification system followed by classification symbols)

G01S; G06T

Documentation searched other than minimum documentation to the extent that such documents are included in the fields searched

Electronic data base consulted during the international search (name of data base and, where practicable, search terms used)

EPODOC, WPI, CNPAT, CNKI: 华为, 袁维平, 吴祖光, 苏斌, 自动驾驶, 无人驾驶, 无人车, 定位, 车, 点云, 激光雷达, 摄像头, 采集, 收集, 选取, 获取, 提取, 几何, 调整, 配准, 位姿, unman+, autonomous+, automatic+, driv+, vehicle, locat+, point, cloud, collect+, laser, camera, geometr+, adjust+, registrat+, pose, position, attitude

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 109887028 A (TIANJIN UNIVERSITY) 14 June 2019 (2019-06-14) description paragraphs 51-85, figures 1-4 | 1-35 |
| Y | CN 107430183 A (HERE GLOBAL BV) 01 December 2017 (2017-12-01) description paragraphs 8-144, figures 1-12 | 1-35 |
| A | CN 103900583 A (LENOVO (BEIJING) CO., LTD.) 02 July 2014 (2014-07-02) entire document | 1-35 |
| A | CN 108732603 A (BAIDU ONLINE NETWORK TECHNOLOGY (BEIJING) CO., LTD.) 02 November 2018 (2018-11-02) entire document | 1-35 |
| A | CN 109901202 A (CHENGDU XIDE RUIGUANG TECHNOLOGY CO., LTD.) 18 June 2019 (2019-06-18) entire document | 1-35 |
| A | CN 110095752 A (BAIDU ONLINE NETWORK TECHNOLOGY (BEIJING) CO., LTD.) 06 August 2019 (2019-08-06) entire document | 1-35 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 May 2020** | **26 May 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**EP 3 819 673 A1**

## INTERNATIONAL SEARCH REPORT

| International application No. |
| --- |
| **PCT/CN2019/105810** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 109059906 A (SHANGHAI WESTWELL INFORMATION TECHNOLOGY CO., LTD.) 21 December 2018 (2018-12-21)<br>      entire document | 1-35 |
| A | US 2019079193 A1 (VELODYNE LIDAR, INC.) 14 March 2019 (2019-03-14)<br>      entire document | 1-35 |

Form PCT/ISA/210 (second sheet) (January 2015)

75

**INTERNATIONAL SEARCH REPORT**
Information on patent family members

International application No.

**PCT/CN2019/105810**

| Patent document cited in search report | | | Publication date (day/month/year) | Patent family member(s) | | | Publication date (day/month/year) |
|---|---|---|---|---|---|---|---|
| CN | 109887028 | A | 14 June 2019 | None | | | |
| CN | 107430183 | A | 01 December 2017 | AU | 2019201834 | A1 | 04 April 2019 |
| | | | | US | 10145956 | B2 | 04 December 2018 |
| | | | | EP | 3237925 | A1 | 01 November 2017 |
| | | | | AU | 2015370579 | A1 | 13 July 2017 |
| | | | | US | 2016189385 | A1 | 30 June 2016 |
| | | | | KR | 20170117040 | A | 20 October 2017 |
| | | | | US | 9519061 | B2 | 13 December 2016 |
| | | | | US | 2017055116 | A1 | 23 February 2017 |
| | | | | BR | 112017013687 | A2 | 06 March 2018 |
| | | | | JP | 2018504650 | A | 15 February 2018 |
| | | | | WO | 2016103028 | A1 | 30 June 2016 |
| CN | 103900583 | A | 02 July 2014 | CN | 103900583 | B | 27 February 2018 |
| CN | 108732603 | A | 02 November 2018 | US | 2018299273 | A1 | 18 October 2018 |
| CN | 109901202 | A | 18 June 2019 | None | | | |
| CN | 110095752 | A | 06 August 2019 | None | | | |
| CN | 109059906 | A | 21 December 2018 | None | | | |
| US | 2019079193 | A1 | 14 March 2019 | WO | 2019055691 | A1 | 21 March 2019 |

Form PCT/ISA/210 (patent family annex) (January 2015)